# EUROPÄISCHE PATENTSCHRIFT

(11) **EP 3 507 943 B1**
(45) Veröffentlichungstag und Bekanntmachung des Hinweises auf die Patenterteilung: **20.01.2021**
(21) Anmeldenummer: 17777478.3
(22) Anmeldetag: 31.08.2017
(51) Int. Cl.: H04L 12/24, G06Q 10/10, H04L 12/58, G06Q 30/02

(54) **VERFAHREN ZUR KOMMUNIKATION IN EINEM KOMMUNIKATIONSNETZWERK**
METHOD FOR COMMUNICATION IN A COMMUNICATION NETWORK
PROCÉDÉ DE COMMUNICATION DANS UN RÉSEAU DE COMMUNICATION

(30) Priorität: 01.09.2016 DE 102016010520
(43) Veröffentlichungstag der Anmeldung: 10.07.2019
(73) Patentinhaber: Artegic AG, 53177 Bonn (DE)
(72) Erfinder: BORRMANN, Eric, 50931 Köln (DE); SAYN, Jörg, 53343 Wachtberg (DE)
(74) Vertreter: Borrmann, Eric
(86) Internationale Anmeldenummer: PCT/DE2017/100735
(87) Internationale Veröffentlichungsnummer: WO 2018/041305

(56) Entgegenhaltungen:
- DE-B4-102010 012 847
- US-A1- 2006 075 037
- US-A1- 2016 140 650
- US-B1- 6 779 022

## Beschreibung

Die Erfindung betrifft ein Verfahren zur Kommunikation in einem Kommunikationsnetzwerk mit zumindest einem Sender, zumindest einem Empfänger, wobei von dem Sender zumindest eine Nachricht zu dem Empfänger gesendet wird und eine Relevanz der Nachricht für den Empfänger ermittelt wird.

Ein derartiges Verfahren ist aus der DE 10 2010 012 847 B4 bekannt. Das in der DE 10 2010 012 847 B4 beschriebenen Verfahren sieht vor, dass eine Relevanz von Nachrichten für den Empfänger in Form einer Dringlichkeit nach dem Empfangen der Nachrichten von einer oder mehreren Informationsquellen mittels eines Filtermoduls, das mit einem Dringlichkeitsanalysemodul und optional mit einem Künstliche-Intelligenz-Modul zusammenarbeitet, bestimmt wird. Das in der DE 10 2010 012 847 B4 beschriebene Verfahren sieht weiterhin vor, dass eine große Menge an Nachrichten zu dem Empfänger gelangen und bei dem Empfänger mittels eines Content-Aggregators durchsucht werden. Wird das in der DE 10 2010 012 847 B4 beschriebene Verfahren für eine große Anzahl von Empfängern in dem Kommunikationsnetzwerk angewandt, so ergibt sich ein sehr hoher Datenverkehr in dem Kommunikationsnetzwerk zwischen dem Sender und den Empfängern. Ein solch hoher Datenverkehr kann zu einem Ausfall des Kommunikationsnetzwerkes führen.

Aufgabe der vorliegenden Erfindung ist es, ein Verfahren zur Kommunikation in einem Kommunikationsnetzwerk bereitzustellen, welches einen Datenverkehr zwischen einem Sender und mehreren Empfängern reduziert.

Diese Aufgabe wird erfindungsgemäß durch ein Verfahren mit den Merkmalen des Patentanspruchs 1, ein nichtflüchtiges computerlesbares Informationsspeicherungsmedium nach Anspruch 13, ein Kommunikationsnetzwerk nach Anspruch 14 und eine Sendeinfrastruktur nach Anspruch 15 gelöst. Vorteilhafte Ausgestaltungen mit zweckmäßigen Weiterbildungen der Erfindung ergeben sich aus den übrigen Patentansprüchen, der Beschreibung und den Figuren.

Um ein Verfahren zur Kommunikation in einem Kommunikationsnetzwerk bereitzustellen, welches einen Datenverkehr zwischen einem Sender und mehreren Empfängern reduziert, wird ein Verfahren zur Kommunikation in einem Kommunikationsnetzwerk mit zumindest einem Sender und zumindest einem Empfänger vorgeschlagen, wobei von dem Sender zumindest eine Nachricht zu dem Empfänger gesendet wird, eine Relevanz der Nachricht für den Empfänger ermittelt wird und dass das Kommunikationsnetzwerk zumindest einen ersten Testempfänger, einen ersten Umfrageempfänger, einen zweiten Umfrageempfänger, einen Finalempfänger, einen Trackingserver, eine Empfängerdatenbank, eine Umfragedatenbank, ein Bewertungsmodul, ein Auswahlmodul und einen Zentralserver aufweist und eine Relevanz einer Finalnachricht für den Finalempfänger vor einem Absenden der Finalnachricht ermittelt wird, mit den folgenden Schritten. In einem ersten Schritt wird mittels des Zentralservers eine erste Testnachricht, eine zweite Testnachricht, eine dritte Testnachricht und eine vierte Testnachricht erzeugt.

Die Testnachrichten werden derart erzeugt, dass jede Testnachricht zumindest ein erstes Nachrichtenmerkmal aufweist und das erste Nachrichtenmerkmal der ersten Testnachricht und das erste Nachrichtenmerkmal der zweiten Testnachricht mittels einer Veränderung eines jeweils korrespondierenden Wertes eines ersten Parameters und das erste Nachrichtenmerkmal der dritten Testnachricht und das erste Nachrichtenmerkmal der vierten Testnachricht mittels einer Veränderung eines jeweils korrespondierenden Wertes eines zweiten Parameters veränderbar sind.

Weiterhin sind die jeweiligen korrespondierenden Werte des ersten Parameters verschieden und die jeweiligen korrespondierenden Werte des zweiten Parameters verschieden, d.h. der Wert des ersten Parameters des ersten Nachrichtenmerkmals der ersten Testnachricht ist von dem Wert des ersten Parameters des ersten Nachrichtenmerkmals der zweiten Testnachricht und der Wert des zweiten Parameters des ersten Nachrichtenmerkmals der dritten Testnachricht ist von dem Wert des zweiten Parameters des ersten Nachrichtenmerkmals der vierten Testnachricht verschieden.

In einem zweiten Schritt werden mittels des Senders die erste, die zweite, die dritte und die vierte Testnachricht an den ersten Testempfänger, einen zweiten Testempfänger, einen dritten Testempfänger und/oder einen vierten Testempfänger gesendet. Dabei können sowohl alle Testnachrichten an einen einzigen Testempfänger, nur an zwei, an drei oder an alle Testempfänger gesendet werden. Es ist auch möglich, einen Teil der Testnachrichten, zum Beispiel die erste, die zweite und/oder die dritte Testnachricht an einen den ersten Testempfänger zu senden und den restlichen Teil der Testnachrichten an die übrigen Testempfänger zu senden, d.h. an den zweiten, dritten und/oder vierten Testempfänger. In einer weiteren Ausgestaltung des Verfahrens können die erste, die zweite, die dritte und/oder die vierte Testnachricht doppelt oder mehrfach an einen, an zwei oder an mehrere der Testempfänger gesendet werden.

In einem dritten Schritt des vorgeschlagenen Verfahrens wird ein erstes Reaktionsverhalten auf die Testnachrichten mittels des Trackingservers erfasst. In einem vierten Schritt wird mittels des Bewertungsmoduls das erste Reaktionsverhalten bewertet. In einem fünften Schritt wird ein Einflusswert des ersten Parameters, welcher den Einfluss des ersten Parameters auf das erste Reaktionsverhalten auf die Testnachrichten erfasst, und ein Einflusswert des zweiten Parameters, welcher den Einfluss des zweiten Parameters auf das erste Reaktionsverhalten auf die Testnachrichten erfasst, vorzugsweise mittels des Bewertungsmoduls, bestimmt.

In einem sechsten Schritt wird der Einflusswert des ersten Parameters mit dem Einflusswert des zweiten Parameters, vorzugsweise mittels des Auswahlmoduls, verglichen und ein Auswahlparameter mittels des Auswahlmoduls bestimmt, wobei als Auswahlparameter derjenige von den beiden Parametern, dem ersten Parameter und dem zweiten Parameter, bestimmt wird, welcher den größeren Einflusswert hat.

In einem siebten Schritt wird zumindest eine erste Umfragenachricht, eine zweite Umfragenachricht und bevorzugt eine dritte Umfragenachricht mittels des Zentralservers erzeugt, wobei die Umfragenachrichten jeweils zumindest ein erstes Auswahlnachrichtenmerkmal aufweisen, wobei das jeweilige erste Auswahlnachrichtenmerkmal mittels einer Veränderung eines jeweiligen korrespondierenden Wertes des Auswahlparameters veränderbar ist und die jeweiligen korrespondierenden Werte des Auswahlparameters verschieden sind.

In einem achten Schritt werden die erste Umfragenachricht, die zweite Umfragenachricht und bevorzugt die dritte Umfragenachricht mittels des Senders an zumindest den ersten Umfrageempfänger, den zweiten Umfrageempfänger und/oder den dritten Umfrageempfänger gesendet, wobei die Umfrageempfänger anhand von zumindest eines ersten Empfängermerkmals unterscheidbar sind.

In einem neunten Schritt wird ein zweites Reaktionsverhalten auf die Umfragenachrichten mittels des Trackingservers erfasst. In einem zehnten Schritt wird das zweite Reaktionsverhalten mittels des Bewertungsmoduls bewertet.

In einem elften Schritt wird ein jeweiliger Umfragedatensatz für zumindest zwei Umfrageempfänger, bevorzugt mittels des Zentralservers, erstellt, wobei der jeweilige Umfragedatensatz einen Wert des ersten Empfängermerkmals des jeweiligen Umfrageempfängers, eine Bewertung eines entsprechenden einzelnen zweiten Reaktionsverhaltens des jeweiligen Umfrageempfängers und einen entsprechenden Wert des Auswahlparameters der von dem jeweiligen Umfrageempfänger empfangenen Umfragenachricht aufweist.

In einem zwölften Schritt werden mindestens zwei der Umfragedatensätze in der Umfragedatenbank auf dem Datenbankserver abgespeichert, wobei mittels der in der Umfragedatenbank gespeicherten Umfragedatensätze eine Zuordnung der Werte des ersten Empfängermerkmals zu den Werten des Auswahlparameters und den Bewertungen des einzelnen zweiten Reaktionsverhaltens bereitgestellt wird.

In einem dreizehnten Schritt wird die Finalnachricht mittels des Senders an den Finalempfänger gesendet, wobei ein Wert des ersten Empfängermerkmals des Finalempfängers aus der Empfängerdatenbank ausgelesen wird, die Finalnachricht zumindest ein erstes Finalnachrichtenmerkmal aufweist, das erste Finalnachrichtenmerkmal mittels einer Veränderung eines korrespondierenden Wertes des Auswahlparameters veränderbar ist, der Wert des Auswahlparameters an den ausgelesenen Wert des ersten Empfängermerkmals des Finalempfängers mittels der durch die Umfragedatenbank bereitgestellte Zuordnung angepasst wird und eine Relevanz der Finalnachricht für den Finalempfänger vor einem Absenden der Finalnachricht in Form eines einzelnen abgeschätzten Reaktionswertes des Finalempfängers ermittelt wird.

Die Schritte eins bis dreizehn können in der oben beschriebenen Reihenfolge ausgeführt werden. Möglich ist auch, dass eine andere Reihenfolge der Schritte ausgeführt wird. Die oben vorgestellte Reihenfolge der Schritte eins bis dreizehn ist lediglich eine besonders vorteilhafte Ausgestaltung des vorgeschlagenen Verfahrens. Auch ist es möglich, einige der Schritte wiederholt auszuführen, insbesondere das Absenden der Finalnachricht. Beispielsweise können mehrere Finalnachrichten an mehrere Finalempfänger gesendet werden, d.h. der Schritt 13 kann mehrmals, beispielsweise tausendfach ausgeführt werden.

Das vorgeschlagene Verfahren kann in drei Phasen eingeteilt werden. In der ersten Phase werden die Einflüsse von zumindest zwei Parametern auf das erste Reaktionsverhalten der Testempfänger bestimmt. In der zweiten Phase wird mittels der Erstellung der Umfragedatenbank eine Information bereitgestellt, welche es ermöglicht die Finalnachricht, insbesondere den Wert des Auswahlparameters, welcher den Inhalt der Finalnachricht beeinflusst, an den ausgelesenen Wert des ersten Empfängermerkmals anzupassen.

In einer dritten Phase erfolgt eine Anpassung des Wertes des Auswahlparameters an den ausgelesenen Wert des ersten Empfängermerkmals. Diese Anpassung erfolgt vorzugsweise derart, dass der abgeschätzte Reaktionswert des Finalempfängers möglichst hoch ist. Durch diese Anpassung kann die Wahrscheinlichkeit, dass der Finalempfänger eine für ihn unwichtige Finalnachricht erhält reduziert werden. Somit ist es möglich, den Finalempfänger vor Spamnachrichten zu schützen. Im Vergleich zu einem Verfahren, bei welchem nach dem Empfangen von Nachrichten bei dem Finalempfänger Nachrichten auf eine Relevanz für den Finalempfänger geprüft werden, kann das vorgeschlagene Verfahren eine Anzahl der bei dem Finalempfänger ankommenden unwichtigen Nachrichten verringern und somit einen Datenverkehr zwischen dem Sender und dem Finalempfänger reduzieren.

Insbesondere kann vorgesehen sein, dass die Finalnachricht abgeschickt wird, falls der abgeschätzte Reaktionswert des Finalempfängers einen vorgegebenen Zielreaktionswert überschreitet und/oder gleich dem vorgegebenen Zielreaktionswert ist. Falls der abgeschätzte Reaktionswert des Finalempfängers den vorgegebenen Zielreaktionswert unterschreitet wird die Finalnachricht vorzugsweise nicht abgeschickt. Dadurch kann erreicht werden, dass verhältnismäßig unwichtige Finalnachrichten den Finalempfänger nicht erreichen. Dies verringert zum einen den Datenverkehr zwischen dem Sender und mehreren Empfängern, d.h. Finalempfängern. Zum anderen kann der Finalempfänger vor unwichtigen Nachrichten, insbesondere Spamnachrichten, geschützt werden.

Insbesondere werden aus einer Menge von möglichen Finalempfängern, welche bevorzugt alle in der Empfängerdatenbank enthaltenen Empfänger sein können, nur diejenigen als Finalempfänger bestimmt, für welche ein einzeln abgeschätzter Reaktionswert größer oder gleich dem Zielreaktionswert ist.

Die Anzahl von Testempfängern zu Umfrageempfängern und Umfrageempfängern zu möglichen Finalempfängern verhält sich beispielsweise wie 1 zu 10 beziehungsweise 1 zu 10. Andere Verhältnisse können 1 zu 100 beziehungsweise 1 zu 100, 1 zu 100 beziehungsweise 1 zu 1000, 1 zu 1000 beziehungsweise 1 zu 10000 sein. Insbesondere ermöglicht das deutlich über eins liegendes Verhältnis von der Anzahl der möglichen Finalempfänger zu der Anzahl der Finalempfänger eine Reduktion des Datenverkehrs zwischen dem Sender und den möglichen Finalempfängern.

Die Anzahl von Testnachrichten zu Umfragenachrichten und Umfragenachrichten zu Finalnachrichten verhält sich beispielsweise wie 1 zu 10 beziehungsweise 1 zu 10. Andere Verhältnisse können 1 zu 100 beziehungsweise 1 zu 100, 1 zu 100 beziehungsweise 1 zu 1000, 1 zu 1000 beziehungsweise 1 zu 10000 sein. Insbesondere ermöglicht ein hohes Verhältnis von Finalnachrichten zu der Summe aus den Testnachrichten und den Umfragenachrichten eine Reduktion des Datenverkehrs zwischen dem Sender und den möglichen Finalempfängern. Dieses Verhältnis kann 10 zu 1, 100 zu 1, 1000 zu, bis zu einer Million zu eins betragen.

Der Ausdruck "Modul", wie er hierin benutzt wird, beschreibt eine beliebige bekannte oder später entwickelte Hardware, Software, Firmware, Künstliche Intelligenz, Fuzzy-Logik oder Kombination aus Hardware und Software, die in der Lage ist, die mit dem jeweiligen "Modul" assoziierte Funktionalität auszuführen.

Im Sinne der Erfindung ist eine Finalnachricht eine Nachricht, welche zumindest nach einem ersten Versenden der Testnachrichten und einem ersten Versenden der Umfragenachrichten versendet wird. Genauso ist vorgesehen, dass der Finalempfänger die Finalnachricht empfängt, nachdem die Testempfänger die ersten Testnachrichten und die Umfrageempfänger die ersten Umfragenachrichten empfangen haben.

Eine erste weitere Ausgestaltung des Verfahrens kann vorsehen, dass nach einem erstmaligen Absenden der Finalnachricht weitere Umfragenachrichten an die Umfrageempfänger, welche bereits Umfragenachrichten erhalten haben, oder an weitere Umfrageempfänger gesendet werden, wobei beispielsweise der Finalempfänger ein Umfrageempfänger sein kann. Dabei kann vorgesehen sein, dass zwischen dem Absenden der Finalnachricht und den weiteren Umfragenachrichten keine weiteren Testnachrichten versendet werden. Die erste weitere Ausgestaltung des Verfahrens kann den Vorteil haben, dass die durch die Umfragedatenbank bereitgestellte Zuordnung verbessert wird, indem die Anzahl der Umfragedatensätze erhöht wird und damit ein sichereres Abschätzen der Relevanz der Finalnachricht für den Finalempfänger ermöglicht werden kann.

Eine zweite weitere Ausgestaltung des Verfahrens kann vorsehen, dass nach einem erstmaligen Absenden der Finalnachricht weitere Testnachrichten an die Testempfänger, welche bereits Testnachrichten erhalten haben, oder an weitere Testempfänger gesendet werden, wobei beispielsweise der Finalempfänger ein Testempfänger sein kann. Dabei kann vorgesehen sein, dass zwischen dem Absenden der Finalnachricht und den weiteren Testnachrichten keine weiteren Umfragenachrichten versendet werden. Die zweite weitere Ausgestaltung des Verfahrens kann den Vorteil haben, dass der Einfluss des ersten und zweiten Parameters erneut bestimmt werden kann. Dies ermöglicht bei einer wiederholten Anwendung des Verfahrens, den Auswahlparameter neu auszuwählen.

Besonders vorteilhaft ist der Sender als Versandserver ausgebildet. Mittels des Versandservers werden die Nachrichten, d.h. die Testnachrichten, die Umfragenachrichten und die Finalnachricht und bevorzugt mehrere Finalnachrichten, an die entsprechenden Empfänger, d.h. die Testempfänger, die Umfrageempfänger und den Finalempfänger, bevorzugt an mehrere Finalempfänger, versendet. Das Kommunikationsnetzwerk weist bevorzugt eine Senderinfrastruktur und eine Empfängerinfrastruktur auf, wobei die Senderinfrastruktur mit der Empfängerinfrastruktur über eine Vermittlungsvorrichtung verbunden ist.

Die Senderinfrastruktur umfasst den Sender, den Trackingserver, den Zentralserver und den Datenbankserver. Die Empfängerinfrastruktur umfasst zumindest ein Endgerät, vorzugsweise einen Computer, noch bevorzugter ein Benutzergerät, welches einem Benutzer zugeordnet ist. Eine besondere Ausgestaltung sieht vor, dass mit dem Endgerät die mittels des Versandservers ausgesendeten Nachrichten durch einen Benutzer des Endgerätes empfangen werden können. Das Endgerät umfasst Die Sendeinfrastruktur kann beispielsweise in einem Gebäude angeordnet und die Empfängerinfrastruktur ein einem weitern Gebäude angeordnet sein. Die Vermittlungsvorrichtung ist vorzugsweise das Internet. Eine besondere Ausführungsform sieht vor, dass die Sendeinfrastruktur und die Empfängerinfrastruktur in demselben Gebäude angeordnet sind und die Vermittlungsvorrichtung als lokales Netzwerk ausgebildet ist. Insbesondere ist die Empfängerinfrastruktur von der Senderinfrastruktur räumlich getrennt, beispielsweise mindestens einen Kilometer voneinander getrennt.

Die Empfänger, d.h. die Testempfänger, die Umfrageempfänger und der Finalempfänger beziehungsweise die Finalempfänger können jeweils automatisierte Maschinen, wie zum Beispiel ein Computer, auf dem eine Software betrieben wird, mittels welcher der jeweilige Empfänger die empfangenen Test-, Umfrage-, und/oder Finalnachrichten automatisch beantwortet, oder ein Benutzergerät mit einer Benutzer-Schnittstelle, insbesondere einem Bildschirm, einem Touchpad und/oder einer Tastatur, wie zum Beispiel ein Personalcomputer, ein Mobiltelefon, ein Smartphone oder ein Laptop sein. In einer vorteilhaften Ausführungsform empfangen die Empfänger die Test-, Umfrage-, und/oder Finalnachrichten per Emailverkehr, SMS und/oder Whatsapp-Technologie.

In einer sehr speziellen Ausgestaltung des Verfahrens sind die Empfänger, d.h. die Testempfänger, die Umfrageempfänger und der Finalempfänger als Einheiten, bevorzugt Hardwareeinheiten, eines Computers ausgebildet. In dieser Ausgestaltung ist die Vermittlungsvorrichtung bevorzugt in Form eines Bussystems ausgebildet. Die Einheiten können automatisch auf Test-, Umfrage-, und/oder Finalnachrichten reagieren. Bevorzugt sind die Einheiten selbstlernende Systeme, über dessen Fähigkeiten der Sender nicht alle Informationen zu jedem Zeitpunkt hat. Aus diesem Grund ist es sinnvoll vor einem Absenden an einen möglichen Finalempfänger seinen einzelnen Reaktionswert auf die Finalnachricht abzuschätzen. Wenn die Finalnachrichten bestimmte Aufgaben, zum Beispiel Befehle, beinhalten, welche durchzuführen sind, kann durch das Abschätzen des Reaktionswert abgeschätzt werden, ob diese Aufgaben von dem entsprechenden Finalempfänger bewältigt werden können.

Im Gegensatz zu konventionellen Kommunikationsverfahren in einem Computer, bei welchem die Fähigkeiten der einzelnen Einheiten des Computers sich nicht verändern oder vollständig bekannt sind, kann das vorgeschlagene Verfahren in dieser speziellen Ausgestaltung eine Kommunikation von dem Sender zu dem Finalempfänger ermöglichen, auch wenn die Fähigkeiten der einzelnen Einheiten nicht vollständig bekannt sind, wie zum Beispiel bei selbstlernenden Einheiten.

Eine besondere Ausgestaltung sieht vor, dass die Testempfänger, die Umfrageempfänger und/oder der Finalempfänger als jeweils einem Benutzer zugeordnete Benutzergeräte ausgebildet sind und das erste Empfängermerkmal als ein Benutzermerkmal ausgebildet ist. Besonders vorteilhaft ist das Benutzermerkmal ein auf den Benutzer bezogenes Merkmal wie zum Beispiel ein Alter, eine Größe, ein Geschlecht oder ein Verhaltensmerkmal des Benutzers. Das Verhaltensmerkmal kann eine tägliche Dauer einer Benutzung des Empfängers, eine Benutzung eines bestimmten Mediums, beispielsweise Email, SMS und/oder Whatsapp, bei einem Absenden einer Antwort oder bei einem sonstigen Reagieren auf eine Test-, Umfrage-, oder Finalnachricht sein. Die Ausgestaltung des Verfahrens mit dem ersten Empfängermerkmal als ein Benutzermerkmal ermöglicht, dass der Benutzer eine geringe Anzahl an für ihn irrelevanten Nachrichten erhält und somit dem Benutzer eine effizientere Kommunikation ermöglicht wird.

Eine Nachricht, d.h. eine Test-, Umfrage-, oder Finalnachricht, kann eine Information beliebiger Form sein, welche vom Sender zu einem der Empfänger, d.h. einem Test-, Umfrage-, oder Finalempfänger gesendet wird. Die Nachricht kann eine Email, eine SMS, eine Whatsapp-Nachricht, Pushnachricht oder Ähnliches sein. Die Nachricht kann eine Information sein, welche von dem Sender zu einem der Empfänger gesendet wird, und auf einem Bildschirm, Touchscreen oder Display angezeigt wird.

Die Nachricht kann in einer besonderen Ausgestaltung als ein Befehl in einer Programmiersprache ausgebildet sein. Eine besondere Ausführungsform sieht vor, dass die Empfänger als Computer von Automatisierungsmaschinen eines Maschinenparks ausgebildet sind und die Nachrichten Aufträge, beispielsweise Fertigungsaufträge, für die jeweiligen Automatisierungsmaschinen, beispielsweise Werkzeugmaschinen, sind. Das vorgeschlagene Verfahren kann in dieser Ausführungsform ermöglichen, dass eine Relevanz eines Auftrages vor dem Absenden des Auftrages abgeschätzt wird und nur zu solchen Automatisierungsmaschinen ein Auftrag gesendet wird, für welche eine vergleichsweise hohe Relevanz des jeweiligen Auftrages abgeschätzt wurde. Diese Art von Verfahren eignet sich vor allem für Maschinenparks bzw. Automatisierungsmaschinen, deren Abläufe durch externe sich zeitlich ändernde Faktoren bestimmt werden, beispielsweise Bestellungseingänge, Witterungsbedingungen, Energie- oder Rohstoffpreise und/oder extern bestimmte Materialeingangsströme. Das erste Empfängermerkmal kann in dieser Ausgestaltung des Verfahrens eine Menge an freien Kapazitäten, wie zum Beispiel Arbeitskapazitäten, Raumkapazitäten, Materialkapazitäten, sein.

Im Rahmen der Erfindung wird die Relevanz der Finalnachricht für den Finalempfänger in Form des einzelnen abgeschätzten Reaktionswertes des Finalempfängers ermittelt. Beispielsweise ist je nach Dringlichkeit oder Wichtigkeit der Finalnachricht die Finalnachricht mehr oder weniger relevant für den Finalempfänger. In Abhängigkeit der Relevanz reagiert der Finalempfänger auf die Finalnachricht, d.h. der Finalempfänger kann beispielsweise die Finalnachricht beantworten oder ignorieren und/oder Aktionen ausführen, welche im Zusammenhang mit der Finalnachricht stehen, zum Beispiel ein Ausführen eines Links in der Finalnachricht.

Das einzelne Reaktionsverhalten des Finalempfängers wird als einzeln abgeschätzter Reaktionswert ermittelt. Die Relevanz der Finalnachricht für den Finalempfänger steht in einem unmittelbaren Zusammenhang zu dem abgeschätzten Reaktionswert, d.h. bei einer vergleichsweise höheren Relevanz liegt ein vergleichsweise höherer einzelner abgeschätzter Reaktionswert und bei einer vergleichsweise niedrigeren Relevanz ein vergleichsweise niedrigerer einzelner abgeschätzter Reaktionswert vor. Somit kann die Relevanz der Finalnachricht für den Finalempfänger in Form eines einzelnen abgeschätzten Reaktionswertes ermittelt werden. Beispielsweise kann die Relevanz der Finalnachricht für den Finalempfänger durch Multiplikation, beispielsweise mit 1 oder einer anderen Gewichtung, mit dem einzelnen abgeschätzten Reaktionswert errechnet werden. Die Gewichtung kann in Abhängigkeit eines Wertes des ersten Empfängermerkmals variieren. Insbesondere kann über die Ermittlung einer Veränderung des einzeln abgeschätzten Reaktionswertes eine Veränderung der Relevanz bestimmt werden.

Das jeweilige erste Nachrichtenmerkmal der Testnachrichten, das jeweilige erste Auswahlnachrichtenmerkmal der Umfragenachrichten und das Finalnachrichtenmerkmal der Finalnachricht kann ein Inhaltselement sein. Das Inhaltselement kann als ein Textelement, wie zum Beispiel ein Wort, eine Phrase, ein Zeichen oder ein Satz, ein Textbaustein, eine Gesamtheit von verschiedenen Textelementen, ein Bildelement, wie zum Beispiel eine Grafik, ein Foto oder ein Video, oder eine Gesamtheit von verschiedenen Bildelementen ausgebildet sein. Entsprechend kann der erste Parameter und der Auswahlparameter eine Größe, eine Schriftart, eine Sprache oder eine Länge des Textelementes oder ein Anteil eines bestimmten Textelementes, beispielsweise ein Anteil einer Sportnachricht oder einer Information über Arzneimittel, an der Gesamtheit der verschiedenen Textelemente, beispielsweise eine Gesamtheit aus einer Sportnachricht einer Information über Arzneimittel und technischen Daten einer Maschine, sein. Entsprechend kann der zweite Parameter und der Auswahlparameter eine Größe, eine Farbe oder ein Schärfegrad des Bildelementes oder ein Anteil eines bestimmten Bildelementes an der Gesamtheit der verschiedenen Bildelemente sein.

Insbesondere können der erste und/oder zweite Parameter und der Auswahlparameter einen Wert von Null aufweisen. Dies ist entspricht, falls der erste und/oder zweite Parameter eine Länge des Textelementes oder eine Größe des Bildelementes ist, dem Fall, dass das jeweilige Inhaltselement nicht in der entsprechenden Test-, Umfrage-, und/oder Finalnachricht enthalten ist. Diese Ausgestaltung des Verfahrens ermöglicht, insbesondere bei einer Verwendung von mehreren Parametern und mehreren Nachrichtenmerkmalen in Form von Inhaltselementen, Finalnachrichten zu erzeugen, welche bestimmte Nachrichtenmerkmale in einer bestimmten Länge beziehungsweise Größe aufweisen und andere Nachrichtenmerkmale, deren Länge oder Größe gleich Null ist, nicht aufweisen.

Eine besondere Ausgestaltung des Verfahrens sieht vor, dass das erste Nachrichtenmerkmal der ersten Testnachricht und das erste Nachrichtenmerkmal der zweiten Testnachricht ein Inhaltselement und/oder das erste Nachrichtenmerkmal der dritten Testnachricht und das erste Nachrichtenmerkmal der vierten Testnachricht ein Inhaltselement ist.

Beispielhaft kann das erste Nachrichtenmerkmal der ersten und zweiten Testnachricht jeweils ein Inhaltselement in Form eines Textelementes und das erste Nachrichtenmerkmal der dritten und vierten Testnachricht ein Inhaltselement in Form eines Bildelementes sein. Beispielhaft kann weiterhin der erste Parameter eine Größe des Textelementes und der zweite Parameter eine Farbe des Bildelementes sein. Wird der erste Parameter oder der zweite Parameter verändert, d.h. er nimmt unterschiedliche Werte an, geht dies entsprechend mit einer Größenveränderung des Textelementes beziehungsweise mit einer Farbveränderung des Bildelementes einher. Bevorzugt ist eine Veränderung des ersten Nachrichtenmerkmals der ersten und zweiten Testnachricht beziehungsweise des ersten Nachrichtenmerkmals der dritten und vierten Testnachricht entsprechend mittels einer Veränderung eines Wertes des ersten Parameters beziehungsweise eines Wertes des zweiten Parameters beschreibbar, insbesondere charakterisierbar und bevorzugt nachbildbar, insbesondere eindeutig nachbildbar.

Im Sinne der Erfindung ist mittels des ersten Parameters ein Zustand des ersten Nachrichtenmerkmals der ersten und zweiten Testnachricht und mittels des zweiten Parameters ein Zustand des ersten Nachrichtenmerkmals der dritten und vierten Testnachricht beschreibbar, insbesondere charakterisierbar und bevorzugt nachbildbar, insbesondere eindeutig nachbildbar, wobei verschiedene Zustände des ersten Nachrichtenmerkmals der ersten und zweiten Testnachricht verschiedenen Werten des ersten Parameters und verschiedene Zustände des zweiten Nachrichtenmerkmals der dritten und vierten Testnachricht verschiedenen Werten des zweiten Parameters entsprechen.

In einer vorteilhaften Weiterbildung des Verfahrens ist vorgesehen, dass das Inhaltselement der ersten Testnachricht und/oder dritten Testnachricht zumindest teilweise den gleichen Inhalt aufweist wie das Inhaltselement der zweiten Testnachricht beziehungsweise vierten Testnachricht. Beispielsweise kann das erste Nachrichtenmerkmal der ersten Testnachricht ein Inhaltselement in Form eines Textelementes sein und das erste Nachrichtenmerkmal der zweiten Testnachricht ein Inhaltselement in Form eines Textelementes sein, wobei die beiden Textelemente zumindest teilweise den gleichen Inhalt aufweisen und eines der beiden Textelemente gegenüber dem anderen verkürzt ist. Eine inhaltliche Übereinstimmung von Inhaltselementen hat den Vorteil, dass ein Einflusswert des ersten oder zweiten Parameters unabhängig von einem Inhalt einer Testnachricht und dadurch genauer bestimmt werden kann.

Eine weitere vorteilhafte Ausgestaltung der vorherigen Weiterbildung des Verfahrens sieht vor, dass jeweils das erste Auswahlnachrichtenmerkmal der Umfragenachrichten und das Finalnachrichtenmerkmal Inhaltselemente sind und zumindest teilweise den gleichen Inhalt aufweisen. Bei dieser Variante des Verfahrens können beispielsweise das erste Auswahlnachrichtenmerkmal und das Finalnachrichtenmerkmal jeweils ein Textelement sein und die Finalnachricht ausschließlich Teile des Textelementes der Auswahlnachricht aufweisen, wobei die Teile derart in Größe, Länge, Farbe und/oder Schrift verändert werden, dass die Finalnachricht eine höchstmögliche Relevanz für den Finalempfänger hat.

Des Weiteren können das erste Auswahlnachrichtenmerkmal der Umfragenachrichten, das Finalnachrichtenmerkmal und die ersten und die zweiten Nachrichtenmerkmale der Testnachrichten jeweils Inhaltselemente sein, wobei das Finalnachrichtenmerkmal ausschließlich Teile desjenigen Nachrichtenmerkmals der Testnachrichten, welches mittels einer Veränderung des Auswahlparameters veränderbar ist, aufweist. Bei dieser Ausgestaltung des Verfahrens sind der erste und der zweite Parameter bevorzugt Parameter, welche jeweils eine Größe der ersten und zweiten Nachrichtenmerkmale beschreiben, wie zum Beispiel eine Textlänge oder eine Bildgröße. Diese spezielle Ausgestaltung des Verfahrens sieht insbesondere vor, denjenigen Parameter, welcher nicht als Auswahlparameter bestimmt wurde, bei einer Erzeugung der Auswahlnachricht und/oder der Finalnachricht zu Null zu setzen. Das entsprechende Nachrichtenmerkmal, dessen korrespondierender Parameter nicht als Auswahlparameter bestimmt wurde, ist in diesem Fall nicht in der Auswahlnachricht und/oder der Finalnachricht enthalten. Auf diese Art können für einen Finalempfänger nicht relevante Nachrichtenmerkmale eliminiert werden.

Eine weitere Ausführungsform kann vorsehen, dass das erste Nachrichtenmerkmal der ersten Testnachricht und der zweiten Testnachricht ein Zeitwert und/oder das erste Nachrichtenmerkmal der dritten Testnachricht und der vierten Testnachricht, das jeweilige erste Auswahlnachrichtenmerkmal der Umfragenachrichten und das Finalnachrichtenmerkmal der Finalnachricht ein Zeitwert ist. Der Zeitwert kann ein Datum und/oder eine Uhrzeit sein, beispielsweise zu welchem oder zu welcher die jeweilige Test-, Umfrage-, und/oder Finalnachricht versendet wird. Der Zeitwert kann auch eine Zeitverzögerung sein, welche zwischen einem Absenden einer Testnachricht und einem Absenden einer Umfragenachricht oder einer Finalnachricht, oder welche zwischen einem Absenden einer Umfragenachricht und einer Finalnachricht vorliegt.

In dem dritten Schritt des vorgeschlagenen Verfahrens wird das erste Reaktionsverhalten auf die Testnachrichten mittels des Trackingservers erfasst. Das erste Reaktionsverhalten wird bevorzugt derart erfasst, indem ein jeweiliges einzelnes erstes Reaktionsverhalten der jeweiligen Testempfänger erfasst wird und die einzelnen ersten Reaktionsverhalten der Testempfänger in ihrer Gesamtheit das erste Reaktionsverhalten ausbilden. Ein jeweiliges einzelnes erstes Reaktionsverhalten der Testempfänger kann insbesondere als ein Signal, eine Signalfolge, und/oder eine Nachricht, welche von dem jeweiligen Testempfänger zu dem Trackingserver gesendet wird, erfasst werden. Beispielsweise kann ein jeweiliges einzelnes erstes Reaktionsverhalten in Form einer Antwort auf eine empfangene Testnachricht oder einer ausgeführten Aktion in einem Menü einer Benutzerschnittstelle des Testempfängers im Anschluss an ein Empfangen der Testnachricht generiert werden.

Eine weitere Ausgestaltung sieht vor, dass an einen jeweiligen Testempfänger die erste und die zweite Testnachricht und/oder die dritte und die vierte Testnachricht anstatt jeweils nur einer Testnachricht gesendet wird. Dies kann den Vorteil haben, dass bei einer geringen Anzahl an Testempfängern, beispielsweise weniger als einhundert Testempfänger, der Einflusswert des ersten und zweiten Parameters sicherer, insbesondere statistisch signifikant, ermittelt werden kann.

Vorteilhafterweise werden die Testnachrichten an mehrere Testempfänger gesendet, zum Beispiel an einhundert Testempfänger. Dies hat den Vorteil, dass ein Einfluss eines Empfängermerkmals, beispielsweise des ersten Empfängermerkmals, auf das erste Reaktionsverhalten verringert werden kann. Bevorzugt werden mehrere, bevorzugt alle, Testnachrichten an mehrere, bevorzugt alle, Testempfänger gesendet und das erste Reaktionsverhalten mit Hilfe von einer Mittelung der einzelnen ersten Reaktionsverhalten der jeweiligen Testempfänger erfasst.

Vorzugsweise wird jeweils ein Testdatensatz für zumindest einige der Testempfänger erstellt, wobei ein Identifikationsmerkmal, wie zum Beispiel eine IP-Adresse eines jeweiligen Testempfängers einem ersten Reaktionsverhalten auf eine jeweils empfangene Testnachricht des Testempfängers und einem Wert des Auswahlparameters der jeweiligen empfangenen Testnachricht zugeordnet wird.

In dem vierten Schritt des vorgeschlagenen Verfahrens wird das erste Reaktionsverhalten mittels des Bewertungsmoduls bewertet. Das erste Reaktionsverhalten wird bevorzugt derart bewertet, indem ein jeweiliges einzelnes erstes Reaktionsverhalten der jeweiligen Testempfänger bewertet wird. In vorteilhafter Weise erfolgt bei der Bewertung der einzelnen ersten Reaktionsverhalten eine qualitative oder eine quantitative Bewertung. Die quantitative Bewertung sieht vorteilhaft ein Ermitteln eines einzelnen ersten Reaktionswertes vor.

Die Bewertung kann eine Reaktionszeit umfassen, mit welcher der jeweilige Testempfänger nach einem Empfangen einer Testnachricht auf die Testnachricht reagiert. Bei einer qualitativen Bewertung kann bei einer kurzen Reaktionszeit, beispielsweise kürzer als drei Tage, das einzelne erste Reaktionsverhalten mit gut und bei einer langen Reaktionszeit, beispielsweise länger als oder genau drei Tage, das einzelne erste Reaktionsverhalten mit schlecht bewertet werden.

Im Fall einer quantitativen Bewertung des einzelnen ersten Reaktionsverhaltens kann beispielsweise bei einer Reaktionszeit von kürzer als einem Tag das einzelne erste Reaktionsverhalten mit einem einzelnen ersten Reaktionswert von zehn bewertet werden und bei einer Reaktionszeit von länger als zehn Tagen das einzelne erste Reaktionsverhalten mit einem einzelnen ersten Reaktionswert von eins bewertet werden. Liegt die Reaktionszeit bei einem Wert zwischen einem und zehn Tagen, so wird bevorzugt eine Interpolation des einzelnen ersten Reaktionswertes durchgeführt.

Im Rahmen einer weiteren Variante umfasst die Bewertung des einzelnen ersten Reaktionsverhaltens eine Nachverfolgung einer Reaktion des jeweiligen Testempfängers im Anschluss an ein Empfangen der Testnachricht. Nach vorteilhafter Ausgestaltung kann die Nachverfolgung ein Aufzeichnen einer Aktion auf einer Webseite, auf welcher der Testempfänger über die Testnachricht geleitet wurde, ein Aufrufen der Webseite selbst und/oder ein Öffnen der Testnachricht umfassen.

Eine mögliche Variante der Nachverfolgung wird im Folgenden beschrieben. Beim Versenden der Nachrichten, d.h. der Test-, Umfrage- oder Finalnachrichten, wird jedem Empfänger, d.h. Test-, Umfrage- oder Finalempfänger, dessen Adresse, beispielsweise in Form einer Emailadresse, bekannt ist, eine Nutzer-ID zugeordnet. Diese Nutzer-ID ist bevorzugt in Form einer Information, beispielsweise einer Codierung, in einem Link zu einer Webseite, welchen die Nachricht aufweist, enthalten. Ebenfalls ist eine Information, welche Art von Nachricht der Empfänger erhalten hat, in dem Link enthalten. So kann der Link eine Information aufweisen, welche den Wert des ersten und/oder zweiten Parameters der Testnachricht oder Umfragenachricht angibt und angibt, ob eine Testnachricht oder eine Umfragenachricht erhalten wurde. Bei einem Aufrufen der Webseite mittels des Linkes wird die Information, welche in dem Link enthalten ist an einen Webserver, auf welchem die Webseite betrieben wird, gesendet.

Des Weiteren wird vorzugsweise ein Aktionsdatensatz, in welchen aufgezeichnete Aktionen, welche auf der Webseite ausgeführt wurden, gespeichert sind, mittels des Webservers generiert und bevorzugt protokolliert. Bevorzugt weist der Aktionsdatensatz eine Zuordnung der Nutzer-ID zu den gespeicherten Aktionen auf. Die in dem Link enthaltenen Informationen und/oder der Aktionsdatensatz werden von dem Webserver in Form einer Rückmeldung an den Trackingserver gesendet. Beim Erfassen des ersten und/oder zweiten Reaktionsverhaltens kann anhand der Rückmeldung vom Webserver ein erstes und/oder zweites Reaktionsverhalten einer bestimmten Nutzer-ID zugeordnet werden. Insbesondere kann anhand der Nutzer-ID festgestellt werden, welche Aktion der jeweilige Empfänger in Abhängigkeit einer empfangen Nachricht durchgeführt hat, d.h. ob der Empfänger die Webseite aufgerufen hat und welche Aktionen der Empfänger auf der Webseite durchgeführt hat.

Zur Bewertung des einzelnen ersten Reaktionsverhaltens kann ein Punktesystem vorgesehen sein, welches je nach der Reaktion des Testempfängers einen einzelnen ersten Reaktionswert des einzelnen ersten Reaktionsverhaltens um eine vorgegebene Anzahl an Punkten erhöht. Beispielsweise kann bei einem Öffnen der Testnachricht der einzelne erste Reaktionswert um eins, bei einem Aufrufen einer in der Testnachricht angegebenen Webseite der einzelne erste Reaktionswert um zwei, bei einer ersten Aktion auf der angegebenen Webseite der einzelne erste Reaktionswert um drei und bei einer zweiten Aktion auf der angegebenen Webseite der einzelne erste Reaktionswert um drei Punkte erhöht werden. Eine vorteilhafte Ausgestaltung sieht vor, dass das Bewerten des einzelnen ersten Reaktionsverhaltens der Testempfänger eine vorgegebene Zeit andauert, beispielsweise 10 Tage, 10 Stunden, 10 Minuten oder 10 Sekunden.

In dem fünften Schritt wird der Einflusswert des ersten und des zweiten Parameters bestimmt. Vorzugsweise wird hierbei eine Kennzahl bestimmt, mittels welcher ein Einfluss des ersten Parameters und des zweiten Parameters auf das erste Reaktionsverhalten der Testempfänger erfassbar ist. Bevorzugt wird in diesem Schritt ein Zusammenhang zwischen einer Veränderung eines Wertes des ersten Parameters oder des zweiten Parameters und einer Veränderung des ersten Reaktionsverhaltens der Testempfänger ermittelt.

Eine Ausführungsform des vorgeschlagenen Verfahrens sieht vor, dass die Testnachrichten derart erzeugt werden, das die erste Testnachricht ein zweites Nachrichtenmerkmal, die zweite Testnachricht ein zweites Nachrichtenmerkmal, die dritte Testnachricht ein zweites Nachrichtenmerkmal und die vierte Testnachricht ein zweites Nachrichtenmerkmal aufweisen und jeweils das zweite Nachrichtenmerkmal der ersten und der zweiten Testnachricht mittels einer Veränderung jeweils eines Wertes des zweites Parameters veränderbar ist und jeweils das zweite Nachrichtenmerkmal der dritten und vierten Testnachricht mittels einer Veränderung jeweils eines Wertes des ersten Parameters veränderbar ist und die Werte des ersten und zweiten Parameters der Testnachrichten jeweils Werte in einem engen Bereich eines Extremwertes eines jeweiligen Wertebereiches der Parameter sind. Diese Variante der Erzeugung der Testnachrichten soll im Folgenden als kombinierte Extremwertvariante bezeichnet werden. Ein enger Bereich umfasst insbesondere Werte in einem Abstand von dem jeweiligen Extremwert von ungefähr bis zu zehn Prozent des gesamten Wertebereiches des Parameters.

Der Wertebereich des ersten Parameters wird nach unten durch einen ersten Minimalwert und nach oben durch einen ersten Maximalwert und der Wertebereich des zweiten Parameters nach unten durch einen zweiten Minimalwert und nach oben durch einen zweiten Maximalwert begrenzt. Bevorzugt sind die Werte des ersten und zweiten Parameters der Testnachrichten entweder Minimal- oder Maximalwerte des Wertebereiches des ersten beziehungsweise des zweiten Parameters. Durch das Erzeugen der Testnachrichten nach der kombinierten Extremwertvariante kann eine Anzahl von Testnachrichten im Vergleich zu einem Erzeugen der Testnachrichten, nach welchem eine jeweilige Testnachricht nur ein Nachrichtenmerkmal aufweist, welches mittels einer Veränderung des ersten oder zweiten Parameters veränderbar ist, deutlich verringert werden, um den jeweiligen Einflusswert des ersten und zweiten Parameters mit derselben Genauigkeit zu bestimmen. Eine Anwendung der kombinierten Extremwertvariante kann demnach den Datenverkehr in dem Kommunikationsnetzwerk zwischen dem Sender und den Testempfängern reduzieren.

Eine sehr vorteilhafte Ausführung der kombinierten Extremwertvariante sieht ein Erzeugen der Testnachrichten nach folgender Variante vor, welche im Folgenden als kombinierte Vierfachextremwertvariante bezeichnet wird.

Der erste Parameter des ersten Nachrichtenmerkmals der ersten Testnachricht weist einen Wert in einem engen Bereich des ersten Maximalwertes, bevorzugt den ersten Maximalwert, auf und der zweite Parameter des zweiten Nachrichtenmerkmals der ersten Testnachricht weist einen Wert in einem engen Bereich des zweiten Minimalwertes, bevorzugt den zweiten Minimalwert, auf.

Der erste Parameter des ersten Nachrichtenmerkmals der zweiten Testnachricht weist einen Wert in einem engen Bereich des ersten Minimalwertes, bevorzugt den ersten Minimalwert, auf und der zweite Parameter des zweiten Nachrichtenmerkmals der zweiten Testnachricht weist einen Wert in einem engen Bereich des zweiten Maximalwertes, bevorzugt den zweiten Maximalwert, auf.

Der zweite Parameter des ersten Nachrichtenmerkmals der dritten Testnachricht weist einen Wert in einem engen Bereich des zweiten Minimalwertes, bevorzugt den zweiten Minimalwert, auf und der erste Parameter des zweiten Nachrichtenmerkmals der dritten Testnachricht weist einen Wert in einem engen Bereich des ersten Minimalwertes, bevorzugt den ersten Minimalwert, auf.

Der zweite Parameter des ersten Nachrichtenmerkmals der vierten Testnachricht weist einen Wert in einem engen Bereich des zweiten Maximalwertes, bevorzugt den zweiten Maximalwert, auf und der erste Parameter des zweiten Nachrichtenmerkmals der vierten Testnachricht weist einen Wert in einem engen Bereich des ersten Maximalwertes, bevorzugt den ersten Maximalwert, auf.

Mittels dem Erzeugen der Testnachrichten nach dem Vorbild der kombinierten Vierfachextremwertvariante kann durch eine minimale Anzahl an Testnachrichten eine hohe Anzahl an Kombinationen der möglichen Werte der beiden Parameter für die korrespondierenden ersten und zweiten Nachrichtenmerkmale repräsentiert werden. Die Vierfachextremwertvariante ermöglicht daher, mit möglichst wenigen Testnachrichten den Einfluss des ersten und zweiten Parameters auf das erste Reaktionsverhalten zu bestimmen und ermöglicht eine weitere Reduktion des Datenverkehrs zwischen dem Sender und den Testempfängern gegenüber der kombinierten Extremwertvariante.

In vorteilhafter Weise werden zusätzlich zu der ersten Testnachricht mehrere Ersttestnachrichten an weitere Testempfänger neben dem ersten, zweiten, dritten und/oder vierten Testempfänger gesendet, wobei die Ersttestnachrichten dieselben Werte für den ersten und den zweiten Parameter des entsprechenden ersten und zweiten Nachrichtenmerkmals der Ersttestnachrichten wie die erste Testnachricht aufweisen.

Ebenso werden bevorzugt zusätzlich zu der zweiten Testnachricht mehrere Zweittestnachrichten an weitere Testempfänger neben dem ersten, zweiten, dritten und/oder vierten Testempfänger gesendet, wobei die Zweittestnachrichten dieselben Werte für den ersten und den zweiten Parameter des entsprechenden ersten und zweiten Nachrichtenmerkmals der Zweittestnachrichten wie die zweite Testnachricht aufweisen.

Ebenso werden bevorzugt zusätzlich zu der dritten Testnachricht mehrere Dritttestnachrichten an weitere Testempfänger neben dem ersten, zweiten, dritten und/oder vierten Testempfänger gesendet, wobei die Dritttestnachrichten dieselben Werte für den ersten und den zweiten Parameter des entsprechenden ersten und zweiten Nachrichtenmerkmals der Dritttestnachrichten wie die dritte Testnachricht aufweisen.

Ebenso werden bevorzugt zusätzlich zu der vierten Testnachricht mehrere Vierttestnachrichten an weitere Testempfänger neben dem ersten, zweiten, dritten und/oder vierten Testempfänger gesendet, wobei die Vierttestnachrichten dieselben Werte für den ersten und den zweiten Parameter des entsprechenden ersten und zweiten Nachrichtenmerkmals der Vierttestnachrichten wie die vierte Testnachricht aufweisen.

Vorzugsweise werden mittels des Trackingservers die Reaktionen der Testempfänger derart erfasst, vorzugsweise sortiert, dass zu jedem Testempfänger bekannt ist, auf welche Testnachricht dieser reagiert hat.

Weiterhin wird vorteilhaft wie oben beschrieben für die Testempfänger das jeweilige einzelne erste Reaktionsverhalten bewertet und bevorzugt für jeden Testempfänger ein einzelner erster Reaktionswert bestimmt. Vorliegend mag ein hoher Reaktionswert ein starkes bzw. gutes Reaktionsverhalten und ein niedriger Reaktionswert ein schwaches bzw. schlechtes Reaktionsverhalten beschreiben.

Vorteilhaft wird ein erster Mittelreaktionswert für alle einzelnen ersten Reaktionswerte der Testempfänger, welche jeweils eine Ersttestnachricht oder die erste Testnachricht empfangen haben, gebildet. Ebenso kann ein zweiter Mittelreaktionswert für alle einzelnen ersten Reaktionswerte der Testempfänger, welche jeweils eine Zweittestnachricht oder die zweite Testnachricht empfangen haben, gebildet werden. Weiterhin kann ein dritter Mittelreaktionswert für alle einzelnen ersten Reaktionswerte der Testempfänger, welche jeweils eine Dritttestnachricht oder die dritte Testnachricht empfangen haben, gebildet werden. Genauso gut kann ein vierter Mittelreaktionswert für alle einzelnen ersten Reaktionswerte der Testempfänger, welche jeweils eine Vierttestnachricht oder die vierte Testnachricht empfangen haben, gebildet werden.

Des Weiteren wird bevorzugt ein erster positiver Einflusswert gebildet, welcher der Hälfte der Summe des ersten Mittelreaktionswertes und des vierten Mittelreaktionswertes entspricht. Des Weiteren wird bevorzugt ein erster negativer Einflusswert gebildet, welcher der Hälfte der Summe des zweiten Mittelreaktionswertes und des dritten Mittelreaktionswertes entspricht.

Des Weiteren wird bevorzugt ein zweiter positiver Einflusswert gebildet, welcher der Hälfte der Summe des zweiten Mittelreaktionswertes und des vierten Mittelreaktionswertes entspricht. Des Weiteren wird bevorzugt ein zweiter negativer Einflusswert gebildet, welcher der Hälfte der Summe des ersten Mittelreaktionswertes und des dritten Mittelreaktionswertes entspricht.

Bevorzugt wird der Einflusswert des ersten Parameters zur Bestimmung des Einflusses des ersten Parameters auf das erste Reaktionsverhalten derart bestimmt, dass der erste Einflusswert des ersten Parameters der Betrag der Differenz aus dem ersten positiven Einflusswert als Minuend und dem ersten negativen Einflusswert als Subtrahend entspricht. Bevorzugt wird der Einflusswert des zweiten Parameters zur Bestimmung des Einflusses des zweiten Parameters auf das erste Reaktionsverhalten derart bestimmt, dass der zweite Einflusswert des zweiten Parameters der Betrag der Differenz aus dem zweiten positiven Einflusswert als Minuend und dem zweiten negativen Einflusswert als Subtrahend entspricht.

Anschließend wird der Einflusswert des ersten Parameters mit dem Einflusswert des zweiten Parameters in dem sechsten Schritt des vorgeschlagenen Verfahrens verglichen. Bei einer speziellen Ausgestaltung des Verfahrens hat derjenige Parameter den größeren Einfluss auf das erste Reaktionsverhalten, welcher den höheren Einflusswert aufweist. Derjenige Parameter der beiden Parameter, der erste und der zweite Parameter, mit dem größeren Einfluss auf das erste Reaktionsverhalten wird mittels des Auswahlmoduls als Auswahlparameter bestimmt.

Nach dem Erzeugen der Umfragenachrichten in dem siebten Schritt werden in dem achten Schritt des Verfahrens die Umfragenachrichten mittels des Senders an die Umfrageempfänger gesendet. Ein jeweiliger Umfrageempfänger kann auch ein Testempfänger sein. Bevorzugt sind die Umfrageempfänger von den Testempfängern verschieden. Die Umfrageempfänger sind zumindest anhand des ersten Empfängermerkmals unterscheidbar. Das erste Empfängermerkmal kann ein Maschinentyp, ein Alter einer Person, ein Geschlecht einer Person, ein Ort, ein Erfahrungsgrad einer Person in einem bestimmten Bereich, oder ein sonstiges für eine Klassifizierung geeignetes Merkmal sein.

Der Wert des Auswahlparameters des ersten Auswahlnachrichtenmerkmals der ersten Umfragenachricht ist gegenüber dem Wert des Auswahlparameters des ersten Auswahlnachrichtenmerkmals der zweiten Umfragenachricht verschieden.. Dies bedeutet, dass der Zustand des ersten Auswahlnachrichtenmerkmals der ersten Umfragenachricht gegenüber dem Zustand des ersten Auswahlnachrichtenmerkmals der zweiten Umfragenachricht verschieden ist. Dies kann zum einen der Fall sein, wenn die beiden ersten Auswahlnachrichtenmerkmale der beiden Umfragenachrichten gleiche Inhalte aufweisen, und zum anderen auch, wenn diese keine gleichen Inhalte aufweisen.

In dem zehnten Schritt wird das zweite Reaktionsverhalten auf die Umfragenachrichten mittels des Bewertungsmoduls bewertet. Das zweite Reaktionsverhalten entspricht dem Reaktionsverhalten der Umfrageempfänger auf die Umfragenachrichten. Eine Bewertung des zweiten Reaktionsverhaltens kann in einer vorteilhaften Variante auf die gleiche Weise erfolgen wie eine Bewertung des ersten Reaktionsverhaltens.

Vorzugsweise wird das zweite Reaktionsverhalten derart bewertet, indem ein jeweiliges einzelnes zweites Reaktionsverhalten der jeweiligen Umfrageempfänger bewertet wird. In vorteilhafter Weise erfolgt bei der Bewertung der einzelnen zweiten Reaktionsverhalten eine qualitative oder eine quantitative Bewertung, wie oben für das Bewerten der einzelnen ersten Reaktionsverhalten beschrieben ist. Insbesondere kann das einzelne zweite Reaktionsverhalten des jeweiligen Umfrageempfängers nach dem für die Bewertung des einzelnen ersten Reaktionsverhaltens vorgeschlagenen Punktesystem erfolgen. Besonders vorteilhaft wird für jede empfangene Umfragenachricht ein einzelner zweiter Reaktionswert bestimmt. Die einzelnen zweiten Reaktionswerte können so wie die oben beschriebenen einzelnen ersten Reaktionswerte bestimmt werden.

Vorzugsweise wird für jede empfangene Umfragenachricht ein einzelner Umfragereaktionswert bestimmt. Der jeweilige Umfragereaktionswert eines jeweiligen Umfrageempfängers kann wie ein einzelner erster Reaktionswert eines Testempfängers bestimmt werden.

In dem elften Schritt wird jeweils ein Umfragedatensatz für zumindest zwei Umfrageempfänger erstellt und anschließend in der Umfragedatenbank gespeichert, wobei der jeweilige Umfragedatensatz einen Wert des ersten Empfängermerkmals des jeweiligen Umfrageempfängers, eine Bewertung eines entsprechenden einzelnen zweiten Reaktionsverhaltens des jeweiligen Umfrageempfängers und einen entsprechenden Wert des Auswahlparameters der von dem jeweiligen Umfrageempfänger empfangenen Umfragenachricht aufweist.

Die Bewertung des entsprechenden einzelnen zweiten Reaktionsverhaltens des jeweiligen Umfrageempfängers kann beispielsweise der einzelne Umfragereaktionswert eines Umfrageempfängers sein. Im Fall einer qualitativen Bewertung des einzelnen zweiten Reaktionsverhaltens kann die Bewertung als String, zum Beispiel "gut", "mittel", oder "schlecht", in einem Umfragedatensatz vorliegen. Im Fall einer qualitativen Bewertung des einzelnen zweiten Reaktionsverhaltens kann die Bewertung als Umfragereaktionswert, zum Beispiel "100", "50", oder "0", in einem Umfragedatensatz vorliegen.

Eine besondere Ausgestaltung sieht vor, dass das Kommunikationsnetzwerk ein Approximationsmodul aufweist, wobei mittels des Approximationsmoduls ein funktionaler Zusammenhang zwischen den Werten des ersten Empfängermerkmals der Umfrageempfänger, den Bewertungen des entsprechenden einzelnen zweiten Reaktionsverhaltens der Umfrageempfänger und den entsprechenden Werten des Auswahlparameters der von den Umfrageempfängern empfangenen Umfragenachrichten approximiert wird.

Insbesondere kann eine Reaktionsfunktion approximiert werden, welche in Abhängigkeit eines Wertes des ersten Empfängermerkmals als erste Eingangsgröße und eines Wertes des Auswahlparameters als zweite Eingangsgröße einen Wert annimmt, welcher einem einzelnen abgeschätzten Reaktionswert eines Empfängers entspricht.

Das Approximationsmodul kann ein neuronales Netz und/oder eine Polynomfunktion mit zumindest einem zusammengesetzten Polynom aufweisen. Zur Approximation können besonders vorteilhaft ein Teil der Umfragedatensätze oder alle Umfragedatensätze der Umfragedatenbank als Trainingsdatensätze für das Approximationsmodul verwendet werden. Auf diese Art wird die Approximation auf Basis der durch die Umfragedatenbank bereitgestellten Zuordnung der Werte des ersten Empfängermerkmals zu den Werten des Auswahlparameters und den Bewertungen des einzelnen zweiten Reaktionsverhaltens durchgeführt.

Bevorzugt werden die jeweiligen Trainingsdatensätze derart aufgeteilt, dass der jeweilige Wert des ersten Empfängermerkmales einem ersten Eingangssignal, der jeweilige Wert des Auswahlparameters einem zweiten Eingangssignal und der entsprechende einzelne Umfragereaktionswert des Trainingsdatensatzes dem, bevorzugt einzigen, Ausgangssignal des Approximationsmoduls entspricht.

Das Approximationsmodul weist mehrere Parameter auf. Je nachdem welche Werte diese Parameter annehmen wird ausgehend von einem ersten Eingangssignal und einem zweiten Eingangssignal ein Ausgangssignal berechnet.

Bei einem Training des Approximationsmoduls wird ausgehend von dem Wert des ersten Empfängermerkmales als erstes Eingangssignal und dem Wert des Auswahlparameters als zweites Eingangssignal ein Ausgangssignal berechnet, welches in direktem Zusammenhang mit den Werten der Parameter des Approximationsmoduls stehen. Danach wird ein Abweichungswert auf Basis des berechneten Ausgangssignals und dem einzelnen Umfragereaktionswert berechnet, vorzugsweise in Form einer Differenz, wobei derjenige einzelne Umfragereaktionswert verwendet wird, welcher in demselben Umfragedatensatz gespeichert ist wie der Wert des ersten Empfängermerkmales und der Wert des Auswahlparameters, auf Basis dessen das Ausgangssignal berechnet wurde. Vorzugsweise wird für alle Trainingsdatensätze ein Abweichungswert berechnet und bevorzugt werden alle Abweichungswerte zu einer mittleren Abweichung aufsummiert. Die mittlere Abweichung wird besonders vorteilhaft jeweils nach den Parametern des Approximationsmoduls, insbesondere des neuronalen Netzes bzw. der Polynomfunktion, abgeleitet und ein entsprechender Ableitungswert bestimmt und für jeden Parameter ein jeweiliger Änderungswert des Parameters bestimmt, welcher bevorzugt direkt proportional zu dem entsprechenden Ableitungswert ist.

Im Anschluss daran werden die einzelnen Parameter des Approximationsmoduls, insbesondere des neuronalen Netzes bzw. der Polynomfunktion, um den jeweiligen Änderungswert verändert. Dies ist eine bevorzugte Variante des Trainings des Approximationsmoduls, insbesondere des neuronalen Netzes bzw. der Polynomfunktion. Andere Varianten des Trainings können eine Hebb-Regel, eine Delta-Regel, ein Backpropagation-Training und/oder ein kompetitives Lernen umfassen.

Der funktionale Zusammenhang zwischen dem ersten Empfängermerkmal, dem Auswahlparameter und der Bewertung des zweiten Reaktionsverhaltens wird mittels des oben beschriebenen Trainings des Approximationsmoduls approximiert und ein solcher approximierter funktionaler Zusammenhang in Form der am Ende des Trainings vorliegenden Parameter des Approximationsmoduls gespeichert, vorzugsweise in einer Modellierungsdatenbank bevorzugt auf dem Datenbankserver.

Eine besondere Ausgestaltung sieht vor, dass überprüft wird, ob die Werte des ersten Empfängermerkmals einen Einfluss auf die Bewertungen des entsprechenden einzelnen zweiten Reaktionsverhaltens der Umfrageempfänger haben. Eine solche Überprüfung wird vorzugsweise nach dem zwölften Schritt des vorgeschlagenen Verfahrens durchgeführt. Die Überprüfung kann beispielsweise mittels einer Datenanalyse der in der Umfragedatenbank gespeicherten Umfragedatensätze durchgeführt werden. Weiterhin kann dies über ein Betreiben des Approximationsmoduls nach dem Training mit abwechselnd verschiedenen Werten des ersten Empfängermerkmals als erster Eingangsgröße und einem konstanten ersten Wert des Auswahlparameters als zweiter Eingangsgröße in einer ersten Schleife erfolgen. Verändert sich der Ausgangswert des Approximationsmoduls nicht oder nur unwesentlich, d.h. im Bereich von ungefähr fünf Prozent, so kann für den konstant gehaltenen Wert des Auswahlparameters ein sehr geringer Einfluss des ersten Empfängermerkmals erfasst werden.

Das Approximationsmodul wird im Anschluss daran bei einem zweiten vom ersten verschiedenen konstanten Wert des Auswahlparameters mit abwechselnd verschiedenen Werten des ersten Empfängermerkmals als erster Eingangsgröße betrieben. Dieses Vorgehen wird für mehrere verschiedene Werte des Auswahlparameters wiederholt und für jeden Wert des Auswahlparameters überprüft, ob ein sehr geringer Einfluss des ersten Empfängermerkmals vorliegt, und bei einem Vorliegen des geringen Einflusses dies erfasst.

Wurde für einen Großteil der Werte des Auswahlparameters ein geringer Einfluss erfasst, beispielsweise für über neunzig Prozent eines Wertebereiches des Auswahlparameters, so wird gefolgert, dass die Werte des ersten Empfängermerkmals insgesamt einen sehr geringen Einfluss auf die Bewertungen des entsprechenden einzelnen zweiten Reaktionsverhaltens der Umfrageempfänger haben. In diesem Fall wird aus der Empfängerdatenbank ein zweites Empfängermerkmal ausgewählt und die Schritte acht bis dreizehn, bevorzugt die Schritte acht bis zwölf, des vorgeschlagenen Verfahrens mit dem zweiten Empfängermerkmal anstatt dem ersten Empfängermerkmal wiederholt ausgeführt. Mit Hilfe dieser speziellen Ausgestaltung des Verfahrens, welche die Überprüfung des Einflusses des ersten Empfängermerkmals beinhaltet, kann das einflussreichste Empfängermerkmal unter vielen möglichen Empfängermerkmalen ausgewählt werden, wodurch die Finalnachrichten besser an die Finalemfänger angepasst werden können und somit ein Absenden von irrelevanten Finalnachrichten an mögliche Finalempfänger vermieden werden kann.

In dem dreizehnten Schritt wird die Finalnachricht an den Finalempfänger gesendet, wobei der Wert des zum ersten Finalnachrichtenmerkmal korrespondierenden Auswahlparameters an den Wert des ersten Empfängermerkmals des Finalempfängers auf Basis der Zuordnung der Werte des ersten Empfängermerkmals zu den Werten des Auswahlparameters und den Bewertungen des einzelnen zweiten Reaktionsverhaltens angepasst wird. Bevorzugt wird der approximierte funktionale Zusammenhang zum Anpassen des Wertes des Auswahlparameters verwendet werden. Eine einfache Variante kann auch vorsehen die durch die Umfragedatenbank bereitgestellte Zuordnung als Look-up-Table zu verwenden eine Anpassung in Form eines Auslesens und Interpolierens durchzuführen.

Eine bevorzugte Ausführung sieht vor, dass der Wert des zum ersten Finalnachrichtenmerkmal korrespondierenden Auswahlparameters derart an den Wert des ersten Empfängermerkmals des Finalempfängers angepasst wird, dass der einzelne abgeschätzte Reaktionswert an einen Zielreaktionswert angepasst ist, bevorzugt dass der einzelne abgeschätzte Reaktionswert etwa gleich dem Zielreaktionswert ist.

Dies kann beispielsweise derart erfolgen, dass ausgehend von dem Wert des ersten Empfängermerkmales des Finalempfängers und einem Wert des Auswahlparameters mittels des Approximationsmoduls ein Ausgangssignal, welches dem einzelnen abgeschätzten Reaktionswert entspricht, berechnet wird. Weicht dieser einzelne abgeschätzte Reaktionswert von dem Zielreaktionswert ab, ist beispielsweise vom Betrag her kleiner als der Zielreaktionswert, so wird der Wert des Auswahlparameters verändert und erneut ein Ausgangssignal berechnet. Dieser Vorgang wird bevorzugt solange wiederholt, bis das berechnete Ausgangssignal vom Betrag her größer als oder im Rahmen eines Toleranzbereiches von beispielsweise einem Prozent ähnlich groß wie der vorgegebene Zielreaktionswert ist und damit an den Zielreaktionswert angepasst ist.

Dieses Anpassen des Wertes des Auswahlparameters wird im Folgenden als iteratives Anpassen bezeichnet. Dabei wird der Wert des Auswahlparameters als zweites Eingangssignal bei jedem Neustart verändert und der Wert des ersten Empfängermerkmals des Finalempfängers als erstes Eingangssignal konstant gehalten.

In vorteilhafter Weise wird an mehrere Finalempfänger jeweils eine Finalnachricht versendet, wobei die jeweiligen Finalnachrichten in gleicher Weise erzeugt werden wie die oben beschriebene Finalnachricht. Dabei werden in gleicher Weise wie bei dem oben beschriebenen Finalempfänger jeweils der Wert des ersten Empfängermerkmales des jeweiligen Finalempfängers aus der Empfängerdatenbank gelesen und dem Approximationsmodul als erstes Eingangssignal präsentiert.

Grundsätzlich eröffnet die Erfindung die Möglichkeit, nur solchen Finalempfängern eine Finalnachricht zu senden, bei welchem der einzelne abgeschätzte Reaktionswert mindestens so groß wie der Zielreaktionswert ist. Aufgrund des approximierten funktionalen Zusammenhangs ist es möglich, dass bei einigen Werten des ersten Empfängermerkmales ein vorgegebener Zielreaktionswert auch bei allen möglichen Werten des Auswahlparameters nicht erreicht werden kann.

Vorteilhafterweise kann bei dem iterativen Anpassen des Wertes des Auswahlparameters an den Wert des ersten Empfängermerkmals eine Änderung des Wertes des Auswahlparameters schrittweise verkleinert oder vergrößert werden. Auch kann bei der Änderung des Wertes des Auswahlparameters ein Gradientenverfahren vorgesehen sein, bei welchem die Änderung des Wertes des Auswahlparameters in Abhängigkeit einer Änderung der Abweichung des einzelnen abgeschätzten Reaktionswertes von dem Zielreaktionswert berechnet wird. Dabei kann die Änderung des Wertes des Auswahlparameters direkt proportional zu der

Änderung der Abweichung des einzelnen abgeschätzten Reaktionswertes berechnet werden.

Wie oben beschrieben kann der funktionale Zusammenhang durch die Reaktionsfunktion beschrieben werden.

Ein Approximieren der Reaktionsfunktion mittels des neuronalen Netzes hat gegenüber einem Approximieren der Reaktionsfunktion mittels einer oder mehrerer Polynomfunktionen den Vorteil, dass die mittels des neuronalen Netzes approximierte Reaktionsfunktion einen glatteren Funktionsverlauf aufweisen kann. Dies wird in vorteilhafter Weise dann erreicht, wenn das neuronale Netz eine Tangens-Hyperbolicus-Funktion aufweist. Bevorzugt weist das neuronale Netz eine Aktivierungsfunktion, bevorzugt mehrere Aktivierungsfunktionen, auf, welche vorteilhaft eine Tangens-Hyperbolicus-Funktion sind. Gegenüber einer Polynomfunktion kann mittels einer Tangens-Hyperbolicus-Funktion eine glattere Funktionsfläche des approximierten Zusammenhangs erzielt werden. Die glattere Funktionsfläche erleichtert die Verwendung des Gradientenverfahrens beim Anpassen des Wertes des Auswahlparameters an den Wert des ersten Empfängermerkmals. Bei bestimmten Konstellationen von Trainingsdaten kann sowohl ein Approximieren des funktionalen Zusammenhangs als auch ein Anpassen des Wertes des Auswahlparameters an den Wert des ersten Empfängermerkmals nur mittels des neuronalen Netzes möglich sein.

Neben dem ersten Empfängermerkmal können auch weitere Empfängermerkmale verwendet werden. Genauso können neben dem oben beschriebenen Auswahlparameter und dem ersten Auswahlnachrichtenmerkmal und dem Finalnachrichtenmerkmal mehrere Auswahlparameter und entsprechend mehrere Auswahlnachrichtenmerkmale und Finalnachrichtenmerkmale verwendet werden. In gleicher Weise können neben dem ersten und zweiten Nachrichtenmerkmal der Nachrichten auch weitere Nachrichtenmerkmale, welche mittels weiterer Parameter veränderbar sind, verwendet werden.

Ein besonderer Vorteil der Erfindung ist, dass der jeweils einzeln abgeschätzte Reaktionswert vor dem Absenden der Finalnachricht oder der Finalnachrichten an den Finalempfänger beziehungsweise an die Finalempfänger ermittelt wird, bevorzugt mittels des Approximationsmoduls und noch bevorzugter mittels des neuronalen Netzes.

Dadurch kann verhindert werden, dass Nachrichten, welche keine oder nur einer geringe Relevanz für den Finalempfänger beziehungsweise die Finalempfänger haben, erst gar nicht an den Finalempfänger beziehungsweise an die Finalempfänger versendet werden. Dadurch kann der Datenverkehr zwischen dem Sender und den Finalempfängern in dem Kommunikationsnetzwerk reduziert werden.

Dieser Vorteil kann besonders gut erreicht werden, wenn das Approximationsmodul innerhalb des Kommunikationsnetzwerkes örtlich näher an dem Sender als an dem Empfänger beziehungsweise dem Finalempfänger angeordnet ist. Insbesondere ist das Approximationsmodul innerhalb des Kommunikationsnetzwerkes zwischen einem Verteilungsknoten, von welchem die Nachrichten an die jeweiligen Empfänger gesendet werden, und der Empfängerdatenbank angeordnet. Eine solche Anordnung des Approximationsmoduls ermöglicht, dass eine große Anzahl an Testnachrichten und Umfragenachrichten an die Empfänger, insbesondere an alle Empfänger, welche in der Empfängerdatenbank gespeichert sind, versendet werden kann und eine ebenso große Anzahl an Reaktionen der Empfänger erfasst werden kann.

Je höher diese Anzahl ist, desto besser kann der funktionale Zusammenhang zwischen dem ersten Empfängermerkmal, dem Auswahlparameter und dem zweiten Reaktionsverhalten mittels des Approximationsmoduls approximiert werden. Gegenüber einer Variante, bei welcher das Approximationsmodul in unmittelbarer Nähe eines Empfängers und nicht vor dem Verteilungsknoten angeordnet ist, kann eine genaure Approximation des funktionalen Zusammenhangs zwischen dem ersten Empfängermerkmal, dem Auswahlparameter und dem zweiten Reaktionsverhalten ermöglicht sein. Vorteilhafterweise ist das Approximationsmodul in unmittelbarer Nähe, zum Beispiel in demselben Raum, des Senders angeordnet.

Um eine weitere Reduzierung des Datenverkehrs in dem Kommunikationsnetzwerk zu erreichen, kann vorgesehen sein, dass eine Anzahl der Finalnachrichten deutlich höher, zum Beispiel zehn, einhundert oder über eintausend Mal höher ist, als eine Anzahl an Test- und/oder Umfragenachrichten. Es ist möglich, dass auf Basis der erzeugten Umfragedatenbank, welche mit einer vergleichsweise geringen Anzahl an Umfrage- und Testnachrichten erstellt wird, ein vergleichsweise höhere Anzahl Finalempfänger ermittelt wird, für die eine entsprechende Finalnachricht eine zu geringe Relevanz hat und daher nicht an diese versendet wird. Somit kann die Summe der Nachrichten in dem Kommunikationsnetzwerk reduziert werden.

Grundsätzlich eröffnet die Erfindung die Möglichkeit, dass die Finalnachricht aus einer Menge von Nachrichten, welche vorzugsweise von mehreren Informationsquellen stammen, ausgewählt wird, wobei die Nachrichten jeweils zumindest ein Nachrichtenmerkmal aufweisen und die jeweiligen Nachrichtenmerkmale unterschiedliche Werte des Auswahlparameters aufweisen und der Wert des Auswahlparameters der Finalnachricht an den Wert des ersten Empfängermerkmals angepasst wird.

Die Informationsquellen können soziale Netzwerke, Blogs, Twitteraccounts, Nachrichtendienste und/oder Diskussionsforen sein. Vorteilhaft wird vor dem Auswählen der Finalnachricht ein Vergleichswert des Auswahlparameters bestimmt. Der Vergleichswert wird vorteilhaft für einen Zielreaktionswert und den Wert des ersten Empfängermerkmals des Finalempfängers mit dem oben beschriebenen Verfahren der iterativen Anpassung mittels des Approximationsmoduls berechnet. Vorzugsweise wird als Finalnachricht diejenige Nachricht ausgewählt, deren Wert des Auswahlparameters dem berechneten Vergleichswert am nächsten ist. Durch das iterative Anpassen des Vergleichswertes und der Auswahl der Finalnachricht in Abhängigkeit des Vergleichswertes wird der Wert des Auswahlparameters der Finalnachricht an den Wert des ersten Empfängermerkmals angepasst.

Weiterhin ist es im Rahmen der Erfindung, dass die Finalnachricht mittels des Zentralservers erzeugt wird. Hierbei kann die Finalnachricht aus einzelnen, bevorzugt auch getrennten, Nachrichtenmerkmalen, zusammengesetzt werden. Die Finalnachricht kann zum Beispiel das erste Nachrichtenmerkmal und/oder das zweite Nachrichtenmerkmal umfassen.

Im Folgenden soll eine beispielhafte Anwendung des Verfahrens beschrieben werden. Alle hierin beschriebenen Varianten der beispielhaften Anwendung sind auf das vorgeschlagene Verfahren übertragbar. Gemäß des Beispiels werden die Testnachrichten in dem ersten Schritt des Verfahrens derart erzeugt, dass die erste, zweite, dritte und vierte Testnachricht in einer einfachen Variante jeweils ein erstes Nachrichtenmerkmal aufweisen. Das erste Nachrichtenmerkmal der ersten und zweiten Testnachricht ist ein Text und das dritte und vierte Nachrichtenmerkmal der dritten und vierten Testnachricht ist ein Bild.

Der Text ist durch den ersten Parameter veränderbar, wobei der erste Parameter eine Textlänge ist. Die erste Testnachricht weist den Text in einer größeren Länge und die zweite Testnachricht den Text in einer kleineren Länge auf, d.h. der Text erscheint in der zweiten Textnachricht gegenüber der ersten Textnachricht verkürzt.

Das Bild ist durch den zweiten Parameter veränderbar, wobei der zweite Parameter eine Bildgröße ist. Die dritte Testnachricht weist das Bild in einer kleineren Bildgröße und die vierte Testnachricht das Bild in einer größeren Bildgröße auf. In diesem Beispiel soll das Bild bei beiden Testnachrichten vollständig dargestellt werden. Es ist in einer weiteren Variante auch möglich, dass bei einer kleineren Bildgröße nur ein Ausschnitt des Bildes dargestellt wird.

Die vier Testnachrichten werden in dem zweiten Schritt an einen einzigen Testempfänger oder an mehrere, beispielsweise vier oder eintausend, Testempfänger versendet. Im Folgenden wird die Variante betrachtet, bei welcher an mehrere Testempfänger die vier Testnachrichten gesendet werden.

Das erste Reaktionsverhalten wird in dem dritten Schritt erfasst und in dem vierten Schritt bewertet. Bei der Bewertung wird überprüft, ob ein Link, welcher unter dem Text oder dem Bild angeordnet ist, angeklickt wurde. Für jede einzelne versendete Testnachricht wird dies überprüft und für jeden Nachrichtentyp, d.h. für die erste, zweite, dritte und vierte Testnachricht eine Anklickrate bestimmt. In dem fünften Schritt wird ermittelt, ob ein Einflusswert des ersten und des zweiten Parameters auf die Anklickrate bestimmt. Es kann hierbei jeweils als Einflusswert des Parameters ein Quotient aus einer Veränderung der Anklickrate als Dividend und einer Veränderung des jeweiligen Parameters als Divisor bestimmt werden. In dem sechsten Schritt wird derjenige Parameter als Auswahlparameter bestimmt, welcher den größeren Einfluss auf das erste Reaktionsverhalten hat, was in diesem Fall derjenige Parameter mit dem größeren Quotienten ist.

In dem siebten Schritt werden mehrere Umfragenachrichten erzeugt, welche jeweils ein erstes Auswahlnachrichtenmerkmal aufweisen. Das erste Auswahlnachrichtenmerkmal kann derselbe Text oder dasselbe Bild sein, welcher bzw. welches in den Testnachrichten enthalten ist. Wesentlich für die Erfindung ist, dass das erste Auswahlnachrichtenmerkmal jeder Umfragenachricht mittels einer Veränderung eines jeweiligen korrespondierenden Wertes des Auswahlparameters veränderbar ist. Es ist daher möglich, dass im Vergleich zu den Testnachrichten ein anderer Text oder ein anderes Bild in den Umfragenachrichten enthalten ist.

Je nachdem, welcher der beiden Parameter als Auswahlparameter bestimmt wurde, wird das zu dem Auswahlparameter korrespondierende Nachrichtenmerkmal als Auswahlnachrichtenmerkmal ausgewählt. Ist zum Beispiel die Textlänge als Auswahlparameter bestimmt, ist das Auswahlnachrichtenmerkmal ein Text, vorzugsweise derselbe Text, welcher in den Testnachrichten enthalten ist. Ist hingegen die Bildgröße als Auswahlparameter bestimmt, ist das Auswahlnachrichtenmerkmal ein Bild, vorzugsweise dasselbe Bild, welches in den Testnachrichten enthalten ist. Im Folgenden wird davon ausgegangen, dass derselbe Text bzw. dasselbe Bild als Auswahlnachrichtenmerkmal ausgewählt wird.

In dem achten Schritt werden die Umfragenachrichten an mehrere Umfrageempfänger gesendet. Im Folgenden soll davon ausgegangen werden, dass an fünfhundert Umfrageempfänger einhundert verschiedene Umfragenachrichten versendet werden, wobei die Umfragenachrichten sich dadurch unterscheiden, dass der Wert des Auswahlparameters verschieden ist, d.h. der Text bzw. das Bild ist verschieden lang bzw. groß. Des Weiteren sind die Umfrageempfänger anhand von zumindest eines ersten Empfängermerkmales unterscheidbar. Im Folgenden wird beispielhaft davon ausgegangen, dass die Umfrageempfänger anhand des Alters unterscheidbar sind.

In dem neunten Schritt wird das zweite Reaktionsverhalten der Umfrageempfänger erfasst. Im Folgenden wird beispielhaft angenommen, dass erfasst wird, ob die Umfrageempfänger den Link angeklickt haben und ob auf der verlinkten Webseite eine Aktion ausgeführt wurde. In dem zehnten Schritt wird das zweite Reaktionsverhalten bewertet. Hierbei wird zu jeder versandten Umfragenachricht eine Bewertung eines einzelnen zweiten Reaktionsverhaltens des jeweiligen Umfrageempfängers, welcher die entsprechende Umfragenachricht erhalten hat, vorgenommen. Es wird für jede empfangene Umfragenachricht ein Umfragereaktionswert bestimmt, welcher bei einem Anklicken den Wert eins, bei einem Anklicken und einem Ausführen einer Aktion auf der verlinkten Webseite den Wert zwei, bei einem Anklicken und einem Ausführen zweier Aktionen den Wert drei, usw. annimmt.

In dem elften Schritt werden zu jeder empfangen Umfragenachricht ein Umfragedatensatz erstellt, welcher den Wert des ersten Empfängermerkmals, d.h. das Alter des Umfrageempfängers, d.h. den Wert des Auswahlparameters, d.h. die Textlänge bzw. die Bildgröße und den ermittelten Umfragereaktionswert der empfangenen Umfragenachricht, d.h. die Bewertung eines entsprechenden einzelnen zweiten Reaktionsverhaltens des jeweiligen Umfrageempfängers, welcher die Umfragenachricht empfangen hat, aufweist. Die Umfragedatensätze werden in dem zwölften Schritt in der Umfragedatenbank abgespeichert.

In dem dreizehnten Schritt wird die Finalnachricht an viele Finalempfänger, beispielsweise an einhundert Finalempfänger, gesendet. In einer ersten Variante des Verfahrens wird die Finalnachricht mittels des Zentralservers erzeugt. Hierbei wird ein Wert des ersten Empfängermerkmales des Finalempfängers, d.h. das Alter, aus der Empfängerdatenbank ausgelesen. Die Finalnachricht weist zumindest ein erstes Finalnachrichtenmerkmal auf, welches mittels einer Veränderung des Wertes des Auswahlparameters veränderbar ist.

Je nachdem, welcher der beiden Parameter als Auswahlparameter bestimmt wurde, wird das zu dem Auswahlparameter korrespondierende Nachrichtenmerkmal als Finalnachrichtenmerkmal ausgewählt. Ist zum Beispiel die Textlänge als Auswahlparameter bestimmt, ist das Finalnachrichtenmerkmal ein Text, vorzugsweise derselbe Text, welcher in den Testnachrichten enthalten ist. Ist hingegen die Bildgröße als Auswahlparameter bestimmt, ist das Finalnachrichtenmerkmal ein Bild, vorzugsweise dasselbe Bild, welches in den Testnachrichten enthalten ist. Im Folgenden wird davon ausgegangen, dass derselbe Text bzw. dasselbe Bild als Finalnachrichtenmerkmal ausgewählt wird. Das Finalnachrichtenmerkmal kann jedoch in einer anderen Variante einen anderen Inhalt als das Auswahlnachrichtenmerkmal oder das Nachrichtenmerkmal einer Testnachricht aufweisen. Wichtig für die Erfindung ist, dass das Finalnachrichtenmerkmal mittels einer Veränderung eines Wertes des Auswahlparameters veränderbar ist.

Bei dem Erzeugen der Finalnachricht wird der Wert des Auswahlparameters an den ausgelesenen Wert des ersten Empfängermerkmals angepasst. Das Anpassen kann derart erfolgen, dass ausgehend von einem Startwert des Auswahlparameters ein einzelner abgeschätzter Reaktionswert des Finalempfängers auf Basis der durch die Umfragedatenbank bereitgestellten Zuordnung ermittelt wird, zum Beispiel mittels des Approximationsmoduls. Nimmt der abgeschätzte Reaktionswert einen Wert unterhalb eines Zielreaktionswertes ein, so wird der Startwert des Auswahlparameters verändert. Dieser Vorgang wird solange wiederholt, bis der einzeln abgeschätzte Reaktionswert gleich oder größer als der Zielreaktionswert ist. Im Anschluss daran wird die Finalnachricht an den Finalempfänger gesendet. Ist nach einer vorgegebenen Anzahl an Wiederholungen des Vorgangs der einzeln abgeschätzte Reaktionswert niedriger als der Zielreaktionswert, so erhält der entsprechende Finalempfänger keine Finalnachricht. Dies wird für jeden der einhundert Finalempfänger durchgeführt.

Des Weiteren wird ein nichtflüchtiges computerlesbares Informationsspeicherungsmedium mit darauf gespeicherten Informationen vorgeschlagen, wobei die Informationen bei Ausführung durch einen Prozessor die Durchführung der Schritte eins bis dreizehn des vorgeschlagenen Verfahrens bewirken.

Weiterhin wird ein Kommunikationsnetzwerk zum Bestimmen einer Relevanz einer Finalnachricht für einen Finalempfänger vor einem Absenden der Finalnachricht vorgeschlagen. Das Kommunikationsnetzwerk umfasst einen ersten Testempfänger, einen zweiten Testempfänger, einen dritten Testempfänger und/oder einen vierten Testempfänger, einen ersten Umfrageempfänger, einen zweiten Umfrageempfänger und/oder einen dritten Umfrageempfänger, einen Finalempfänger, eine Empfängerdatenbank und eine Umfragedatenbank.

Das Kommunikationsnetzwerk umfasst weiterhin einen Zentralserver, der eine erste Testnachricht, eine zweite Testnachricht, eine dritte Testnachricht und eine vierte Testnachricht erzeugt, wobei jede Testnachricht zumindest ein erstes Nachrichtenmerkmal aufweist und das erste Nachrichtenmerkmal der ersten Testnachricht und das erste Nachrichtenmerkmal der zweiten Testnachrichtmittels mittels einer Veränderung eines jeweils korrespondierenden Wertes eines ersten Parameters und das erste Nachrichtenmerkmal der dritten Testnachricht und das erste Nachrichtenmerkmal der vierten Testnachricht mittels einer Veränderung eines jeweils korrespondierenden Wertes eines zweiten Parameters veränderbar sind und die jeweiligen korrespondierenden Werte des ersten Parameters verschieden sind und die jeweiligen korrespondierenden Werte des zweiten Parameters verschieden sind.

Das Kommunikationsnetzwerk umfasst weiterhin einen Sender, der die erste Testnachricht, die zweite Testnachricht, die dritte Testnachricht und die vierte Testnachricht an den ersten Testempfänger, zweiten Testempfänger, dritten Testempfänger und/oder den vierten Testempfänger sendet.

Das Kommunikationsnetzwerk umfasst weiterhin einen Trackingserver, der ein erstes Reaktionsverhaltens auf die Testnachrichtenerfasst.

Das Kommunikationsnetzwerk umfasst weiterhin ein Bewertungsmodul, das das erste Reaktionsverhalten bewertet und einen Einflusswert des ersten Parameters, welcher den Einfluss des ersten Parameters auf das erste Reaktionsverhalten erfasst, und einen Einflusswert des zweiten Parameters, welcher den Einfluss des zweiten Parameters auf das erste Reaktionsverhalten erfasst, bestimmt.

Das Kommunikationsnetzwerk umfasst weiterhin ein Auswahlmodul, das den Einflusswert des ersten Parameters mit dem Einflusswert des zweiten Parameters vergleicht und einen Auswahlparameter bestimmt, wobei der Auswahlparameter derjenige von den beiden Parametern, dem ersten Parameter und dem zweiten Parameter, ist, welcher den größeren Einfluss auf das erste Reaktionsverhalten hat.

Der Zentralserver erzeugt zumindest eine erste Umfragenachricht, eine zweite Umfragenachricht und bevorzugt eine dritte Umfragenachricht wobei die Umfragenachrichten jeweils zumindest ein erstes Auswahlnachrichtenmerkmal aufweisen, das jeweilige erste Auswahlnachrichtenmerkmal mittels einer Veränderung eines jeweiligen korrespondierenden Wertes des Auswahlparameters veränderbar ist und der Wert des Auswahlparameters des ersten Auswahlnachrichtenmerkmals der ersten Umfragenachricht von dem Wert des Auswahlparameters des ersten Auswahlnachrichtenmerkmals der zweiten Umfragenachricht verschieden ist.

Der Sender sendet die erste Umfragenachricht, die zweite Umfragenachricht und bevorzugt die dritte Umfragenachricht an zumindest den ersten Umfrageempfänger, den zweiten Umfrageempfänger und/oder den dritten Umfrageempfänger, wobei die Umfrageempfänger anhand von zumindest eines ersten Empfängermerkmals unterscheidbar sind.

Der Trackingserver erfasst ein zweites Reaktionsverhalten auf die Umfragenachrichten. Das Bewertungsmodul bewertet das zweite Reaktionsverhalten. Der Zentralserver erstellt einen jeweiligen Umfragedatensatz für zumindest zwei Umfrageempfänger, wobei der jeweilige Umfragedatensatz einen Wert des ersten Empfängermerkmals des jeweiligen Umfrageempfängers, eine Bewertung eines entsprechenden zweiten Reaktionsverhaltens des jeweiligen Umfrageempfängers und einen entsprechenden Wert des Auswahlparameters der von dem jeweiligen Umfrageempfänger empfangenen Umfragenachricht aufweist.

Der Zentralserver speichert mindestens zwei der Umfragedatensätze in der Umfragedatenbank auf dem Datenbankserver ab, wobei die Umfragedatenbank mittels der darin gespeicherten Umfragedatensätze eine Zuordnung der Werte des ersten Empfängermerkmals zu den Werten des Auswahlparameters und den Bewertungen des einzelnen zweiten Reaktionsverhaltens bereitstellt.

Der Sender sendet die Finalnachricht an den Finalempfänger und der Zentralserver liest einen Wert des ersten Empfängermerkmals des Finalempfängers aus der Empfängerdatenbank aus, wobei die Finalnachricht zumindest ein erstes Finalnachrichtenmerkmal aufweist, das erste Finalnachrichtenmerkmal mittels einer Veränderung eines korrespondierenden Wertes des Auswahlparameters veränderbar ist und der Wert des Auswahlparameters an den ausgelesenen Wert des ersten Empfängermerkmals des Finalempfängers mittels der durch die Umfragedatenbank bereitgestellte Zuordnung angepasst ist und eine Relevanz der Finalnachricht für den Finalempfänger vor einem Absenden der Finalnachricht in Form eines einzelnen abgeschätzten Reaktionswertes ermittelbar ist.

Weiterhin wird eine Sendeinfrastruktur zum Bestimmen einer Relevanz einer Finalnachricht für einen Finalempfänger vor einem Absenden der Finalnachricht in einem Kommunikationsnetzwerk vorgeschlagen. Die Sendeinfrastruktur umfasst eine Empfängerdatenbank und eine Umfragedatenbank.

Die Sendeinfrastruktur umfasst weiterhin einen Zentralserver, der eine erste Testnachricht, eine zweite Testnachricht, eine dritte Testnachricht und eine vierte Testnachricht erzeugt, wobei jede Testnachricht zumindest ein erstes Nachrichtenmerkmal aufweist und das erste Nachrichtenmerkmal der ersten Testnachricht und das erste Nachrichtenmerkmal der zweiten Testnachrichtmittels mittels einer Veränderung eines jeweils korrespondierenden Wertes eines ersten Parameters und das erste Nachrichtenmerkmal der dritten Testnachricht und das erste Nachrichtenmerkmal der vierten Testnachricht mittels einer Veränderung eines jeweils korrespondierenden Wertes eines zweiten Parameters veränderbar sind und die jeweiligen korrespondierenden Werte des ersten Parameters verschieden sind und die jeweiligen korrespondierenden Werte des zweiten Parameters verschieden sind.

Die Sendeinfrastruktur umfasst weiterhin einen Sender, der die erste Testnachricht, die zweite Testnachricht, die dritte Testnachricht und die vierte Testnachricht an einen ersten Testempfänger, zweiten Testempfänger, dritten Testempfänger und/oder einen vierten Testempfänger sendet.

Die Sendeinfrastruktur umfasst weiterhin einen Trackingserver, der ein erstes Reaktionsverhaltens auf die Testnachrichtenerfasst.

Die Sendeinfrastruktur umfasst weiterhin ein Bewertungsmodul, das das erste Reaktionsverhalten bewertet und einen Einflusswert des ersten Parameters, welcher den Einfluss des ersten Parameters auf das erste Reaktionsverhalten erfasst, und einen Einflusswert des zweiten Parameters, welcher den Einfluss des zweiten Parameters auf das erste Reaktionsverhalten erfasst, bestimmt.

Die Sendeinfrastruktur umfasst weiterhin ein Auswahlmodul, das den Einflusswert des ersten Parameters mit dem Einflusswert des zweiten Parameters vergleicht und einen Auswahlparameter bestimmt, wobei der Auswahlparameter derjenige von den beiden Parametern, dem ersten Parameter und dem zweiten Parameter, ist, welcher den größeren Einfluss auf das erste Reaktionsverhalten hat.

Der Zentralserver erzeugt zumindest eine erste Umfragenachricht, eine zweite Umfragenachricht und bevorzugt eine dritte Umfragenachricht wobei die Umfragenachrichten jeweils zumindest ein erstes Auswahlnachrichtenmerkmal aufweisen, das jeweilige erste Auswahlnachrichtenmerkmal mittels einer Veränderung eines jeweiligen korrespondierenden Wertes des Auswahlparameters veränderbar ist und der Wert des Auswahlparameters des ersten Auswahlnachrichtenmerkmals der ersten Umfragenachricht von dem Wert des Auswahlparameters des ersten Auswahlnachrichtenmerkmals der zweiten Umfragenachricht verschieden ist.

Der Sender sendet die erste Umfragenachricht, die zweite Umfragenachricht und bevorzugt die dritte Umfragenachricht an zumindest einen ersten Umfrageempfänger, einen zweiten Umfrageempfänger und/oder einen dritten Umfrageempfänger, wobei die Umfrageempfänger anhand von zumindest eines ersten Empfängermerkmals unterscheidbar sind.

Der Trackingserver erfasst ein zweites Reaktionsverhalten auf die Umfragenachrichten. Das Bewertungsmodul bewertet das zweite Reaktionsverhalten. Der Zentralserver erstellt einen jeweiligen Umfragedatensatz für zumindest zwei Umfrageempfänger, wobei der jeweilige Umfragedatensatz einen Wert des ersten Empfängermerkmals des jeweiligen Umfrageempfängers, eine Bewertung eines entsprechenden zweiten Reaktionsverhaltens des jeweiligen Umfrageempfängers und einen entsprechenden Wert des Auswahlparameters der von dem jeweiligen Umfrageempfänger empfangenen Umfragenachricht aufweist.

Der Zentralserver speichert mindestens zwei der Umfragedatensätze in der Umfragedatenbank auf dem Datenbankserver ab, wobei die Umfragedatenbank mittels der darin gespeicherten Umfragedatensätze eine Zuordnung der Werte des ersten Empfängermerkmals zu den Werten des Auswahlparameters und den Bewertungen des einzelnen zweiten Reaktionsverhaltens bereitstellt.

Der Sender sendet die Finalnachricht an den Finalempfänger und der Zentralserver liest einen Wert des ersten Empfängermerkmals des Finalempfängers aus der Empfängerdatenbank aus, wobei die Finalnachricht zumindest ein erstes Finalnachrichtenmerkmal aufweist, das erste Finalnachrichtenmerkmal mittels einer Veränderung eines korrespondierenden Wertes des Auswahlparameters veränderbar ist und der Wert des Auswahlparameters an den ausgelesenen Wert des ersten Empfängermerkmals des Finalempfängers mittels der durch die Umfragedatenbank bereitgestellte Zuordnung angepasst ist und eine Relevanz der Finalnachricht für den Finalempfänger vor einem Absenden der Finalnachricht in Form eines einzelnen abgeschätzten Reaktionswertes ermittelbar ist.

Weitere Vorteile, Merkmale und Einzelheiten der Erfindung ergeben sich aus der nachfolgenden Beschreibung zumindest eines bevorzugten Ausführungsbeispiels, auf die die Erfindung jedoch nicht beschränkt ist, sowie anhand der Figuren.

Diese zeigen in:
- Fig. 1: ein Kommunikationsnetzwerk mit zumindest einem Sender, mehreren Empfängern, einem Trackingserver, einer Empfängerdatenbank, einer Umfragedatenbank, einem Zentralserver und einem Datenbankserver;
- Fig. 2: die einzelnen Verfahrensschritte zur Kommunikation in dem Kommunikationsnetzwerk nach Fig. 1 in einer bevorzugten Reihenfolge;
- Fig. 3: das Kommunikationsnetzwerk nach Fig. 1 mit einem Approximationsmodul;
- Fig. 4: eine Verwendung von Umfragedatensätzen als Trainingsdatensätze;
- Fig. 5: eine Auswahl einer Finalnachricht aus einer Menge von Nachrichten.

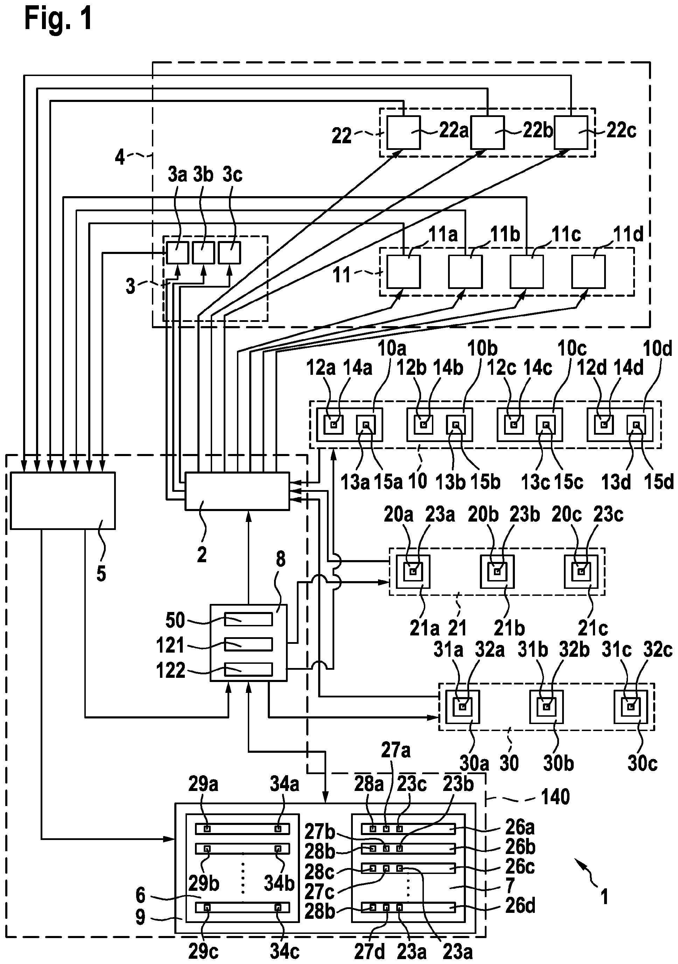

Fig. 1 zeigt ein Kommunikationsnetzwerk 1 mit zumindest einem Sender 2, mehreren Empfängern 4, darunter einen ersten Testempfänger 11a, einen zweiten Testempfänger 11b, einen dritten Testempfänger 11c und einen vierten Testempfänger 11d, einen ersten Umfrageempfänger 22a, einen zweiten Umfrageempfänger 22b, einen dritten Umfrageempfänger 22c, einen Finalempfänger 3a und weitere Finalempfänger 3b und 3c, einem Trackingserver 5, einer Empfängerdatenbank 6, einer Umfragedatenbank 7, einem Zentralserver 8, einem Bewertungsmodul 121, einem Auswahlmodul 122 und einem Datenbankserver 9, auf welchem die Empfängerdatenbank 6 und die Umfragedatenbank 7 gespeichert sind.

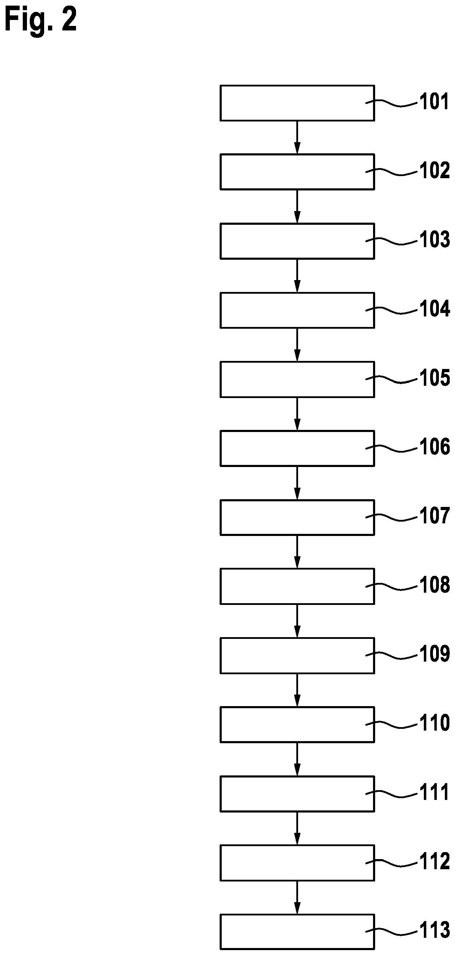

Fig. 2 zeigt die einzelnen Verfahrensschritte des vorgeschlagenen Verfahrens in einer bevorzugten Reihenfolge.

In einem ersten Schritt 101 des Verfahrens werden eine ersten Testnachricht 10a, eine zweite Testnachricht 10b, eine dritte Testnachricht 10c und eine vierte Testnachricht 10d mittels des Zentralservers 8 erzeugt, wobei jede Testnachricht 10a, 10b, 10c, 10d zumindest ein erstes Nachrichtenmerkmal 12a, 12b, 12c, 12d aufweist und das erste Nachrichtenmerkmal 12a der ersten Testnachricht 10a und das erste Nachrichtenmerkmal 12b der zweiten Testnachricht 10b mittels einer Veränderung eines jeweils korrespondierenden Wertes 14a, 14b eines ersten Parameters und das erste Nachrichtenmerkmal 12c der dritten Testnachricht 10c und das erste Nachrichtenmerkmal 12d der vierten Testnachricht 10d mittels einer Veränderung eines jeweils korrespondierenden Wertes 14c, 14d eines zweiten Parameters veränderbar sind und die jeweiligen korrespondierenden Werte 14a, 14b des ersten Parameters verschieden sind und die jeweiligen korrespondierenden Werte 14c, 14d des zweiten Parameters verschieden sind.

In einem zweiten Schritt 102 des Verfahrens werden die erste Testnachricht 10a, die zweite Testnachricht 10b, die dritte Testnachricht 10c und die vierte Testnachricht 10d an den ersten Testempfänger 11a, den zweiten Testempfänger 11b, den dritten Testempfänger 11c und/oder den vierten Testempfänger 11d mittels des Senders 2 gesendet.

In einem dritten Schritt 103 wird ein erstes Reaktionsverhalten auf die Testnachrichten 10a, 10b, 10c, 10d mittels des Trackingservers 5 erfasst.

In einem vierten Schritt 104 wird das erste Reaktionsverhalten mittels des Bewertungsmoduls 121 bewertet.

In einem fünften Schritt 105 wird ein Einflusswert des ersten Parameters, welcher den Einfluss des ersten Parameters auf das erste Reaktionsverhalten auf die Testnachrichten 10a, 10b, 10c, 10d erfasst, und ein Einflusswert des zweiten Parameters, welcher den Einfluss des zweiten Parameters auf das erste Reaktionsverhalten auf die Testnachrichten 10a, 10b, 10c, 10d erfasst, bestimmt. Diese Bestimmung erfolgt vorteilhaft mit dem Bewertungsmodul 121.

In einem sechsten Schritt 106 wird der Einflusswert des ersten Parameters mit dem Einflusswert des zweiten Parameters verglichen und ein Auswahlparameter 52 mittels des Auswahlmoduls 122 bestimmt, wobei als Auswahlparameter 52 derjenige von den beiden Parametern, dem ersten Parameter und dem zweiten Parameter, bestimmt wird, welcher den größeren Einfluss auf das erste Reaktionsverhalten hat. In einem siebten Schritt 107 wird zumindest eine erste Umfragenachricht 21a, eine zweite Umfragenachricht 21b und bevorzugt eine dritte Umfragenachricht 21c mittels des Zentralservers 8 erzeugt, wobei die Umfragenachrichten 21a, 21b, 21c jeweils zumindest ein erstes Auswahlnachrichtenmerkmal 20a, 20b, 20c aufweisen, wobei das jeweilige erste Auswahlnachrichtenmerkmal 20a, 20b, 20c mittels einer Veränderung eines jeweiligen korrespondierenden Wertes 23a, 23b, 23c des Auswahlparameters 52 veränderbar ist und der Wert 23a des Auswahlparameters 52 des ersten Auswahlnachrichtenmerkmals 20a der ersten Umfragenachricht 21a von dem Wert 23b des Auswahlparameters 52 des ersten Auswahlnachrichtenmerkmals 20b der zweiten Umfragenachricht 21b verschieden ist.

In einem achten Schritt 108 werden die erste Umfragenachricht 21a, die zweite Umfragenachricht 21b und bevorzugt die dritte Umfragenachricht 21c an zumindest den ersten Umfrageempfänger 22a, den zweiten Umfrageempfänger 22b und/oder den dritten Umfrageempfänger 22c mittels des Senders 2 gesendet, wobei die Umfrageempfänger 22a, 22b, 22c anhand von zumindest eines ersten Empfängermerkmals 51 unterscheidbar sind. Es kann vorgesehen sein, dass an die jeweiligen Umfrageempfänger 22a, 22b und 22c sowohl die erste Umfragenachricht 21a, die zweite Umfragenachricht 21b und/oder dritte Umfragenachricht 21c gesendet wird.

In einem neunten Schritt 109 wird ein zweites Reaktionsverhalten auf die Umfragenachrichten 21a, 21b, 21c mittels des Trackingservers 5 erfasst.

In einem zehnten Schritt 110 wird das zweite Reaktionsverhalten mittels des Bewertungsmoduls 121 bewertet.

In einem elften Schritt 111 wird ein jeweiliger Umfragedatensatz 26a, 26b, 26c, 26,d für zumindest den ersten Umfrageempfänger 22a, den zweiten Umfrageempfänger 22b und bevorzugt den dritten Umfrageempfänger 22c erstellt, wobei der jeweilige Umfragedatensatz 26a, 26b, 26c, 26d einen Wert 28a, 28b, 28c, 28b des ersten Empfängermerkmals 51 des jeweiligen Umfrageempfängers 22a, 22b, 22c, wie zum Beispiel ein Alter eines Benutzers des jeweiligen Umfrageempfängers 22a, 22b, 22c, eine Bewertung 27a, 27b, 27c, 27d eines entsprechenden einzelnen zweiten Reaktionsverhaltens des jeweiligen Umfrageempfängers 22a, 22b, 22c und einen entsprechenden Wert 23a, 23b, 23c des Auswahlparameters der von dem jeweiligen Umfrageempfänger 22a, 22b, 22c empfangenen Umfragenachricht 21a, 21b, 21c aufweist.

Für den Fall, dass zumindest einer der Umfrageempfänger 22a, 22b und/oder 22c mehr als eine Umfragenachricht empfangen hat, kann ein zusätzlicher Umfragedatensatz, beispielsweise der Umfragedatensatz 26d in der Umfragedatenbank 7 gespeichert werden, welcher den jeweiligen Wert 28a, 28b oder 28c des ersten Empfängermerkmals des entsprechenden Umfrageempfängers 22a, 22b oder 22c, welcher mehr als eine Umfragenachricht empfangen hat, die Bewertung 27d eines einzelnen zweiten Reaktionsverhaltens auf die zusätzlich empfangene Umfragenachricht 21a, 21b oder 21c des entsprechenden Umfrageempfängers 22a, 22b oder 22c und den Wert 23a, 23b oder 23c des Auswahlparameters der zusätzlich empfangenen Umfragenachricht 21a , 21b beziehungsweise 21c aufweist. In Fig. 2 ist das Beispiel dargestellt, bei welchem der Umfrageempfänger 22b die Umfragenachricht 21a zusätzlich zur Umfragenachricht 21b und die Umfrageempfänger 22a und 22c die Umfragenachricht 21c beziehungsweise 21a erhalten haben.

In einem zwölften Schritt 112 werden mindestens zwei der Umfragedatensätze 26a, 26b, 26c, 26d in der Umfragedatenbank 7 auf dem Datenbankserver 9 abgespeichert, wobei mittels der in der Umfragedatenbank 7 gespeicherten Umfragedatensätze 26a, 26b, 26c, 26d eine Zuordnung der Werte 28a, 28b, 28c, 28b des ersten Empfängermerkmals 51 zu den Werten 23a, 23b, 23c des Auswahlparameters 52 und den Bewertungen 27a, 27b, 27c, 27d des einzelnen zweiten Reaktionsverhaltens bereitgestellt wird.

In einem dreizehnten Schritt 113 wird eine Finalnachricht 30a mittels des Senders 2 gesendet, wobei ein Wert 29a des ersten Empfängermerkmals 51 des Finalempfängers 3a aus der Empfängerdatenbank 6 ausgelesen wird, die Finalnachricht 30a zumindest ein erstes Finalnachrichtenmerkmal 31a aufweist, wobei das erste Finalnachrichtenmerkmal 31a mittels einer Veränderung eines korrespondierenden Wertes 32a des Auswahlparameters 52 veränderbar ist, und der Wert 32a des Auswahlparameters 52 an den ausgelesenen Wert 29a des ersten Empfängermerkmals 51 des Finalempfängers 3a mittels der durch die Umfragedatenbank bereitgestellten Zuordnung angepasst wird und eine Relevanz der Finalnachricht 30a für den Finalempfänger 3a vor einem Absenden der Finalnachricht 30a in Form eines einzelnen abgeschätzten Reaktionswertes 53 des Finalempfängers 3a ermittelt wird.

In gleicher Weise können auch weitere Finalnachrichten 30b und 30c mit jeweils einem Finalnachrichtenmerkmal 31b und 31c an weitere Finalempfänger 3b und 3c mittels des Senders 2 gesendet werden, wobei entsprechende Werte 32b und 32c des zum jeweiligen Finalnachrichtenmerkmal 31b und 31c korrespondierenden Auswahlparameters 52 an die Werte 29b und 29c des ersten Empfängermerkmals der weiteren Finalempfänger 3b und 3c angepasst werden und eine jeweilige Relevanz der Finalnachrichten 30b und 30c für die Finalempfänger 3b und 3c vor einem Absenden der Finalnachrichten 30b und 30c in Form eines einzelnen abgeschätzten Reaktionsverhaltens 53 der Finalempfänger 3b und 3c ermittelt werden. Bevorzugt können die jeweiligen Finalnachrichten 30a, 30b und 30c weitere finalempfängerspezifische Daten 34a, 34b und 34c aufweisen, welche in der Empfängerdatenbank 6 dem jeweiligen Finalempfänger 3a, 3b und 3c zugeordnet sind. Die individuellen Daten 34a, 34b und 34c können vorteilhaft bei einer Erzeugung der Finalnachrichten 30a, 30b und 30c mittels des Zentralservers 8 verwendet werden.

Die Schritte eins 101 bis dreizehn 113 können in der oben beschriebenen Reihenfolge ausgeführt werden. Möglich ist auch, dass eine andere Reihenfolge der Schritte ausgeführt wird. Die oben vorgestellte Reihenfolge der Schritte eins bis dreizehn ist lediglich eine besonders vorteilhafte Ausgestaltung des vorgeschlagenen Verfahrens.

Besonders vorteilhaft ist der Sender 2 als Versandserver ausgebildet. Mittels des Versandservers 2 werden die Nachrichten, d.h. die Testnachrichten 10, die Umfragenachrichten 21 und die Finalnachricht 30a und bevorzugt die weiteren Finalnachrichten 30b und 30c, an die entsprechenden Empfänger, d.h. die Testempfänger 11, die Umfrageempfänger 22 und die Finalempfänger 3 versendet. Der Sender 2, der Trackingserver 5, der Zentralserver 8 und der Datenbankserver 9 sind bevorzugt in einem Gebäude angeordnet und die Empfänger außerhalb dieses Gebäudes angeordnet. Insbesondere sind die Empfänger räumlich getrennt von dem Sender 2, bevorzugt mindestens einen Kilometer entfernt von dem Sender 2, angeordnet.

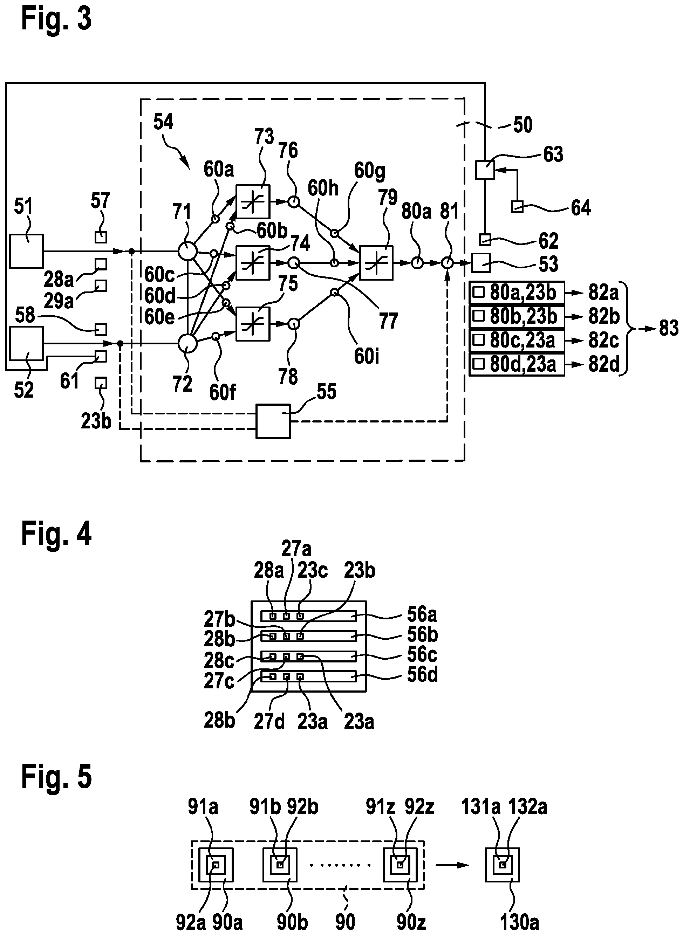

Fig. 3 zeigt ein Approximationsmodul 50 des Kommunikationsnetzwerkes 1. Eine besondere Ausgestaltung des Verfahrens sieht vor, dass mittels des Approximationsmoduls 50 ein funktionaler Zusammenhang zwischen den Werten 28a, 28b, 28c, 28b des ersten Empfängermerkmals 51 der Umfrageempfänger 22a, 22b, 22c, den Bewertungen 27a, 27b, 27c, 27d des entsprechenden einzelnen zweiten Reaktionsverhaltens der Umfrageempfänger 22a, 22b, 22c und den entsprechenden Werten 23a, 23b, 23c des Auswahlparameters der von den Umfrageempfängern 22a, 22b, 22c empfangenen Umfragenachrichten 21a, 21b, 21c approximiert wird. Das Approximationsmodul 50 kann ein neuronales Netz 54 und/oder eine Polynomfunktion 55 aufweisen. Hierbei können besonders vorteilhaft die einzelnen Umfragedatensätze 26a, 26b, 26c und 26d aus der Umfragedatenbank 7 ausgelesen und als Trainingsdatensätze 56a, 56b, 56c und 56d des neuronalen Netzes 54 oder der Polynomfunktion 55, welche zumindest ein zusammengesetztes Polynom aufweist, verwendet werden, wie in Fig. 4 gezeigt ist.

Dabei werden bevorzugt die Trainingsdatensätze 56a, 56b, 56c und 56d jeweils aufgeteilt und die jeweiligen Werte 28a, 28b, 28c und 28b des ersten Empfängermerkmales 51 in Form eines ersten Eingangssignals 57 elektronisch an einen ersten Eingang 71 des neuronalen Netzes 54 und die jeweiligen Werte 23b, 23b, 23a und 23a des Auswahlparameters 52 in Form eines zweiten Eingangssignals 58 elektronisch an einen zweiten Eingang 72 des neuronalen Netzes 54 für ein Training des neuronalen Netzes 54 geleitet.

Das neuronale Netz 54 weist bevorzugt mehrere Parameter 60a, 60b, 60c, 60d, 60e, 60f, 60g, 60h und 60i auf. Je nachdem welche Werte diese Parameter annehmen, wird ausgehend von dem ersten Eingangssignal 57 und dem zweiten Eingangssignal 58 ein einzelner abgeschätzter Reaktionswert 53 berechnet. Dies soll im Folgenden anhand des Trainingsdatensatzes 56a veranschaulicht werden.

Zur Berechnung eines Ausgangswertes 80a wird zum einen der Wert 28a als erstes Eingangssignal 57 zu dem ersten Eingang 71 elektronisch weitergeleitet und zum anderen der Wert 23b als zweites Eingangssignal 58 zu dem zweiten Eingang 72 elektronisch weitergeleitet. Der Wert 28a wird anschließend mit dem Wert des Parameters 60a und der Wert 23b mit dem Wert des Parameters 60b multipliziert und die jeweiligen Produkte zu einer Summe aufsummiert und diese Summe an eine erste Tangens-Hyperbolicus-Funktion 73 als Eingangswert elektronisch weitergeleitet. Ausgehend von diesem Eingangswert wird ein erster Funktionswert 76 der Tangens-Hyperbolicus-Funktion 73 berechnet.

In gleicher Weise wird der Wert 28a anschließend mit dem Wert des Parameters 60c und der Wert 23b mit dem Wert des Parameters 60d multipliziert und die jeweiligen Produkte zu einer Summe aufsummiert und diese Summe an eine zweite Tangens-Hyperbolicus-Funktion 74 als Eingangswert elektronisch weitergeleitet. Ausgehend von diesem Eingangswert wird ein zweiter Funktionswert 77 der zweiten Tangens-Hyperbolicus-Funktion 74 berechnet.

In gleicher Weise wird der Wert 28a anschließend mit dem Wert des Parameters 60e und der Wert 23b mit dem Wert des Parameters 60f multipliziert und die jeweiligen Produkte zu einer Summe aufsummiert und diese Summe an eine dritte Tangens-Hyperbolicus-Funktion 75 als Eingangswert elektronisch weitergeleitet. Ausgehend von diesem Eingangswert wird ein dritter Funktionswert 78 der dritten Tangens-Hyperbolicus-Funktion 75 berechnet.

Die Funktionswerte 76, 77 und 78 werden anschließend jeweils mit den Werten der Parameter 60g, 60h und 60i multipliziert und zu einer Summe aufsummiert und diese Summe an eine vierte Tangens-Hyperbolicus-Funktion 79 als Eingangswert elektronisch weitergeleitet. Ausgehend von diesem Eingangswert wird ein vierter Funktionswert 80a der vierten Tangens-Hyperbolicus-Funktion 79 berechnet. Dieser errechnete Funktionswert 80a wird an einen Ausgang 81 des neuronalen Netzes 54 elektronisch weitergeleitet. Der errechnete Funktionswert 80a entspricht einem einzelnen abgeschätzten Reaktionswert 53 für den Trainingsdatensatz 56a und wird an dem Ausgang 81 elektronisch ausgelesen.

In gleicher Weise kann bei konstanten Werten der Parameter 60a, 60b, 60c, 60d, 60e, 60f, 60g, 60h und 60i für die Trainingsdatensätze 56b, 56c und 56d ausgehend von den Werten 28b, 28c und 28b als erstes Eingangssignal 57 und den Werten 23b, 23a und 23a als zweites Eingangssignal 58 jeweils ein Ausgangswert 80b, 80c und 80d berechnet werden.

Bei einem Training des neuronalen Netzes 54 wird für jeden errechneten Ausgangswert 80a, 80b, 80c und 80d jeweils ein Abweichungswert 82a, 82b, 82c und 82d in Form einer Differenz zwischen den Bewertungen 27a, 27b, 27c und 27d des entsprechenden einzelnen zweiten Reaktionsverhaltens der Umfrageempfänger 22a, 22b und 22c und den errechneten Ausgangswerten 80a, 80b, 80c und 80d berechnet. Die Abweichungswerte 82a, 82b, 82c und 82d werden bevorzugt zu einer mittleren Abweichung 83 aufsummiert. Die mittlere Abweichung 83 wird besonders vorteilhaft jeweils nach den Parametern 60a, 60b, 60c, 60d, 60e, 60f, 60g, 60h und 60i des neuronalen Netzes 54 abgeleitet und jeweils ein Ableitungswert bestimmt und für jeden Parameter ein jeweiliger Änderungswert des Parameters bestimmt, welcher bevorzugt direkt proportional zu dem jeweiligen Ableitungswert ist.

Im Anschluss daran werden die einzelnen Parameter des neuronalen Netzes 54 um den jeweiligen Änderungswert verändert. Nach der Änderung der Parameter 60a, 60b, 60c, 60d, 60e, 60f, 60g, 60h und 60i des neuronalen Netzes 54 werden erneut die Ausgangswerte 80a, 80b, 80c und 80d und Abweichungswerte 82a, 82b, 82c und 82d auf dieselbe Weise wie oben beschrieben berechnet und es wird erneut eine Änderung der Parameter 60a, 60b, 60c, 60d, 60e, 60f, 60g, 60h und 60i vorgenommen. Dieser Vorgang wird solange wiederholt, bis die Abweichungswerte 82a, 82b, 82c und 82d kleiner als ein vorgegebener Wert sind oder ein Betrag der Summe der Abweichungswerte 82a, 82b, 82c und 82d kleiner als ein vorgegebener Wert ist. Dieses iterative Verfahren ist eine bevorzugte Variante des Trainings des neuronalen Netzes. Andere Varianten des Trainings können eine Hebb-Regel, eine Delta-Regel, ein Backpropagation-Training und/oder ein kompetitives Lernen umfassen.

Das Training des Approximationsmoduls entspricht dem Approximieren des funktionalen Zusammenhangs zwischen den Werten 28a, 28b, 28c, 28b des ersten Empfängermerkmals 51 der Umfrageempfänger 22a, 22b, 22c, den Bewertungen 27a, 27b, 27c, 27d des entsprechenden einzelnen zweiten Reaktionsverhaltens der Umfrageempfänger 22a, 22b, 22c und den entsprechenden Werten 23a, 23b, 23c des Auswahlparameters der von den Umfrageempfängern 22a, 22b, 22c empfangenen Umfragenachrichten 21a, 21b, 21c.

In dem dreizehnten Schritt 113 wird der Wert des zum Finalnachrichtenmerkmal 31a korrespondierenden Auswahlparameters 52 an den Wert 29a des ersten Empfängermerkmals 51 des Finalempfängers 3a angepasst.

In einer ersten Variante kann das Anpassen mittels des Appoximationsmoduls 50 durchgeführt werden. Dies kann beispielsweise derart erfolgen, dass ausgehend von dem Wert 29a des ersten Empfängermerkmales 51 des Finalempfängers 3a und einem Startwert 61 des Auswahlparameters 52 mittels des neuronalen Netzes 54 bzw. der Polynomfunktion 55 ein erster Ausgangswert errechnet wird und an den Ausgang 81 als erster einzeln abgeschätzter Reaktionswert 62 des Finalempfängers 3a weitergeleitet wird. Weicht dieser einzeln abgeschätzte Reaktionswert 62 von einem vorgegebenen Zielreaktionswert 64 ab, ist beispielsweise vom Betrag her kleiner als der vorgegebene Zielreaktionswert 64, so wird der Startwert 61 des Auswahlparameters 52 mittels eines Iterationsmoduls 63 verändert und erneut ein einzeln abgeschätzter Reaktionswert 62 mittels des Approximationsmoduls 50 errechnet.

Dieser Vorgang wird bevorzugt solange wiederholt, bis der einzeln abgeschätzte Reaktionswert 62 vom Betrag her größer als oder im Rahmen eines Toleranzbereiches von beispielsweise einem Prozent ähnlich groß wie der Zielreaktionswert 64 ist und damit an den Zielreaktionswert 64 angepasst ist. Dabei wird der Startwert 61 des Auswahlparameters 52 als zweites Eingangssignal 58 mittels des Iterationsmoduls 63 bei jeder erneuten Berechnung des einzelnen abgeschätzten Reaktionswertes 62 neu berechnet und der Wert 29a des ersten Empfängermerkmals 51 des Finalempfängers 3a als erstes Eingangssignal 57 konstant gehalten. Der Startwert 61 der letzten Iteration entspricht dem angepassten Wert 32a des zum Finalnachrichtenmerkmal 31a korrespondierenden Auswahlparameters 52. Mit Hilfe des angepassten Wertes 32a kann mittels des Versandservers 8 die Finalnachricht 3a erzeugt werden, wobei das Finalnachrichtenmerkmal 31a in Abhängigkeit des angepassten Wertes 32a ausgebildet ist.

Mit der in der oben beschriebenen speziellen Ausgestaltung des Verfahrens, insbesondere bei einer Anpassung des Startwertes 61 des Auswahlparameters 52 an den Wert 29a des ersten Empfängermerkmals 51 des Finalempfängers 3a, wird im Sinne der Erfindung der einzeln abgeschätzte Reaktionswert des Finalempfängers 3a ermittelt, zum Beispiel in Form des einzelnen abgeschätzten Umfragereaktionswertes 62 des Finalempfängers 3a.

In einer zweiten Variante erfolgt das Anpassen des zum Finalnachrichtenmerkmal 131a korrespondierenden Wertes 132a des Auswahlparameters 52 an den Wert 29a des ersten Empfängermerkmals 51 des Finalempfängers 3a mittels eines Auswählens der Finalnachricht 130a. Diese Variante sieht vor, dass die Finalnachricht 130a aus einer Menge 90 von Nachrichten 90a, 90b, 90z, welche vorzugsweise von mehreren Informationsquellen stammen, ausgewählt wird, vgl. Fig. 5. Die Nachrichten 90a, 90b, 90z weisen jeweils zumindest ein Nachrichtenmerkmal 91a, 91b, 91z auf und die jeweiligen Nachrichtenmerkmale 91a, 91b, 91z weisen unterschiedliche Werte 92a, 92b, 92z des Auswahlparameters 52 auf. Der Wert 132a des Auswahlparameters 52 der Finalnachricht 130a ist an den Wert 29a des ersten Empfängermerkmals 51 angepasst.

Vorzugsweise wird als Finalnachricht 130a diejenige der Nachrichten 90a, 90b bis 90z ausgewählt, dessen Wert 92a, 92b oder 92z des Auswahlparameters 52 dem Startwert 61 der letzten iterativen Berechnung des einzelnen abgeschätzten Reaktionswertes 62 des Finalempfängers 3a am nächsten ist. Der Startwert 61 der letzten iterativen Berechnung des einzelnen abgeschätzten Reaktionswertes 62 entspricht dem Wert 132a des zum Finalnachrichtenmerkmal 131a korrespondierenden Auswahlparameters 52 der Finalnachricht 130a, welcher an den Wert 29a des ersten Empfängermerkmals 51 des Finalempfängers 3a angepasst ist.

Fig. 2 und Fig. 3 zeigen weiterhin Kommunikationsnetzwerk 1 zum Bestimmen einer Relevanz einer Finalnachricht 30a für einen Finalempfänger 3a vor einem Absenden der Finalnachricht 30a. Das Kommunikationsnetzwerk umfasst einen ersten Testempfänger 11a, einen zweiten Testempfänger 11b, einen dritten Testempfänger 11c und/oder einen vierten Testempfänger 11d, einen ersten Umfrageempfänger 22a, einen zweiten Umfrageempfänger 22b und/oder einen dritten Umfrageempfänger 22c, einen Finalempfänger 3a, eine Empfängerdatenbank 6, eine Umfragedatenbank 7.

Das Kommunikationsnetzwerk umfasst weiterhin einen Zentralserver 8, der eine erste Testnachricht 10a, eine zweite Testnachricht 10b, eine dritte Testnachricht 10c und eine vierte Testnachricht 10d erzeugt, wobei jede Testnachricht 10a, 10b, 10c, 10d zumindest ein erstes Nachrichtenmerkmal 12a, 12b, 12c, 12d aufweist und das erste Nachrichtenmerkmal 12a der ersten Testnachricht 10a und das erste Nachrichtenmerkmal 12b der zweiten Testnachricht 10b mittels einer Veränderung eines jeweils korrespondierenden Wertes 14a, 14b eines ersten Parameters und das erste Nachrichtenmerkmal 12c der dritten Testnachricht 10c und das erste Nachrichtenmerkmal 12d der vierten Testnachricht 10d mittels einer Veränderung eines jeweils korrespondierenden Wertes 14c, 14d eines zweiten Parameters veränderbar sind und die jeweiligen korrespondierenden Werte 14a, 14b des ersten Parameters und die jeweiligen korrespondierenden Werte 14c, 14d des zweiten Parameters verschieden sind.

Das Kommunikationsnetzwerk umfasst weiterhin einen Sender 2, der die erste Testnachricht 10a, die zweite Testnachricht 10b, die dritte Testnachricht 10c und die vierte Testnachricht 10d an den ersten Testempfänger 11a, zweiten Testempfänger 11b, dritten Testempfänger 11c und/oder den vierten Testempfänger 11d sendet.

Das Kommunikationsnetzwerk umfasst weiterhin einen Trackingserver 5, der ein erstes Reaktionsverhaltens auf die Testnachrichten 10a, 10b, 10c, 10d erfasst.

Das Kommunikationsnetzwerk umfasst weiterhin ein Bewertungsmodul 121, das das erste Reaktionsverhaltens bewertet und einen Einflusswert des ersten Parameters, welcher den Einfluss des ersten Parameters auf das erste Reaktionsverhalten erfasst, und einen Einflusswert des zweiten Parameters, welcher den Einfluss des zweiten Parameters auf das erste Reaktionsverhalten erfasst, bestimmt.

Das Kommunikationsnetzwerk umfasst weiterhin ein Auswahlmodul 122, das den Einflusswert des ersten Parameters mit dem Einflusswert des zweiten Parameters vergleicht und einen Auswahlparameter 52 bestimmt, wobei der Auswahlparameter 52 derjenige von den beiden Parametern, dem ersten Parameter und dem zweiten Parameter, ist, welcher den größeren Einflusswert hat.

Der Zentralserver 8 erzeugt zumindest eine erste Umfragenachricht 21a, eine zweite Umfragenachricht 21b und bevorzugt eine dritte Umfragenachricht 21c, wobei die Umfragenachrichten 21a, 21b, 21c jeweils zumindest ein erstes Auswahlnachrichtenmerkmal 20a, 20b, 20c aufweisen, das jeweilige erste Auswahlnachrichtenmerkmal 20a, 20b, 20c mittels einer Veränderung eines jeweiligen korrespondierenden Wertes 23a, 23b, 23c des Auswahlparameters 52 veränderbar ist und der Wert 23a des Auswahlparameters 52 des ersten Auswahlnachrichtenmerkmals 20a der ersten Umfragenachricht 21a von dem Wert 23b des Auswahlparameters des ersten Auswahlnachrichtenmerkmals 20b der zweiten Umfragenachricht 21b verschieden ist.

Der Sender 2 sendet die erste Umfragenachricht 21a, die zweite Umfragenachricht 1b und bevorzugt die dritte Umfragenachricht 21c an zumindest den ersten Umfrageempfänger 22a, den zweiten Umfrageempfänger 22b und/oder den dritten Umfrageempfänger 22c, wobei die Umfrageempfänger 22a, 22b, 22c anhand von zumindest eines ersten Empfängermerkmals 51 unterscheidbar sind.

Der Trackingserver 5 erfasst ein zweites Reaktionsverhalten auf die Umfragenachrichten 21a, 21b, 21c. Das das Bewertungsmodul 121 bewertet das zweite Reaktionsverhalten. Der Zentralserver 8 erstellt einen jeweiligen Umfragedatensatz 26a, 26b, 26c, 26,d für zumindest zwei Umfrageempfänger 22a, 22b, 22c, wobei der jeweilige Umfragedatensatz 26a, 26b, 26c, 26,d einen Wert 28a, 28b, 28c, 28b des ersten Empfängermerkmals 51 des jeweiligen Umfrageempfängers 22a, 22b, 22c, eine Bewertung 27a, 27b, 27c, 27d eines entsprechenden zweiten Reaktionsverhaltens des jeweiligen Umfrageempfängers 22a, 22b, 22c und einen entsprechenden Wert 23a, 23b, 23c des Auswahlparameters der von dem jeweiligen Umfrageempfänger 22a, 22b, 22c empfangenen Umfragenachricht 21a, 21b, 21c aufweist.

Zentralserver 8 speichert mindestens zwei der Umfragedatensätze 26a, 26b, 26c, 26d in der Umfragedatenbank 7 auf dem Datenbankserver 9 ab, wobei die Umfragedatenbank 7 mittels der darin gespeicherten Umfragedatensätze 26a, 26b, 26c, 26d eine Zuordnung der Werte 28a, 28b, 28c, 28b des ersten Empfängermerkmals 51 zu den Werten 23a, 23b, 23c des Auswahlparameters 52 und den Bewertungen 27a, 27b, 27c, 27d des einzelnen zweiten Reaktionsverhaltens bereitstellt.

Der Sender 2 sendet die Finalnachricht 30a an den Finalempfänger 3a und der Zentralserver 8 liest einen Wert 29a des ersten Empfängermerkmals 51 des Finalempfängers 3a aus der Empfängerdatenbank 6 aus, wobei die Finalnachricht 30a zumindest ein erstes Finalnachrichtenmerkmal 31a aufweist, das erste Finalnachrichten-merkmal 31a mittels einer Veränderung eines korrespondierenden Wertes 32a des Auswahlparameters 52 veränderbar ist und der Wert 32a des Auswahlparameters 52 an den ausgelesenen Wert 29a des ersten Empfängermerkmals 51 des Finalempfängers 3a mittels der durch die Umfragedatenbank 7 bereitgestellte Zuordnung angepasst ist und eine Relevanz der Finalnachricht 30a für den Finalempfänger 3a vor einem Absenden der Finalnachricht 30a in Form eines einzelnen abgeschätzten Reaktionswertes 53 ermittelbar ist.

## Patentansprüche

1. Verfahren zur Kommunikation in einem Kommunikationsnetzwerk (1) mit zumindest einem Sender (2) und zumindest einem Finalempfänger (3a), wobei von dem Sender (2) zumindest eine Finalnachricht zu dem Finalempfänger (3a) gesendet wird und eine Relevanz der Finalnachricht für den Finalempfänger ermittelt wird,
**dadurch gekennzeichnet,**
**dass** das Kommunikationsnetzwerk (1) zumindest einen Testempfänger (11a), einen ersten Umfrageempfänger (22a), einen zweiten Umfrageempfänger (22b), den Finalempfänger (3a), einen Trackingserver (5), eine Empfängerdatenbank (6), eine Umfragedatenbank (7), ein Bewertungsmodul (121), ein Auswahlmodul (122) und einen Zentralserver (8) aufweist und eine Relevanz einer Finalnachricht (30a) für den Finalempfänger (3a) vor einem Absenden der Finalnachricht (30a) ermittelt wird mit den folgenden Schritten:
- Erzeugen einer ersten Testnachricht (10a), einer zweiten Testnachricht (10b), einer dritten Testnachricht (10c) und einer vierten Testnachricht (10d) mittels des Zentralservers (8), wobei jede Testnachricht (10a, 10b, 10c, 10d) zumindest ein erstes Nachrichtenmerkmal (12a, 12b, 12c, 12d) aufweist und das erste Nachrichtenmerkmal (12a) der ersten Testnachricht (10a) und das erste Nachrichtenmerkmal (12b) der zweiten Testnachricht (10b) mittels einer Veränderung eines jeweils korrespondierenden Wertes (14a, 14b) eines ersten Parameters und das erste Nachrichtenmerkmal (12c) der dritten Testnachricht (10c) und das erste Nachrichtenmerkmal (12d) der vierten Testnachricht (10d) mittels einer Veränderung eines jeweils korrespondierenden Wertes (14c, 14d) eines zweiten Parameters veränderbar sind und die jeweiligen korrespondierenden Werte (14a, 14b) des ersten Parameters verschieden sind und die jeweiligen korrespondierenden Werte (14c, 14d) des zweiten Parameters verschieden sind;
- Senden der ersten Testnachricht (10a), der zweiten Testnachricht (10b), der dritten Testnachricht (10c) und der vierten Testnachricht (10d) an einen ersten Testempfänger (11a), einen zweiten Testempfänger (11b), einen dritten Testempfänger (11c) und/oder einen vierten Testempfänger (11d) mittels des Senders (2);
- Erfassen eines ersten Reaktionsverhaltens auf die Testnachrichten (10a, 10b, 10c, 10d) mittels des Trackingservers (5);
- Bewerten des ersten Reaktionsverhaltens mittels des Bewertungsmoduls (121);
- Bestimmen eines Einflusswertes des ersten Parameters, welcher den Einfluss des ersten Parameters auf das erste Reaktionsverhalten auf die Testnachrichten (10a, 10b, 10c, 10d) erfasst, und eines Einflusswertes des zweiten Parameters, welcher den Einfluss des zweiten Parameters auf das erste Reaktionsverhalten auf die Testnachrichten (10a, 10b, 10c, 10d) erfasst,
- Vergleichen des Einflusswertes des ersten Parameters mit dem Einflusswert des zweiten Parameters und bestimmen eines Auswahlparameters (52) mittels des Auswahlmoduls (122), wobei als Auswahlparameter (52) derjenige von den beiden Parametern, dem ersten Parameter und dem zweiten Parameter, bestimmt wird, welcher den größeren Einfluss auf das erste Reaktionsverhalten hat;
- Erzeugen zumindest einer ersten Umfragenachricht (21a), einer zweiten Umfragenachricht (21b) und bevorzugt einer dritten Umfragenachricht (21c) mittels des Zentralservers (8), wobei die Umfragenachrichten (21a, 21b, 21c) jeweils zumindest ein erstes Auswahlnachrichtenmerkmal (20a, 20b, 20c) aufweisen, wobei das jeweilige erste Auswahlnachrichtenmerkmal (20a, 20b, 20c) mittels einer Veränderung eines jeweiligen korrespondierenden Wertes (23a, 23b, 23c) des Auswahlparameters (52) veränderbar ist und der Wert (23a) des Auswahlparameters (52) des ersten Auswahlnachrichtenmerkmals (20a) der ersten Umfragenachricht (21a) von dem Wert (23b) des Auswahlparameters (52) des ersten Auswahlnachrichtenmerkmals (20b) der zweiten Umfragenachricht (21b) verschieden ist;
- Senden der ersten Umfragenachricht (21a), der zweiten Umfragenachricht (21b) und bevorzugt der dritten Umfragenachricht (21c) an zumindest einen ersten Umfrageempfänger (22a), einen zweiten Umfrageempfänger (22b) und/oder einen dritten Umfrageempfänger (22c) mittels des Senders (2), wobei die Umfrageempfänger (22a, 22b, 22c) anhand von zumindest eines ersten Empfängermerkmals (51) unterscheidbar sind, wobei das erste Empfängermerkmal ein für eine Klassifizierung geeignetes Merkmal, insbesondere ein Alter, ist;
- Erfassen eines zweiten Reaktionsverhaltens auf die Umfragenachrichten (21a, 21b, 21c) mittels des Trackingservers (5);
- Bewerten des zweiten Reaktionsverhaltens mittels des Bewertungsmoduls (121);
- Erstellen eines jeweiligen Umfragedatensatzes (26a, 26b, 26c, : 26d) für zumindest zwei Umfrageempfänger (22a, 22b, 22c), wobei der jeweilige Umfragedatensatz (26a, 26b, 26c, 26d) einen Wert (28a, 28b, 28c, 28b) des ersten Empfängermerkmals (51) des jeweiligen Umfrageempfängers (22a, 22b, 22c), eine Bewertung (27a, 27b, 27c, 27d) eines entsprechenden einzelnen zweiten Reaktionsverhaltens des jeweiligen Umfrageempfängers (22a, 22b, 22c) und einen entsprechenden Wert (23a, 23b, 23c) des Auswahlparameters der von dem jeweiligen Umfrageempfänger (22a, 22b, 22c) empfangenen Umfragenachricht (21a, 21b, 21c) aufweist;
- Abspeichern von mindestens zwei der Umfragedatensätze (26a, 26b, 26c, 26d) in der Umfragedatenbank (7) auf dem Datenbankserver (9), wobei mittels der in der Umfragedatenbank (7) gespeicherten Umfragedatensätze (26a, 26b, 26c, 26d) eine Zuordnung der Werte (28a, 28b, 28c, 28b) des ersten Empfängermerkmals (51) zu den Werten (23a, 23b, 23c) des Auswahlparameters (52) und den Bewertungen (27a, 27b, 27c, 27d) des einzelnen zweiten Reaktionsverhaltens bereitgestellt wird;
- wobei das Kommunikationsnetzwerk (1) ein Approximationsmodul (50) aufweist, wobei mittels des Approximationsmoduls (50) ein funktionaler Zusammenhang zwischen den Werten (28a, 28b, 28c, 28b) des ersten Empfängermerkmals der Umfrageempfänger (22a, 22b, 22c), den Bewertungen (27a, 27b, 27c, 27d) des entsprechenden einzelnen zweiten Reaktionsverhaltens der Umfrageempfänger (22a, 22b, 22c) und den entsprechenden Werten (23a, 23b, 23c) des Auswahlparameters der von den Umfrageempfängern (22a, 22b, 22c) empfangenen Umfragenachrichten (21a, 21b, 21c) approximiert wird;
- Senden der Finalnachricht (30a) mittels des Senders (2), wobei ein Wert (29a) des ersten Empfängermerkmals (51) des Finalempfängers (3a) aus der Empfängerdatenbank (6) ausgelesen wird, die Finalnachricht (30a) zumindest ein erstes Finalnachrichtenmerkmal (31a) aufweist, das erste Finalnachrichtenmerkmal (31a) mittels einer Veränderung eines korrespondierenden Wertes (32a) des Auswahlparameters (52) veränderbar ist, der Wert (32a) des Auswahlparameters (52) an den ausgelesenen Wert (29a) des ersten Empfängermerkmals (51) des Finalempfängers (3a) mittels der durch die Umfragedatenbank bereitgestellte Zuordnung angepasst wird, wobei der approximierte funktionale Zusammenhang zum Anpassen des Wertes (32a) des Auswahlparameters (52) verwendet wird, und eine Relevanz der Finalnachricht (30a) für den Finalempfänger (3a) vor einem Absenden der Finalnachricht (30a) in Form eines einzelnen abgeschätzten Reaktionswertes (53) des Finalempfängers (3a) ermittelt wird, wobei ausgehend von dem Wert (29a) des ersten Empfängermerkmales (51) des Finalempfängers (3a) und einem Wert (32a) des Auswahlparameters (52) mittels des Approximationsmoduls (50) ein Ausgangssignal, welches dem einzelnen abgeschätzten Reaktionswert (53) entspricht, berechnet wird und die Finalnachricht (30a) abgeschickt wird, falls der abgeschätzte Reaktionswert (53) des Finalempfängers (3a) einen vorgegebenen Zielreaktionswert überschreitet und/oder gleich dem vorgegebenen Zielreaktionswert ist.

2. Verfahren nach Anspruch 1,
**dadurch gekennzeichnet, dass**
die Testnachrichten (10a, 10b, 10c, 10d) derart erzeugt werden, das die erste Testnachricht (10a) ein zweites Nachrichtenmerkmal (13a), die zweite Testnachricht (10b) ein zweites Nachrichtenmerkmal (13b), die dritte Testnachricht (10c) ein zweites Nachrichtenmerkmal (13c) und die vierte Testnachricht (10d) ein zweites Nachrichtenmerkmal (13d) aufweisen und jeweils das zweite Nachrichtenmerkmal (13a, 13b) der ersten und der zweiten Testnachricht (10a, 10b) mittels einer Veränderung jeweils eines Wertes (15a, 15b) des zweites Parameters veränderbar ist und jeweils das zweite Nachrichtenmerkmal (13c, 13d) der dritten und vierten Testnachricht (10c, 10d) mittels einer Veränderung jeweils eines Wertes (15c, 15d) des ersten Parameters veränderbar ist und die Werte (14a, 14b, 14c, 14d, 15a, 15b, 15c, 15d) des ersten und zweiten Parameters der Testnachrichten (10a, 10b, 10c, 10d) jeweils Werte in einem engen Bereich eines Extremwertes eines jeweiligen Wertebereiches der Parameter sind.

3. Verfahren nach Anspruch 1 oder 2,
**dadurch gekennzeichnet, dass**
das erste Nachrichtenmerkmal (12a) der ersten Testnachricht (10a) und das erste Nachrichtenmerkmal (12b) der zweiten Testnachricht (10b) ein Inhaltselement und/oder das erste Nachrichtenmerkmal (12c) der dritten Testnachricht (10c) und das erste Nachrichtenmerkmal (12d) der vierten Testnachricht (10d) ein Inhaltselement ist.

4. Verfahren nach Anspruch 3,
**dadurch gekennzeichnet, dass**
das Inhaltselement der ersten Testnachricht (10a) und/oder dritten Testnachricht (10c) zumindest teilweise den gleichen Inhalt aufweist wie das Inhaltselement der zweiten Testnachricht (10b) beziehungsweise der vierten Testnachricht (10d).

5. Verfahren nach Anspruch 3 oder 4,
**dadurch gekennzeichnet, dass**
jeweils das erste Auswahlnachrichtenmerkmal (20a, 20b, 20c) der Umfragenachrichten (21a, 21b, 21c) und das Finalnachrichtenmerkmal (31a) Inhaltselemente sind und zumindest teilweise den gleichen Inhalt aufweisen.

6. Verfahren nach Anspruch 2,
**dadurch gekennzeichnet, dass**
das erste Auswahlnachrichtenmerkmal (20a, 20b, 20c) der Umfragenachrichten (21a, 21b, 21c), das Finalnachrichtenmerkmal (31a) und die ersten und die zweiten Nachrichtenmerkmale (12a, 12b, 12c, 12d, 13a, 13b, 13c, 13d) der Testnachrichten (10a, 10b, 10c, 10d) jeweils Inhaltselemente sind und das Finalnachrichtenmerkmal (31a) Teile desjenigen Nachrichtenmerkmals der Testnachrichten (10a, 10b, 10c, 10d), welches mittels einer Veränderung des Auswahlparameters veränderbar ist, aufweist.

7. Verfahren nach einem der vorhergehenden Ansprüche,
**dadurch gekennzeichnet, dass**
das erste Nachrichtenmerkmal (12a, 12b) der ersten Testnachricht (10a) und der zweiten Testnachricht (10b) ein Zeitwert und/oder das erste Nachrichtenmerkmal (12c, 12d) der dritten Testnachricht (10c) und der vierten Testnachricht (10d), das jeweilige erste Auswahlnachrichtenmerkmal (20a, 20b, 20c) der Umfragenachrichten (21a, 21b, 21c) und das Finalnachrichtenmerkmal (31a) der Finalnachricht (30a) ein Zeitwert ist.

8. Verfahren nach einem der vorhergehenden Ansprüche,
**dadurch gekennzeichnet, dass**
die Testempfänger (11a, 11b, 11c, 11d), die Umfrageempfänger (22a, 22b, 22c) und/oder der Finalempfänger (3a) als jeweils einem Benutzer zugeordnete Benutzergeräte ausgebildet sind und das erste Empfängermerkmal als ein Benutzermerkmal ausgebildet ist.

9. Verfahren nach einem der vorhergehenden Ansprüche,
**dadurch gekennzeichnet, dass**
der Wert (23a) des zum Finalnachrichtenmerkmal (31a) korrespondierenden Auswahlparameters (52) derart an den Wert (29a) des ersten Empfängermerkmals des Finalempfängers (3a) angepasst wird, dass der einzelne abgeschätzte Reaktionswert (53) an einen Zielreaktionswert (64) angepasst ist.

10. Verfahren nach einem der vorhergehenden Ansprüche,
**dadurch gekennzeichnet, dass**
der Wert (32a) des zum Finalnachrichtenmerkmal (31a) korrespondierenden Auswahlparameters an den Wert (29a) des ersten Empfängermerkmals (51) des Finalempfängers (3a) mittels des Approximationsmoduls angepasst wird.

11. Verfahren nach Anspruch 9,
**dadurch gekennzeichnet, dass**
das Approximationsmodul (50) ein neuronales Netz (54) aufweist.

12. Verfahren nach einem der vorhergehenden Ansprüche,
**dadurch gekennzeichnet, dass**
die Finalnachricht (130a) aus einer Menge (90) von Nachrichten (90a, 90b, 90z), welche vorzugsweise von mehreren Informationsquellen stammen, ausgewählt wird, wobei die Nachrichten (90a, 90b, 90z) jeweils zumindest ein Nachrichtenmerkmal (91a, 91b, 91z) aufweisen und die jeweiligen Nachrichtenmerkmale (91a, 91b, 91z) unterschiedliche Werte (92a, 92b, 92z) des Auswahlparameters (52) aufweisen und der Wert (132a) des Auswahlparameters (52) der Finalnachricht (130a) an den Wert (29a) des ersten Empfängermerkmals (51) angepasst wird.

13. Nichtflüchtiges computerlesbares Informationsspeicherungsmedium mit darauf gespeicherten Informationen, die bei Ausführung durch einen Prozessor die Durchführung der Schritte in Anspruch 1 bewirken.

14. Kommunikationsnetzwerk (1) zum Bestimmen einer Relevanz einer Finalnachricht (30a) für einen Finalempfänger (3a) vor einem Absenden der Finalnachricht (30a) umfassend:
einen ersten Testempfänger (11a), einen zweiten Testempfänger (11b), einen dritten Testempfänger (11c) und/oder einen vierten Testempfänger (11d), einen ersten Umfrageempfänger (22a), einen zweiten Umfrageempfänger (22b) und/oder einen dritten Umfrageempfänger (22c), einen Finalempfänger (3a), eine Empfängerdatenbank (6), eine Umfragedatenbank (7);
einen Zentralserver (8), der eine erste Testnachricht (10a), eine zweite Testnachricht (10b), eine dritte Testnachricht (10c) und eine vierte Testnachricht (10d) erzeugt, wobei jede Testnachricht (10a, 10b, 10c, 10d) zumindest ein erstes Nachrichtenmerkmal (12a, 12b, 12c, 12d) aufweist und das erste Nachrichtenmerkmal (12a) der ersten Testnachricht (10a) und das erste Nachrichtenmerkmal (12b) der zweiten Testnachricht (10b) mittels einer Veränderung eines jeweils korrespondierenden Wertes (14a, 14b) eines ersten Parameters und das erste Nachrichtenmerkmal (12c) der dritten Testnachricht (10c) und das erste Nachrichtenmerkmal (12d) der vierten Testnachricht (10d) mittels einer Veränderung eines jeweils korrespondierenden Wertes (14c, 14d) eines zweiten Parameters
veränderbar sind und die jeweiligen korrespondierenden Werte (14a, 14b) des ersten Parameters verschieden sind und die jeweiligen korrespondierenden Werte (14c, 14d) des zweiten Parameters verschieden sind;
einen Sender (2), der die erste Testnachricht (10a), die zweite Testnachricht (10b), die dritte Testnachricht (10c) und die vierte Testnachricht (10d) an den ersten Testempfänger (11a), zweiten Testempfänger (11b), dritten Testempfänger (11c) und/oder den vierten Testempfänger (11d) sendet;
einen Trackingserver (5), der ein erstes Reaktionsverhalten auf die Testnachrichten (10a, 10b, 10c, 10d) erfasst;
ein Bewertungsmodul (121), das das erste Reaktionsverhaltens bewertet und einen Einflusswert des ersten Parameters, welcher den Einfluss des ersten Parameters auf das erste Reaktionsverhalten erfasst, und einen Einflusswert des zweiten Parameters, welcher den Einfluss des zweiten Parameters auf das erste Reaktionsverhalten erfasst, bestimmt;
ein Auswahlmodul (122), das den Einflusswert des ersten Parameters mit dem Einflusswert des zweiten Parameters vergleicht und einen Auswahlparameter (52) bestimmt, wobei der Auswahlparameter (52) derjenige von den beiden Parametern, dem ersten Parameter und dem zweiten Parameter, ist, welcher den größeren Einfluss auf das erste Reaktionsverhalten hat;
wobei der Zentralserver (8) zumindest eine erste Umfragenachricht (21a), eine zweite Umfragenachricht (21b) und bevorzugt eine dritte Umfragenachricht (21c) erzeugt und die Umfragenachrichten (21a, 21b, 21c) jeweils zumindest ein erstes Auswahlnachrichtenmerkmal (20a, 20b, 20c) aufweisen, das jeweilige erste Auswahlnachrichtenmerkmal (20a, 20b, 20c) mittels einer Veränderung eines jeweiligen korrespondierenden Wertes (23a, 23b, 23c) des Auswahlparameters (52) veränderbar ist und der Wert (23a) des Auswahlparameters (52) des ersten Auswahlnachrichtenmerkmals (20a) der ersten Umfragenachricht (21a) von dem Wert (23b) des Auswahlparameters des ersten Auswahlnachrichtenmerkmals (20b) der zweiten Umfragenachricht (21b) verschieden ist;
wobei der Sender (2) die erste Umfragenachricht (21a), die zweite Umfragenachricht (21b) und bevorzugt die dritte Umfragenachricht (21c) an zumindest den ersten Umfrageempfänger (22a), den zweiten Umfrageempfänger (22b) und/oder den dritten Umfrageempfänger (22c) sendet und die Umfrageempfänger (22a, 22b, 22c) anhand von zumindest eines ersten Empfängermerkmals (51) unterscheidbar sind, wobei das erste Empfängermerkmal ein für eine Klassifizierung geeignetes Merkmal,
insbesondere ein Alter, ist;
wobei der Trackingserver (5) ein zweites Reaktionsverhalten auf die Umfragenachrichten (21a, 21b, 21c) erfasst;
wobei das Bewertungsmodul (121) das zweite Reaktionsverhalten bewertet;
wobei der Zentralserver (8) einen jeweiligen Umfragedatensatz (26a, 26b, 26c, 26d) für zumindest zwei Umfrageempfänger (22a, 22b, 22c) erstellt, wobei der jeweilige Umfragedatensatz (26a, 26b, 26c, 26d) einen Wert (28a, 28b, 28c, 28b) des ersten Empfängermerkmals (51) des jeweiligen Umfrageempfängers (22a, 22b, 22c), eine Bewertung (27a, 27b, 27c, 27d) eines entsprechenden zweiten Reaktionsverhaltens des jeweiligen Umfrageempfängers (22a, 22b, 22c) und einen entsprechenden Wert (23a, 23b, 23c) des Auswahlparameters der von dem jeweiligen Umfrageempfänger (22a, 22b, 22c) empfangenen Umfragenachricht (21a, 21b, 21c) aufweist,
wobei der Zentralserver (8) mindestens zwei der Umfragedatensätze (26a, 26b, 26c, 26d) in der Umfragedatenbank (7) auf dem Datenbankserver (9) abspeichert, wobei die Umfragedatenbank (7) mittels der darin gespeicherten Umfragedatensätze (26a, 26b, 26c, 26d) eine Zuordnung der Werte (28a, 28b, 28c, 28b) des ersten Empfängermerkmals (51) zu den Werten (23a, 23b, 23c) des Auswahlparameters (52) und den Bewertungen (27a, 27b, 27c, 27d) des einzelnen zweiten Reaktionsverhaltens bereitstellt;
ein Approximationsmodul (50), das einen funktionalen Zusammenhang zwischen den Werten (28a, 28b, 28c, 28b) des ersten Empfängermerkmals der Umfrageempfänger (22a, 22b, 22c), den Bewertungen (27a, 27b, 27c, 27d) des entsprechenden einzelnen zweiten Reaktionsverhaltens der Umfrageempfänger (22a, 22b, 22c) und den entsprechenden Werten (23a, 23b, 23c) des Auswahlparameters der von den Umfrageempfängern (22a, 22b, 22c) empfangenen Umfragenachrichten (21a, 21b, 21c) approximiert,
wobei der Sender (2) die Finalnachricht (30a) an den Finalempfänger (3a) sendet und der Zentralserver (8) einen Wert (29a) des ersten Empfängermerkmals (51) des Finalempfängers (3a) aus der Empfängerdatenbank (6) ausliest, die Finalnachricht (30a) zumindest ein erstes Finalnachrichtenmerkmal (31a) aufweist, das erste Finalnachrichtenmerkmal (31a) mittels einer Veränderung eines korrespondierenden Wertes (32a) des Auswahlparameters (52) veränderbar ist und der Wert (32a) des Auswahlparameters (52) an den ausgelesenen Wert (29a) des ersten Empfängermerkmals (51) des Finalempfängers (3a) mittels der durch die Umfragedatenbank (7) bereitgestellte Zuordnung angepasst ist, wobei der approximierte funktionale Zusammenhang für ein Anpassen des Wertes (32a) des Auswahlparameters (52) verwendbar ist, und eine Relevanz der Finalnachricht (30a) für den Finalempfänger (3a) vor einem Absenden der Finalnachricht (30a) in Form eines einzelnen abgeschätzten Reaktionswertes (53) ermittelbar ist;
wobei ausgehend von dem Wert (29a) des ersten Empfängermerkmales (51) des Finalempfängers (3a) und einem Wert (32a) des Auswahlparameters (52) mittels des Approximationsmoduls (50) ein Ausgangssignal, welches dem einzelnen abgeschätzten Reaktionswert (53) entspricht, berechenbar ist und die Finalnachricht (30a) abgeschickt wird, falls der abgeschätzte Reaktionswert (53) des Finalempfängers (3a) einen vorgegebenen Zielreaktionswert überschreitet und/oder gleich dem vorgegebenen Zielreaktionswert ist.

15. Sendeinfrastruktur (140) zum Bestimmen einer Relevanz einer Finalnachricht (30a) für einen Finalempfänger (3a) vor einem Absenden der Finalnachricht (30a) in einem Kommunikationsnetzwerk (1) umfassend:
eine Empfängerdatenbank (6), eine Umfragedatenbank (7);
einen Zentralserver (8), der eine erste Testnachricht (10a), eine zweite Testnachricht (10b), eine dritte Testnachricht (10c) und eine vierte Testnachricht (10d) erzeugt, wobei jede Testnachricht (10a, 10b, 10c, 10d) zumindest ein erstes Nachrichtenmerkmal (12a, 12b, 12c, 12d) aufweist und das erste Nachrichtenmerkmal (12a) der ersten Testnachricht (10a) und das erste Nachrichtenmerkmal (12b) der zweiten Testnachricht (10b) mittels einer Veränderung eines jeweils korrespondierenden Wertes (14a, 14b) eines ersten Parameters und das erste Nachrichtenmerkmal (12c) der dritten Testnachricht (10c) und das erste Nachrichtenmerkmal (12d) der vierten Testnachricht (10d) mittels einer Veränderung eines jeweils korrespondierenden Wertes (14c, 14d) eines zweiten Parameters
veränderbar sind und die jeweiligen korrespondierenden Werte (14a, 14b) des ersten Parameters verschieden sind und die jeweiligen korrespondierenden Werte (14c, 14d) des zweiten Parameters verschieden sind;
einen Sender (2), der die erste Testnachricht (10a), die zweite Testnachricht (10b), die dritte Testnachricht (10c) und die vierte Testnachricht (10d) an einen ersten Testempfänger (11a), zweiten Testempfänger (11b), dritten Testempfänger (11c) und/oder einen vierten Testempfänger (11d) sendet;
einen Trackingserver (5), der ein erstes Reaktionsverhalten auf die Testnachrichten (10a, 10b, 10c, 10d) erfasst;
ein Bewertungsmodul (121), das das erste Reaktionsverhaltens bewertet und einen Einflusswert des ersten Parameters, welcher den Einfluss des ersten Parameters auf das erste Reaktionsverhalten erfasst, und einen Einflusswert des zweiten Parameters, welcher den Einfluss des zweiten Parameters auf das erste Reaktionsverhalten erfasst, bestimmt;
ein Auswahlmodul (122), das den Einflusswert des ersten Parameters mit dem Einflusswert des zweiten Parameters vergleicht und einen Auswahlparameter (52) bestimmt, wobei der Auswahlparameter (52) derjenige von den beiden Parametern, dem ersten Parameter und dem zweiten Parameter, ist, welcher den größeren Einfluss auf das erste Reaktionsverhalten hat;
wobei der Zentralserver (8) zumindest eine erste Umfragenachricht (21a), eine zweite Umfragenachricht (21b) und bevorzugt eine dritte Umfragenachricht (21c) erzeugt und die Umfragenachrichten (21a, 21b, 21c) jeweils zumindest ein erstes Auswahlnachrichtenmerkmal (20a, 20b, 20c) aufweisen, das jeweilige erste Auswahlnachrichtenmerkmal (20a, 20b, 20c) mittels einer Veränderung eines jeweiligen korrespondierenden Wertes (23a, 23b, 23c) des Auswahlparameters (52) veränderbar ist und der Wert (23a) des Auswahlparameters (52) des ersten Auswahlnachrichtenmerkmals (20a) der ersten Umfragenachricht
(21a) von dem Wert (23b) des Auswahlparameters des ersten Auswahlnachrichtenmerkmals (20b) der zweiten Umfragenachricht (21b) verschieden ist;
wobei der Sender (2) die erste Umfragenachricht (21a), die zweite Umfragenachricht (21b) und bevorzugt die dritte Umfragenachricht (21c) an zumindest einen ersten Umfrageempfänger (22a), einen zweiten Umfrageempfänger (22b) und/oder einen dritten Umfrageempfänger (22c) sendet und die Umfrageempfänger (22a, 22b, 22c) anhand von zumindest eines ersten Empfängermerkmals (51) unterscheidbar sind, wobei das erste Empfängermerkmal ein für eine Klassifizierung geeignetes Merkmal, insbesondere ein Alter, ist;
wobei der Trackingserver (5) ein zweites Reaktionsverhalten auf die Umfragenachrichten (21a, 21b, 21c) erfasst;
wobei das Bewertungsmodul (121) das zweite Reaktionsverhalten bewertet;
wobei der Zentralserver (8) einen jeweiligen Umfragedatensatz (26a, 26b, 26c, 26d) für zumindest zwei Umfrageempfänger (22a, 22b, 22c) erstellt, wobei der jeweilige Umfragedatensatz (26a, 26b, 26c, 26d) einen Wert (28a, 28b, 28c, 28b) des ersten Empfängermerkmals (51) des jeweiligen Umfrageempfängers (22a, 22b, 22c), eine Bewertung (27a, 27b, 27c, 27d) eines entsprechenden zweiten Reaktionsverhaltens des jeweiligen Umfrageempfängers (22a, 22b, 22c) und einen entsprechenden Wert (23a, 23b, 23c) des Auswahlparameters der von dem jeweiligen Umfrageempfänger (22a, 22b, 22c) empfangenen Umfragenachricht (21a, 21b, 21c) aufweist,
wobei der Zentralserver (8) mindestens zwei der Umfragedatensätze (26a, 26b, 26c, 26d) in der Umfragedatenbank (7) auf dem Datenbankserver (9) abspeichert, wobei die Umfragedatenbank (7) mittels der darin gespeicherten Umfragedatensätze (26a, 26b, 26c, 26d) eine Zuordnung der Werte (28a, 28b, 28c, 28b) des ersten Empfängermerkmals (51) zu den Werten (23a, 23b, 23c) des Auswahlparameters (52) und den Bewertungen (27a, 27b, 27c, 27d) des einzelnen zweiten Reaktionsverhaltens bereitstellt, ein Approximationsmodul (50), das einen funktionalen Zusammenhang zwischen den Werten (28a, 28b, 28c, 28b) des ersten Empfängermerkmals der Umfrageempfänger (22a, 22b, 22c), den Bewertungen (27a, 27b, 27c, 27d) des entsprechenden einzelnen zweiten Reaktionsverhaltens der Umfrageempfänger (22a, 22b, 22c) und den entsprechenden Werten (23a, 23b, 23c) des Auswahlparameters der von den Umfrageempfängern (22a, 22b, 22c) empfangenen Umfragenachrichten (21a, 21b, 21c) approximiert;
wobei der Sender (2) die Finalnachricht (30a) an den Finalempfänger (3a) sendet und der Zentralserver (8) einen Wert (29a) des ersten Empfängermerkmals (51) des Finalempfängers (3a) aus der Empfängerdatenbank (6) ausliest, die Finalnachricht (30a) zumindest ein erstes Finalnachrichtenmerkmal (31a) aufweist, das erste Finalnachrichtenmerkmal (31a) mittels einer Veränderung eines korrespondierenden Wertes (32a) des Auswahlparameters (52) veränderbar ist und der Wert (32a) des Auswahlparameters (52) an den ausgelesenen Wert (29a) des ersten Empfängermerkmals (51) des Finalempfängers (3a) mittels der durch die Umfragedatenbank (7) bereitgestellte Zuordnung angepasst ist, wobei der approximierte funktionale Zusammenhang für ein Anpassen des Wertes (32a) des Auswahlparameters (52) verwendbar ist;
und eine Relevanz der Finalnachricht (30a) für den Finalempfänger (3a) vor einem Absenden der Finalnachricht (30a) in Form eines einzelnen abgeschätzten Reaktionswertes (53) ermittelbar ist;
wobei ausgehend von dem Wert (29a) des ersten Empfängermerkmales (51) des Finalempfängers (3a) und einem Wert (32a) des Auswahlparameters (52) mittels des Approximationsmoduls (50) ein Ausgangssignal, welches dem einzelnen abgeschätzten Reaktionswert (53) entspricht, berechenbar ist und die Finalnachricht (30a) abgeschickt wird, falls der abgeschätzte Reaktionswert (53) des Finalempfängers (3a) einen vorgegebenen Zielreaktionswert überschreitet und/oder gleich dem vorgegebenen Zielreaktionswert ist.

## Claims

1. A method for communication in a communication network (1) with at least one transmitter (2) and at least one final receiver (3a), wherein at least one final message is sent from the transmitter (2) to the final receiver (3a), and a relevance of the final message for the final receiver is determined,
**characterized in that**
the communication network (1) comprises at least one test receiver (11a), a first survey receiver (22a), a second survey receiver (22b), the final receiver (3a), a tracking server (5), a receiver database (6), a survey database (7), an evaluation module (121), a selection module (122), and a central server (8), and a relevance of a final message (30a) for the final receiver (3a) is determined before a transmitting of the final message (30a), comprising the following steps:
- generating a first test message (10a), a second test message (10b), a third test message (10c), and a fourth test message (10d) by means of the central server (8), wherein each test message (10a, 10b, 10c, 10d) comprises at least one first message feature (12a, 12b, 12c, 12d), and the first message feature (12a) of the first test message (10a) and the first message feature (12b) of the second test message (10b) are changeable by means of a change in a respective corresponding value (14a, 14b) of a first parameter, and the first message feature (12c) of the third test message (10c) and the first message feature (12d) of the fourth test message (10d) are changeable by means of a change in a respective corresponding value (14c, 14d) of a second parameter, and the respective corresponding values (14a, 14b) of the first parameter are different and the respective corresponding values (14c, 14d) of the second parameter are different;
- transmitting the first test message (10a), the second test message (10b), the third test message (10c), and the fourth test message (10d) to a first test receiver (11a), a second test receiver (11b), a third test receiver (11c), and/or a fourth test receiver (11d) by means of the transmitter (2);
- detecting a first reaction behavior with respect to the test messages (10a, 10b, 10c, 10d) by means of the tracking server (5);
- evaluating the first reaction behavior by means of the evaluation module (121);
- determining an influence value of the first parameter, which detects an influence of the first parameter on the first reaction behavior with respect to the test messages (10a, 10b, 10c, 10d), and determining an influence value of the second parameter, which detects an influence of the second parameter on the first reaction behavior with respect to the test messages (10a, 10b, 10c, 10d),
- comparing the influence value of the first parameter to the influence value of the second parameter, and determining a selection parameter (52) by means of the selection module (122), wherein the particular one of the two parameters, the first parameter and the second parameter, that has the greater influence on the first reaction behavior is determined as the selection parameter (52);
- generating at least one first survey message (21a), a second survey message (21b), and preferably a third survey message (21c) by means of the central server (8), wherein the survey messages (21a, 21b, 21c) each comprise at least one first selection message feature (20a, 20b, 20c), wherein the respective first selection message feature (20a, 20b, 20c) is changeable by means of a change in a respective corresponding value (23a, 23b, 23c) of the selection parameter (52), and the value (23a) of the selection parameter (52) of the first selection message feature (20a) of the first survey message (21a) is different from the value (23b) of the selection parameter (52) of the first selection message feature (20b) of the second survey message (21b);
- sending the first survey message (21a), the second survey message (21b), and preferably the third survey message (21c) to at least one first survey receiver (22a), a second survey receiver (22b), and/or a third survey receiver (22c) by means of the transmitter (2), wherein the survey receivers (22a, 22b, 22c) are distinguishable by at least one first receiver feature (51), wherein the first receiver feature is a feature, in particular an age, that is suitable for a classification;
- detecting a second reaction behavior with respect to the survey messages (21a, 21b, 21c) by means of the tracking server (5);
- evaluating the second reaction behavior by means of the evaluation module (121);
- creating a respective survey data set (26a, 26b, 26c, 26d) for at least two survey receivers (22a, 22b, 22c), wherein the respective survey data set (26a, 26b, 26c, 26d) comprises a value (28a, 28b, 28c, 28b) of the first receiver feature (51) of the respective survey receiver (22a, 22b, 22c), an evaluation (27a, 27b, 27c, 27d) of a corresponding individual second reaction behavior of the respective survey receiver (22a, 22b, 22c), and a corresponding value (23a, 23b, 23c) of the selection parameter of the survey message (21a, 21b, 21c) received by the respective survey receiver (22a, 22b, 22c);
- storing at least two of the survey data sets (26a, 26b, 26c, 26d) in the survey database (7) on the database server (9), wherein an association of the values (28a, 28b, 28c, 28b) of the first receiver feature (51) with the values (23a, 23b, 23c) of the selection parameter (52) and with the evaluations (27a, 27b, 27c, 27d) of the individual second reaction behavior is provided by means of the survey data sets (26a, 26b, 26c, 26d) stored in the survey database (7);
- wherein the communication network (1) comprises an approximation module (50), wherein a functional relationship between the values (28a, 28b, 28c, 28b) of the first receiver feature of the survey receivers (22a, 22b, 22c), the evaluations (27a, 27b, 27c, 27d) of the corresponding individual second reaction behavior of the survey receivers (22a, 22b, 22c), and the corresponding values (23a, 23b, 23c) of the selection parameter of the survey messages (21a, 21b, 21c) received by the survey receivers (22a, 22b, 22c) is approximated by means of the approximation module (50);
- sending the final message (30a) by means of the transmitter (2), wherein a value (29a) of the first receiver feature (51) of the final receiver (3a) is read out from the receiver database (6), the final message (30a) comprises at least one first final message feature (31a), the first final message feature (31a) is changeable by means of a change in a corresponding value (32a) of the selection parameter (52), the value (32a) of the selection parameter (52) is adapted to the read-out value (29a) of the first receiver feature (51) of the final receiver (3a) by means of the association provided by the survey database, wherein the approximated functional relationship is used for adapting the value (32a) of the selection parameter (52), and a relevance of the final message (30a) for the final receiver (3a) is determined before a sending of the final message (30a) in the form of an individual estimated reaction value (53) of the final receiver (3a), wherein, on the basis of the value (29a) of the first receiver feature (51) of the final receiver (3a) and a value (32a) of the selection parameter (52), an output signal corresponding to the individual estimated reaction value (53) is computed by means of the approximation module (50), and the final message (30a) is sent if the estimated reaction value (53) of the final receiver (3a) exceeds a predefined target reaction value and/or is equal to the predefined target reaction value.

2. The method of claim 1, **characterized in that**
the test messages (10a, 10b, 10c, 10d) are generated in such a manner that the first test message (10a) comprises a second message feature (13a), the second test message (10b) comprises a second message feature (13b), the third test message (10c) comprises a second message feature (13c), and the fourth test message (10d) comprises a second message feature (13d) and the second message feature (13a, 13b) of the first and the second test message (10a, 10b) is each changeable by means of a change respectively in a value (15a, 15b) of the second parameter and the second message feature (13c, 13d) of the third and the fourth test message (10c, 10d) is each changeable by means of a change respectively in a value (15c, 15d) of the first parameter and the values (14a, 14b, 14c, 14d, 15a, 15b, 15c, 15d) of the first and the second parameter of the test messages (10a, 10b, 10c, 10d) are each values in a narrow range of an extreme value of a respective value range of the parameters.

3. The method of claim 1 or 2, **characterized in that**
the first message feature (12a) of the first test message (10a) and the first message feature (12b) of the second test message (10b) is a content element and/or the first message feature (12c) of the third message (10c) and the first message feature (12d) of the fourth test message (10d) is a content element.

4. The method of claim 3, **characterized in that**
the content element of the first test message (10a) and/or third test message (10c) comprises at least partially the similar content as the content element of the second test message (10b) and the fourth test message (10d) respectively.

5. The method of claim 3 or 4, **characterized in that**
the first selection message feature (20a, 20b, 20c) of the survey messages (21a, 21b, 21c) and the final message feature (31a) each are content elements and comprise at least partially the similar content.

6. The method of claim 2, **characterized in that**
the first selection message feature (20a, 20b, 20c) of the survey messages (21a, 21b, 21c), the final message feature (31a) and the first and the second message features (12a, 12b, 12c, 12d, 13a, 13b, 13c, 13d) of the test messages (10a, 10b, 10c, 10d) each are content elements and the final message feature (31a) comprises parts of the particular message feature of the test messages (10a, 10b, 10c, 10d), which is changeable by means of a change in the selection parameter.

7. The method of one of the preceding claims, **characterized in that**
the first message feature (12a, 12b) of the first test message (10a) and the second test message (10b) is a time value and/or the first message feature (12c, 12d) of the third test message (10c) und the fourth test message (10d), the respective first selection message feature (20a, 20b, 20c) of the survey messages (21a**,** 21b, 21c) and the final message feature (31a) of the final message (30a) is a time value.

8. The method of one of the preceding claims, **characterized in that**
The test receivers (11a, 11b, 11c, 11d), the survey receivers (22a, 22b, 22c) and/or the final receiver (3a) are designed as user devices each assigned to a user and the first receiver feature is designed as a user feature.

9. The method of one of the preceding claims, **characterized in that**
the value (23a) of the selection parameter (52) corresponding to the final message feature (31a) is adapted to the value (29a) of the first receiver feature of the final receiver (3a) in such a way, that the individual estimated reaction value (53) is adapted to a target reaction value (64).

10. The method of one of the preceding claims, **characterized in that**
the value (32a) of the selection parameter (52) corresponding to the final message feature (31a) is adapted to the value (29a) of the first receiver feature (51) of the final receiver (3a) by means of the approximation module.

11. The method of one of the preceding claims, **characterized in that**
the approximation module (50) comprises a neuronal network (54).

12. The method of one of the preceding claims, **characterized in that** the final message (130a) is selected from a set (90) of messages (90a, 90b, 90z), that preferably originate from several information sources, wherein the messages (90a, 90b, 90z) each comprise a message feature (91a, 91b, 91z) and the respective message features (91a, 91b, 91z) comprise different values (90a, 90b, 90z) of the selection parameter (52) and the value (132a) of the selection parameter (52) of the final message (130a) is adapted to the value (29a) of the first receiver feature (51).

13. Nonvolatile computer-readable information storage medium with information stored thereon which, when executed by a processor, causes the execution of the steps of claim 1.

14. A communication network (1) for determining a relevance of a final message (30a) for a final receiver (3a) before a sending of the final message (30a) comprising:
a first test receiver (11a), a second test receiver (11b), a third test receiver (11c) and/or
a fourth test receiver (11d), a first survey receiver (22a), a second survey receiver (22b) and/or a third survey receiver (22c), a final receiver (3a), a receiver database (6), a survey database (7);
a central server (8) that generates a first test message (10a), a second test message (10b), a third test message (10c) and a fourth test message (10d), wherein each test message (10a, 10b, 10c, 10d) comprises at least one first message feature (12a, 12b, 12c, 12d), and the first message feature (12a) of the first test message (10a) and the first message feature (12b) of the second test message (10b) are changeable by means of a change in a respective corresponding value (14a, 14b) of a first parameter, and the first message feature (12c) of the third test message (10c) and the first message feature (12d) of the fourth test message (10d) are changeable by means of a change in a respective corresponding value (14c, 14d) of a second parameter, and the respective corresponding values (14a, 14b) of the first parameter are different and the respective corresponding values (14c, 14d) of the second parameter are different;
- a transmitter (2) that sends the first test message (10a), the second test message (10b), the third test message (10c), and the fourth test message (10d) to the first test receiver (11a), the second test receiver (11b), the third test receiver (11c), and/or the fourth test receiver (11d);
- a tracking server (5) that detects a first reaction behavior with respect to the test messages (10a, 10b, 10c, 10d);
- an evaluation module (121) that evaluates the first reaction behavior and determines an influence value of the first parameter, which detects an influence of the first parameter on the first reaction behavior, and an influence value of the second parameter, which detects an influence of the second parameter on the first reaction behavior,
- a selection module (122) that compares the influence value of the first parameter to the influence value of the second parameter and determines a selection parameter (52), wherein the particular one of the two parameters, the first parameter and the second parameter, that has the greater influence on the first reaction behavior is the selection parameter (52);
- wherein the central server (8) generates at least one first survey message (21a), a second survey message (21b) and preferably a third survey message (21c), and the survey messages (21a, 21b, 21c) respectively comprise at least one first selection message feature (20a, 20b, 20c), the respective first selection message feature (20a, 20b, 20c) is changeable by means of a change in a respective corresponding value (23a, 23b, 23c) of the selection parameter (52) and the value (23a) of the selection parameter (52) of the first selection message feature (20a) of the first survey message (21a) is different from the value (23b) of the selection parameter of the first selection message feature (20b) of the second survey message (21b);
- wherein the transmitter (2) sends the first survey message (21a), the second survey message (21b) and preferably the third survey message (21c) at least to the first survey receiver (22a), the second survey receiver (22b), and/or the third survey receiver (22c) and the survey receivers (22a, 22b, 22c) are distinguishable by at least one first receiver feature (51), wherein the first receiver feature is a feature, in particular an age, that is suitable for a classification;
- wherein the tracking server (5) detects a second reaction behavior with respect to the survey messages (21a, 21b, 21c);
- wherein the evaluation module (121) evaluates the second reaction behavior;
- wherein the central server (8) creates a respective survey data set (26a, 26b, 26c, 26d) for at least two survey receivers (22a, 22b, 22c), wherein the respective survey data set (26a, 26b, 26c, 26d) comprises a value (28a, 28b, 28c, 28b) of the first receiver feature (51) of the respective survey receiver (22a, 22b, 22c), an evaluation (27a, 27b, 27c, 27d) of a corresponding second reaction behavior of the respective survey receiver (22a, 22b, 22c) and a corresponding value (23a, 23b, 23c) of the selection parameter of the survey message (21a, 21b, 21c) received by the respective survey receiver (22a, 22b, 22c);
- wherein the central server (8) stores at least two of the survey data sets (26a, 26b, 26c, 26d) in the survey database (7) on the database server (9), wherein the survey database (7) by means of the survey data sets (26a, 26b, 26c, 26d) stored therein provides an association of the values (28a, 28b, 28c, 28b) of the first receiver feature (51) with the values (23a, 23b, 23c) of the selection parameter (52) and with the evaluations (27a, 27b, 27c, 27d) of the individual second reaction behavior;
- an approximation module (50) that approximates a functional relationship between the values (28a, 28b, 28c, 28b) of the first receiver feature of the survey receivers (22a, 22b, 22c), the evaluations (27a, 27b, 27c, 27d) of the corresponding individual second reaction behavior of the survey receivers (22a, 22b, 22c) and the corresponding values (23a, 23b, 23c) of the selection parameter of the survey messages (21a, 21b, 21c) received by the survey receivers (22a, 22b, 22c);
- wherein the transmitter (2) sends the final message (30a) to the final receiver (3a) and the central server (8) reads out a value (29a) of the first receiver feature (51) of the final receiver (3a) from the receiver database (6), the final message (30a) comprises at least one first final message feature (31a), the first final message feature (31a) is changeable by means of a change in a corresponding value (32a) of the selection parameter (52) and the value (32a) of the selection parameter (52) is adapted to the read-out value (29a) of the first receiver feature (51) of the final receiver (3a) by means of the association provided by the survey database (7), wherein the approximated functional relationship is usable for an adaptation of the value (32a) of the selection parameter (52), and a relevance of the final message (30a) for the final receiver (3a) is ascertainable in the form of an individual estimated reaction value (53) before a sending of the final message (30a), wherein on the basis of the value (29a) of the first receiver feature (51) of the final receiver (3a) and a value (32a) of the selection parameter (52) an output signal, which corresponds to the individual estimated reaction value (53), is calculable by means of the approximation module (50) and the final message (30a) is sent if the estimated reaction value (53) of the final receiver (3a) exceeds a predefined target reaction value and/or is equal to the predefined target reaction value.

15. A transmitter infrastructure (140) for determining a relevance of a final message (30a) for a final receiver (3a) before a sending of the final message (30a) in a communication network (1) comprising:
a receiver database (6), a survey database (7);
a central server (8) that generates a first test message (10a), a second test message (10b), a third test message (10c) and a fourth test message (10d), wherein each test message (10a, 10b, 10c, 10d) comprises at least one first message feature (12a, 12b, 12c, 12d), and the first message feature (12a) of the first test message (10a) and the first message feature (12b) of the second test message (10b) are changeable by means of a change in a respective corresponding value (14a, 14b) of a first parameter, and the first message feature (12c) of the third test message (10c) and the first message feature (12d) of the fourth test message (10d) are changeable by means of a change in a respective corresponding value (14c, 14d) of a second parameter, and the respective corresponding values (14a, 14b) of the first parameter are different and the respective corresponding values (14c, 14d) of the second parameter are different;
- a transmitter (2) that sends the first test message (10a), the second test message (10b), the third test message (10c), and the fourth test message (10d) to a first test receiver (11a), a second test receiver (11b), a third test receiver (11c), and/or a fourth test receiver (11d);
- a tracking server (5) that detects a first reaction behavior with respect to the test messages (10a, 10b, 10c, 10d);
- an evaluation module (121) that evaluates the first reaction behavior and determines an influence value of the first parameter, which detects an influence of the first parameter on the first reaction behavior, and an influence value of the second parameter, which detects an influence of the second parameter on the first reaction behavior,
- a selection module (122) that compares the influence value of the first parameter to the influence value of the second parameter, and determines a selection parameter (52), wherein the particular one of the two parameters, the first parameter and the second parameter, that has the greater influence on the first reaction behavior is the selection parameter (52);
- wherein the central server (8) generates at least one first survey message (21a), a second survey message (21b) and preferably a third survey message (21c), and the survey messages (21a, 21b, 21c) respectively comprise at least one first selection message feature (20a, 20b, 20c), the respective first selection message feature (20a, 20b, 20c) is changeable by means of a change in a respective corresponding value (23a, 23b, 23c) of the selection parameter (52) and the value (23a) of the selection parameter (52) of the first selection message feature (20a) of the first survey message (21a) is different from the value (23b) of the selection parameter of the first selection message feature (20b) of the second survey message (21b);
- wherein the transmitter (2) sends the first survey message (21a), the second survey message (21b) and preferably the third survey message (21c) at least to a first survey receiver (22a), a second survey receiver (22b), and/or a third survey receiver (22c) and the survey receivers (22a, 22b, 22c) are distinguishable by at least one first receiver feature (51), wherein the first receiver feature is a feature, in particular an age, that is suitable for a classification;
- wherein the tracking server (5) detects a second reaction behavior with respect to the survey messages (21a, 21b, 21c);
- wherein the evaluation module (121) evaluates the second reaction behavior;
- wherein the central server (8) creates a respective survey data set (26a, 26b, 26c, 26d) for at least two survey receivers (22a, 22b, 22c), wherein the respective survey data set (26a, 26b, 26c, 26d) comprises a value (28a, 28b, 28c, 28b) of the first receiver feature (51) of the respective survey receiver (22a, 22b, 22c), an evaluation (27a, 27b, 27c, 27d) of a corresponding second reaction behavior of the respective survey receiver (22a, 22b, 22c) and a corresponding value (23a, 23b, 23c) of the selection parameter of the survey message (21a, 21b, 21c) received by the respective survey receiver (22a, 22b, 22c);
- wherein the central server (8) stores at least two of the survey data sets (26a, 26b, 26c, 26d) in the survey database (7) on the database server (9), wherein the survey database (7) by means of the survey data sets (26a, 26b, 26c, 26d) stored therein provides an association of the values (28a, 28b, 28c, 28b) of the first receiver feature (51) with the values (23a, 23b, 23c) of the selection parameter (52) and with the evaluations (27a, 27b, 27c, 27d) of the individual second reaction behavior;
- an approximation module (50) that approximates a functional relationship between the values (28a, 28b, 28c, 28b) of the first receiver feature of the survey receivers (22a, 22b, 22c), the evaluations (27a, 27b, 27c, 27d) of the corresponding individual second reaction behavior of the survey receivers (22a, 22b, 22c) and the corresponding values (23a, 23b, 23c) of the selection parameter of the survey messages (21a, 21b, 21c) received by the survey receivers (22a, 22b, 22c);
- wherein the transmitter (2) sends the final message (30a) to the final receiver (3a) and the central server (8) reads out a value (29a) of the first receiver feature (51) of the final receiver (3a) from the receiver database (6), the final message (30a) comprises at least one first final message feature (31a), the first final message feature (31a) is changeable by means of a change in a corresponding value (32a) of the selection parameter (52) and the value (32a) of the selection parameter (52) is adapted to the read-out value (29a) of the first receiver feature (51) of the final receiver (3a) by means of the association provided by the survey database (7), wherein the approximated functional relationship is usable for an adaptation of the value (32a) of the selection parameter (52), and a relevance of the final message (30a) for the final receiver (3a) is ascertainable in the form of an individual estimated reaction value (53) before a sending of the final message (30a), wherein on the basis of the value (29a) of the first receiver feature (51) of the final receiver (3a) and a value (32a) of the selection parameter (52) an output signal, which corresponds to the individual estimated reaction value (53), is calculable by means of the approximation module (50) and the final message (30a) is sent if the estimated reaction value (53) of the final receiver (3a) exceeds a predefined target reaction value and/or is equal to the predefined target reaction value.

## Revendications

1. Méthode de communication dans un réseau de communication (1) avec au moins un émetteur (2) et au moins un récepteur final (3a), dans lequel au moins un message final est envoyé de l'émetteur (2) au récepteur final (3a), et une pertinence du message final pour le récepteur final est déterminée, **caractérisé en ce que**
le réseau de communication (1) présente au moins un récepteur test (11a), un premier récepteur d'enquête (22a), un deuxième récepteur d'enquête (22b), le récepteur final (3a), un serveur de suivi (5), une base de données de récepteurs (6), une base de données d'enquête (7), un module d'évaluation (121), un module de sélection (122) et un serveur central (8), et une pertinence d'un message final (30a) pour le récepteur final (3a) est déterminée avant une transmission du message final (30a), selon les étapes suivantes :
- générer un premier message de test (10a), un deuxième message de test (10b), un troisième message de test (10c) et un quatrième message de test (10d) au moyen du serveur central (8), dans lequel chaque message de test (10a, 10b, 10c, 10d) présente au moins une première caractéristique de message (12a, 12b, 12c, 12d), et la première caractéristique de message (12a) du premier message test (10a) et la première caractéristique de message (12b) du deuxième message de test (10b) sont modifiables au moyen d'un changement d'une valeur correspondante respective (14a, 14b) d'un premier paramètre, et la première caractéristique de message (12c) du troisième message de test (10c) et la première caractéristique de message (12d) du quatrième message de test (10d) sont modifiables au moyen d'une modification d'une valeur correspondante respective (14c, 14d) d'un second paramètre, et les valeurs correspondantes respectives (14a, 14b) du premier paramètre sont différentes et les valeurs correspondantes respectives (14c, 14d) du second paramètre sont différentes;
- transmettre le premier message de test (10a), le deuxième message de test (10b), le troisième message de test (10c) et le quatrième message de test (10d) à un premier récepteur de test (11a), un deuxième récepteur de test (11b), un troisième récepteur de test (11c) et/ou un quatrième récepteur de test (11d) au moyen de l'émetteur (2) ;
- détecter un premier comportement de réaction par rapport aux messages de test (10a, 10b, 10c, 10d) au moyen du serveur de suivi (5) ;
- évaluer le premier comportement de réaction au moyen du module d'évaluation (121) ;
- déterminer une valeur d'influence du premier paramètre, qui détecte une influence du premier paramètre sur le premier comportement de réaction par rapport aux messages de test (10a, 10b, 10c, 10d), et déterminer une valeur d'influence du second paramètre, qui détecte une influence du second paramètre sur le premier comportement de réaction par rapport aux messages de test (10a, 10b, 10c, 10d),
- comparer la valeur d'influence du premier paramètre à la valeur d'influence du second paramètre, et déterminer un paramètre de sélection (52) au moyen du module de sélection (122), dans lequel le paramètre particulier des deux paramètres, le premier paramètre et le second paramètre, qui a la plus grande influence sur le premier comportement de réaction est déterminé comme paramètre de sélection (52) ;
- générer au moins un premier message d'enquête (21a), un deuxième message d'enquête (21b) et de préférence un troisième message d'enquête (21c) au moyen du serveur central (8), les messages d'enquête (21a, 21b, 21c) présentant chacun au moins une première caractéristique de message de sélection (20a, 20b, 20c), la première caractéristique de message de sélection (20a, 20b, 20c) respective est modifiable au moyen d'un changement d'une valeur correspondante respective (23a, 23b, 23c) du paramètre de sélection (52), et la valeur (23a) du paramètre de sélection (52) de la première caractéristique du message de sélection (20a) du premier message d'enquête (21a) est différente de la valeur (23b) du paramètre de sélection (52) de la première caractéristique du message de sélection (20b) du deuxième message d'enquête (21b) ;
- envoyer le premier message d'enquête (21a), le deuxième message d'enquête (21b), et de préférence le troisième message d'enquête (21c) à au moins un premier récepteur d'enquête (22a), un deuxième récepteur d'enquête (22b) et/ou un troisième récepteur d'enquête (22c) au moyen de l'émetteur (2), dans lequel les récepteurs d'enquête (22a, 22b, 22c) sont distinguables par au moins une première caractéristique de récepteur (51), dans lequel la première caractéristique de récepteur est une caractéristique, en particulier un âge, qui convient pour une classification;
- détecter un second comportement de réaction par rapport aux messages d'enquête (21a, 21b, 21c) au moyen du serveur de suivi (5) ;
- évaluer le second comportement de réaction au moyen du module d'évaluation (121);
- créer un ensemble de données d'enquête respectif (26a, 26b, 26c, 26d) pour au moins deux récepteurs d'enquête (22a, 22b, 22c), dans lequel l'ensemble de données d'enquête respectif (26a, 26b, 26c, 26d) présente une valeur (28a, 28b, 28c, 28b) de la première caractéristique de récepteur (51) du récepteur d'enquête respectif (22a, 22b, 22c), une évaluation (27a, 27b, 27c, 27d) d'un second comportement de réaction individuel correspondant du récepteur d'enquête respectif (22a, 22b, 22c), et une valeur correspondante (23a, 23b, 23c) du paramètre de sélection du message d'enquête (21a, 21b, 21c) reçu par le récepteur d'enquête respectif (22a, 22b, 22c) ;
- stocker au moins deux des ensembles de données d'enquête (26a, 26b, 26c, 26d) dans la base de données d'enquête (7) sur le serveur de base de données (9), dans lequel une association des valeurs (28a, 28b, 28c, 28b) de la première caractéristique de récepteur (51) avec les valeurs (23a, 23b, 23c) du paramètre de sélection (52) et avec les évaluations (27a, 27b, 27c, 27d) du second comportement de réaction individuel est fourni au moyen des ensembles de données d'enquête (26a, 26b, 26c, 26d) stockés dans la base de données d'enquête (7) ;
- dans lequel le réseau de communication (1) présente un module d'approximation (50), dans lequel une relation fonctionnelle entre les valeurs (28a, 28b, 28c, 28b) de la première caractéristique des récepteurs d'enquête (22a, 22b, 22c), les évaluations (27a, 27b, 27c) 27d) du second comportement de réaction individuel correspondant des récepteurs d'enquête (22a, 22b, 22c), et les valeurs correspondantes (23a, 23b, 23c) du paramètre de sélection des messages d'enquête (21a, 21b, 21c) reçus par les récepteurs d'enquête (22a, 22b, 22c) est approximée au moyen du module d'approximation (50) ;
- envoyer le message final (30a) au moyen de l'émetteur (2), dans lequel une valeur (29a) de la première caractéristique de récepteur (51) du récepteur final (3a) est lue dans la base de données de réception (6), le message final (30a) présente au moins une première caractéristique de message final (31a), la première caractéristique de message final (31a) est modifiable par une modification d'une valeur correspondante (32a) du paramètre de sélection (52), la valeur (32a) du paramètre de sélection (52) est adaptée à la valeur lue (29a) de la première caractéristique de récepteur (51) du récepteur final (3a) au moyen de l'association fournie par la base de données d'enquête, dans laquelle la relation fonctionnelle approximative est utilisée pour adapter la valeur (32a) du paramètre de sélection (52), et une pertinence du message final (30a) pour le récepteur final (3a) est déterminée avant un envoi du message final (30a) sous la forme d'une valeur de réaction individuelle estimée (53) du récepteur final (3a), dans lequel, sur la base de la valeur (29a) de la première caractéristique de récepteur (51) du récepteur final (3a) et d'une valeur (32a) du paramètre de sélection (52), un signal de sortie correspondant à la valeur de réaction estimée individuelle (53) est calculé au moyen du module d'approximation (50), et le message final (30a) est envoyé si la valeur de réaction estimée (53) du récepteur final (3a) dépasse une valeur de réaction cible prédéfinie et/ou est égale à la valeur de réaction cible prédéfinie.

2. La méthode de la revendication 1, **caractérisée en ce que** les messages de test (10a, 10b, 10c, 10d) sont générés de telle manière que le premier message de test (10a) présente une deuxième caractéristique de message (13a), le deuxième message de test (10b) présente une deuxième caractéristique de message (13b), le troisième message de test (10c) présente une deuxième caractéristique de message (13c), et le quatrième message test (10d) présente une deuxième caractéristique de message (13d) et la deuxième caractéristique de message (13a, 13b) du premier et du deuxième message test (10a, 10b) est respectivement modifiable au moyen d'une modification d'une valeur (15a, 15b) du second paramètre et la caractéristique du second message (13c, 13d) du troisième et du quatrième message de test (10c, 10d) sont chacune modifiables au moyen d'un changement respectivement d'une valeur (15c, 15d) du premier paramètre et les valeurs (14a, 14b, 14c, 14d, 15a, 15b, 15c, 15d) du premier et du second paramètre des messages de test (10a, 10b, 10c, 10d) sont chacune des valeurs dans une marge étroite d'une valeur extrême d'une marge de valeur respective des paramètres.

3. La méthode de la revendication 1 ou 2, **caractérisée en ce que** la première caractéristique de message (12a) du premier message de test (10a) et la première caractéristique de message (12b) du deuxième message de test (10b) est un élément de contenu et/ou la première caractéristique de message (12c) du troisième message (10c) et la première caractéristique de message (12d) du quatrième message de test (10d) est un élément de contenu.

4. La méthode de la revendication 3, **caractérisée en ce que** l'élément de contenu du premier message de test (10a) et/ou du troisième message de test (10c) présente au moins partiellement le similaire contenu de l'élément de contenu du deuxième message de test (10b) et du quatrième message de test (10d) respectivement.

5. La méthode de la demande 3 ou 4, **caractérisée en ce que** la première caractéristique de message de sélection (20a, 20b, 20c) des messages d'enquête (21a, 21b, 21c) et la caractéristique de message final (31a) sont chacune des éléments de contenu et présentent au moins partiellement le similaire contenu.

6. La méthode de la revendication 2, **caractérisée en ce que** la première caractéristique de message de sélection (20a, 20b, 20c) des messages d'enquête (21a, 21b, 21c), la caractéristique de message final (31a) et les première et deuxième caractéristiques de message (12a, 12b, 12c, 12d, 13a, 13b, 13c, 13d) des messages de test (10a, 10b, 10c, 10d) sont chacun des éléments de contenu et la caractéristique de message final (31a) présente des parties de la caractéristique de message particulière des messages tests (10a, 10b, 10c, 10d), qui est modifiable au moyen d'un changement du paramètre de sélection.

7. La méthode de l'une des revendications précédentes, **caractérisée en ce que** la première caractéristique de message (12a, 12b) du premier message de test (10a) et du deuxième message de test (10b) est une valeur de temps et/ou la première caractéristique de message (12c, 12d) du troisième message de test (10c) et du quatrième message de test (10d), la première caractéristique de message de sélection respective (20a, 20b, 20c) des messages d'enquête (21a, 21b, 21c) et la caractéristique de message final (31a) du message final (30a) est une valeur de temps.

8. La méthode de l'une des revendications précédentes, **caractérisée en ce que** les récepteurs de test (11a, 11b, 11c, 11d), les récepteurs d'enquête (22a, 22b, 22c) et/ou le récepteur final (3a) sont conçus comme des dispositifs d'utilisateur attribués chacun à un utilisateur et la première caractéristique du récepteur est conçue comme une caractéristique d'utilisateur.

9. La méthode de l'une des revendications précédentes, **caractérisé en ce que** la valeur (23a) du paramètre de sélection (52) correspondant à la caractéristique du message final (31a) est adaptée à la valeur (29a) de la première caractéristique de récepteur du récepteur final (3a) de telle manière que la valeur de réaction estimée individuelle (53) est adaptée à une valeur de réaction cible (64).

10. La méthode de l'une des revendications précédentes, **caractérisée en ce que** la valeur (32a) du paramètre de sélection (52) correspondant à la caractéristique du message final (31a) est adaptée à la valeur (29a) de la première caractéristique de récepteur (51) du récepteur final (3a) au moyen du module d'approximation.

11. La méthode de l'une des revendications précédentes, **caractérisée en ce que** le module d'approximation (50) présente un réseau neuronal (54).

12. La méthode de l'une des revendications précédentes, **caractérisée en ce que** le message final (130a) est sélectionné parmi un ensemble (90) de messages (90a, 90b, 90z), qui proviennent de préférence de plusieurs sources d'information, dans lequel les messages (90a, 90b, 90z) présentent chacun une caractéristique de message (91a, 91b, 91z) et les caractéristiques de message respectives (91a), 91b, 91z) présentent différentes valeurs (90a, 90b, 90z) du paramètre de sélection (52) et la valeur (132a) du paramètre de sélection (52) du message final (130a) est adaptée à la valeur (29a) de la première caractéristique du récepteur (51).

13. Support d'information non volatil lisible par ordinateur sur lequel sont stockées des informations qui, lorsqu'elles sont exécutées par un processeur, provoquent l'exécution des étapes de la revendication 1.

14. Un réseau de communication (1) pour déterminer la pertinence d'un message final (30a) pour un récepteur final (3a) avant un envoi du message final (30a) présentant : un premier récepteur test (11a), un deuxième récepteur test (11b), un troisième récepteur test (11c) et/ou un quatrième récepteur test (11d), un premier récepteur d'enquête (22a), un deuxième récepteur d'enquête (22b) et/ou un troisième récepteur d'enquête (22c), un récepteur final (3a), une base de données de récepteurs (6), une base de données d'enquête (7) ;
un serveur central (8) qui génère un premier message de test (10a), un deuxième message de test (10b), un troisième message de test (10c) et un quatrième message de test (10d), dans lequel chaque message de test (10a, 10b, 10c, 10d) présente au moins une première caractéristique de message (12a, 12b, 12c, 12d), et la première caractéristique de message (12a) du premier message de test (10a) et la première caractéristique de message (12b) du deuxième message de test (10b) sont modifiables au moyen d'un changement d'une valeur correspondante respective (14a, 14b) d'un premier paramètre, et la première caractéristique de message (12c) du troisième message de test (10c) et la première caractéristique de message (12d) du quatrième message de test (10d) sont modifiables au moyen d'une modification d'une valeur correspondante respective (14c, 14d) d'un deuxième paramètre, et les valeurs correspondantes respectives (14a, 14b) du premier paramètre sont différentes et les valeurs correspondantes respectives (14c, 14d) du second paramètre sont différentes ;
un émetteur (2) qui envoie le premier message de test (10a), le deuxième message de test (10b), le troisième message de test (10c) et le quatrième message de test (10d) au premier récepteur de test (11a), au deuxième récepteur de test (11b), au troisième récepteur de test (11c) et/ou au quatrième récepteur de test (11d);
un serveur de suivi (5) qui détecte un premier comportement de réaction par rapport aux messages de test (10a, 10b, 10c, 10d);
un module d'évaluation (121) qui évalue le premier comportement de réaction et détermine une valeur d'influence du premier paramètre, qui détecte une influence du premier paramètre sur le premier comportement de réaction, et une valeur d'influence du second paramètre, qui détecte une influence du second paramètre sur le premier comportement de réaction ;
un module de sélection (122) qui compare la valeur d'influence du premier paramètre à la valeur d'influence du deuxième paramètre et détermine un paramètre de sélection (52), dans lequel le paramètre particulier des deux paramètres, le premier paramètre et le deuxième paramètre, qui a la plus grande influence sur le premier comportement de réaction est le paramètre de sélection (52) ;
dans lequel le serveur central (8) génère au moins un premier message d'enquête (21a), un deuxième message d'enquête (21b) et de préférence un troisième message d'enquête (21c), et les messages d'enquête (21a, 21b, 21c) présentent respectivement au moins une première caractéristique de message de sélection (20a, 20b, 20c), la première caractéristique de message de sélection respective (20a, 20b, 20c) est modifiable au moyen d'un changement d'une valeur correspondante respective (23a, 23b, 23c) du paramètre de sélection (52) et la valeur (23a) du paramètre de sélection (52) de la première caractéristique du message de sélection (20a) du premier message d'enquête (21a) est différente de la valeur (23b) du paramètre de sélection de la première caractéristique du message de sélection (20b) du deuxième message d'enquête (21b) ;
dans lequel l'émetteur (2) envoie le premier message d'enquête (21a), le deuxième message d'enquête (21b) et de préférence le troisième message d'enquête (21c) au moins au premier récepteur d'enquête (22a), au deuxième récepteur d'enquête (22b) et/ou au troisième récepteur d'enquête (22c) et les récepteurs d'enquête (22a, 22b, 22c) sont distinguables par au moins une caractéristique de premier récepteur (51), dans lequel la caractéristique de premier récepteur est une caractéristique, en particulier un âge, qui convient pour une classification ;
dans lequel le serveur de suivi (5) détecte un second comportement de réaction par rapport aux messages de l'enquête (21a, 21b, 21c) ;
dans lequel le module d'évaluation (121) évalue le second comportement de réaction;
dans lequel le serveur central (8) crée un ensemble de données d'enquête respectif (26a, 26b, 26c, 26d) pour au moins deux récepteurs d'enquête (22a, 22b, 22c), dans lequel l'ensemble de données d'enquête respectif (26a, 26b, 26c, 26d) présente une valeur (28a, 28b, 28c, 28b) de la première caractéristique de récepteur (51) du récepteur d'enquête respectif (22a), 22b, 22c), une évaluation (27a, 27b, 27c, 27d) d'un second comportement de réaction correspondant du récepteur d'enquête respectif (22a, 22b, 22c) et une valeur correspondante (23a, 23b, 23c) du paramètre de sélection du message d'enquête (21a, 21b, 21c) reçu par le récepteur d'enquête respectif (22a, 22b, 22c);
dans lequel le serveur central (8) stocke au moins deux des ensembles de données d'enquête (26a, 26b, 26c, 26d) dans la base de données d'enquête (7) sur le serveur de base de données (9), dans lequel la base de données d'enquête (7) au moyen des ensembles de données d'enquête (26a, 26b, 26c, 26d) qui y est stockée fournit une association des valeurs (28a, 28b, 28c, 28b) de la première caractéristique du récepteur (51) avec les valeurs (23a, 23b, 23c) du paramètre de sélection (52) et avec les évaluations (27a, 27b, 27c, 27d) du second comportement de réaction individuel ;
un module d'approximation (50) qui approxime une relation fonctionnelle entre les valeurs (28a, 28b, 28c, 28b) de la première caractéristique des récepteurs de l'enquête (22a, 22b, 22c), les évaluations (27a, 27b, 27c, 27d) du second comportement de réaction individuel correspondant des récepteurs d'enquête (22a, 22b, 22c) et les valeurs correspondantes (23a, 23b, 23c) du paramètre de sélection des messages d'enquête (21a, 21b, 21c) reçus par les récepteurs d'enquête (22a, 22b, 22c) ;
dans lequel l'émetteur (2) envoie le message final (30a) au récepteur final (3a) et le serveur central (8) lit une valeur (29a) de la première caractéristique de récepteur (51) du récepteur final (3a) dans la base de données de récepteur (6), le message final (30a) présente au moins une première caractéristique de message final (31a), la première caractéristique de message final (31a) est modifiable au moyen d'une modification d'une valeur correspondante (32a) du paramètre de sélection (52) et la valeur (32a) du paramètre de sélection (52) est adaptée à la valeur lue (29a) de la première caractéristique de récepteur (51) du récepteur final (3a) au moyen de l'association fournie par la base de données d'enquête (7), dans laquelle la relation fonctionnelle approximative est utilisable pour une adaptation de la valeur (32a) du paramètre de sélection (52), et une pertinence du message final (30a) pour le récepteur final (3a) est déterminable sous la forme d'une valeur de réaction estimée individuelle (53) avant un envoi du message final (30a), dans lequel, sur la base de la valeur (29a) de la caractéristique du premier comportement (51) du récepteur final (3a) et d'une valeur (32a) du paramètre de sélection (52), un signal de sortie, qui correspond à la valeur de réaction estimée individuelle (53), est calculable au moyen du module d'approximation (50) et le message final (30a) est envoyé si la valeur de réaction estimée (53) du récepteur final (3a) dépasse une valeur de réaction cible prédéfinie et/ou est égale à la valeur de réaction cible prédéfinie.

15. Une infrastructure d'émission (140) pour déterminer la pertinence d'un message final (30a) pour un récepteur final (3a) avant un envoi du message final (30a) dans un réseau de communication (1) présentant :
une base de données de récepteurs (6), une base de données d'enquête (7);
un serveur central (8) qui génère un premier message de test (10a), un deuxième message de test (10b), un troisième message de test (10c) et un quatrième message de test (10d), dans lequel chaque message de test (10a, 10b, 10c**,** 10d) présente au moins une première caractéristique de message (12a, 12b, 12c, 12d), et la première caractéristique de message (12a) du premier message de test (10a) et la première caractéristique de message (12b) du deuxième message de test (10b) sont modifiables au moyen d'un changement d'une valeur correspondante respective (14a, 14b) d'un premier paramètre, et la première caractéristique de message (12c) du troisième message de test (10c) et la première caractéristique de message (12d) du quatrième message de test (10d) sont modifiables au moyen d'une modification d'une valeur correspondante respective (14c, 14d) d'un deuxième paramètre, et les valeurs correspondantes respectives (14a, 14b) du premier paramètre sont différentes et les valeurs correspondantes respectives (14c, 14d) du second paramètre sont différentes ;
un émetteur (2) qui envoie le premier message de test (10a), le deuxième message de test (10b), le troisième message de test (10c) et le quatrième message de test (10d) à un premier récepteur de test (11a), un deuxième récepteur de test (11b), un troisième récepteur de test (11c) et/ou un quatrième récepteur de test (11d) ;
un serveur de suivi (5) qui détecte un premier comportement de réaction par rapport aux messages de test (10a, 10b, 10c, 10d) ;
un module d'évaluation (121) qui évalue le premier comportement de réaction et détermine une valeur d'influence du premier paramètre, qui détecte une influence du premier paramètre sur le premier comportement de réaction, et une valeur d'influence du second paramètre, qui détecte une influence du second paramètre sur le premier comportement de réaction ;
un module de sélection (122) qui compare la valeur d'influence du premier paramètre à la valeur d'influence du deuxième paramètre et détermine un paramètre de sélection (52), dans lequel le paramètre particulier des deux paramètres, le premier paramètre et le deuxième paramètre, qui a la plus grande influence sur le premier comportement de réaction est le paramètre de sélection (52) ;
dans lequel le serveur central (8) génère au moins un premier message d'enquête (21a), un deuxième message d'enquête (21b) et de préférence un troisième message d'enquête (21c), et les messages d'enquête (21a, 21b, 21c) présentent respectivement au moins une première caractéristique de message de sélection (20a, 20b, 20c), la première caractéristique de message de sélection respective (20a, 20b, 20c) est modifiable au moyen d'un changement d'une valeur correspondante respective (23a, 23b, 23c) du paramètre de sélection (52) et la valeur (23a) du paramètre de sélection (52) de la première caractéristique du message de sélection (20a) du premier message d'enquête (21a) est différente de la valeur (23b) du paramètre de sélection de la première caractéristique du message de sélection (20b) du deuxième message d'enquête (21b) ;
dans lequel l'émetteur (2) envoie le premier message d'enquête (21a), le deuxième message d'enquête (21b) et de préférence le troisième message d'enquête (21c) au moins à un premier récepteur d'enquête (22a), un deuxième récepteur d'enquête (22b) et/ou un troisième récepteur d'enquête (22c) et les récepteurs d'enquête (22a, 22b, 22c) sont distinguables par au moins une caractéristique de premier récepteur (51), dans lequel la caractéristique de premier récepteur est une caractéristique, en particulier un âge, qui convient pour une classification ;
dans lequel le serveur de suivi (5) détecte un second comportement de réaction par rapport aux messages de l'enquête (21a, 21b, 21c) ;
dans lequel le module d'évaluation (121) évalue le second comportement de réaction;
dans lequel le serveur central (8) crée un ensemble de données d'enquête respectif (26a, 26b, 26c, 26d) pour au moins deux récepteurs d'enquête (22a, 22b, 22c), dans lequel l'ensemble de données d'enquête respectif (26a, 26b, 26c, 26d) présente une valeur (28a, 28b, 28c, 28b) de la première caractéristique de récepteur (51) du récepteur d'enquête respectif (22a), 22b, 22c), une évaluation (27a, 27b, 27c, 27d) d'un second comportement de réaction correspondant du récepteur d'enquête respectif (22a, 22b, 22c) et une valeur correspondante (23a, 23b, 23c) du paramètre de sélection du message d'enquête (21a, 21b, 21c) reçu par le récepteur d'enquête respectif (22a, 22b, 22c);
dans lequel le serveur central (8) stocke au moins deux des ensembles de données d'enquête (26a, 26b, 26c, 26d) dans la base de données d'enquête (7) sur le serveur de base de données (9), dans lequel la base de données d'enquête (7) au moyen des ensembles de données d'enquête (26a, 26b, 26c, 26d) qui y est stockée fournit une association des valeurs (28a, 28b, 28c, 28b) de la première caractéristique du récepteur (51) avec les valeurs (23a, 23b, 23c) du paramètre de sélection (52) et avec les évaluations (27a, 27b, 27c, 27d) du second comportement de réaction individuel ;
un module d'approximation (50) qui approxime une relation fonctionnelle entre les valeurs (28a, 28b, 28c, 28b) de la première caractéristique des récepteurs de l'enquête (22a, 22b, 22c), les évaluations (27a, 27b, 27c, 27d) du second comportement de réaction individuel correspondant des récepteurs d'enquête (22a, 22b, 22c) et les valeurs correspondantes (23a, 23b, 23c) du paramètre de sélection des messages d'enquête (21a, 21b, 21c) reçus par les récepteurs d'enquête (22a, 22b, 22c) ;
dans lequel l'émetteur (2) envoie le message final (30a) au récepteur final (3a) et le serveur central (8) lit une valeur (29a) de la première caractéristique de récepteur (51) du récepteur final (3a) dans la base de données de récepteur (6), le message final (30a) présente au moins une première caractéristique de message final (31a), la première caractéristique de message final (31a) est modifiable au moyen d'une modification d'une valeur correspondante (32a) du paramètre de sélection (52) et la valeur (32a) du paramètre de sélection (52) est adaptée à la valeur lue (29a) de la première caractéristique de récepteur (51) du récepteur final (3a) au moyen de l'association fournie par la base de données d'enquête (7), dans laquelle la relation fonctionnelle approximative est utilisable pour une adaptation de la valeur (32a) du paramètre de sélection (52), et une pertinence du message final (30a) pour le récepteur final (3a) est déterminable sous la forme d'une valeur de réaction estimée individuelle (53) avant un envoi du message final (30a), dans lequel, sur la base de la valeur (29a) de la caractéristique du premier comportement (51) du récepteur final (3a) et d'une valeur (32a) du paramètre de sélection (52), un signal de sortie, qui correspond à la valeur de réaction estimée individuelle (53), est calculable au moyen du module d'approximation (50) et le message final (30a) est envoyé si la valeur de réaction estimée (53) du récepteur final (3a) dépasse une valeur de réaction cible prédéfinie et/ou est égale à la valeur de réaction cible prédéfinie.
